(19) Europäisches Patentamt
European Patent Office
Office européen des brevets

(11) **EP 1 811 681 A1**

(12) **EUROPEAN PATENT APPLICATION**
published in accordance with Art. 158(3) EPC

(43) Date of publication:
**25.07.2007 Bulletin 2007/30**

(51) Int Cl.:
*H04B 1/707* (2006.01)    *H04J 11/00* (2006.01)
*H04J 15/00* (2006.01)

(21) Application number: **05799291.9**

(22) Date of filing: **20.10.2005**

(86) International application number:
**PCT/JP2005/019737**

(87) International publication number:
**WO 2006/043717 (27.04.2006 Gazette 2006/17)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.10.2004 JP 2004336656**

(71) Applicant: **Suehiro, Naoki**
**Tsukuba-shi,**
**Ibaraki 305-0031 (JP)**

(72) Inventors:
• **KUROYANAGI, Noriyoshi**
**Higashiyamato-shi, Tokyo 207-0022 (JP)**
• **OTAKE, Kohei**
**Suginami-ku, Tokyo 166-0016 (JP)**
• **MATSUFUJI, Shinya**
**Ube-shi, Yamaguchi 755-0035 (JP)**
• **TOMITA, Mitsuhiro**
**Machida-shi, Tokyo 195-0061 (JP)**

(74) Representative: **GROSSE BOCKHORNI**
**SCHUMACHER**
**Patent- und Rechtsanwälte**
**Elsenheimerstrasse 49**
**80687 München (DE)**

(54) **DATA BLOCK SPREAD TYPE SPECTRUM SPREAD COMMUNICATION METHOD**

(57) A data-block spread spectrum communications system which produces a data-block consisting of plurality M bits of transmit-data in a CDMA communications system, transmits spread symbols each of which is made by modulating an orthogonal sine wave with a repeated sequence of said data-block, and de-spreads a received input using said orthogonal sine wave to completely separate and distinguish respective multi-user multi-rate components.

FIG.2

**Description**

**TECHNICAL FIELD**

The present invention relates to code division multiple access communications systems (CDMA) using spread-spectrum modulation which can reduce white noise disturbance admixed in a transmission process and interference generated in a multi-user signal separation process, can enhance further the frequency-utilization-efficiency, and can reduce a power-bandwidth-product. In this case, the modulation/demodulation technology for transceivers of mobile communications systems where the spread-spectrum modulation is applied to transmit-data BPSK signals is taken as an example to explain user-separating techniques for a multi-user receiver.

**BACKGROUND ART**

Spread-spectrum communications is a system using spreading modulation technology where spreading-sequences are modulated by transmit-data to produce transmit-symbols. Due to this spreading modulation, a data-sequence spectrum having a relatively narrow bandwidth is spread to a wide frequency band and then this spread signal is to be transmitted. In a region (cell or sector) where a base-station (BS) provides communications services, there are a plurality of user-stations. Such a communications system is excellent in that a low transmit-power per unit frequency is consumed, disturbance to other communications can be kept at a relatively low level, and the system has inherently strong resistance to (*AWGN*) mixed in a transmission process and inter-user-station interference-noise incoming from mobile stations other than a desired station,. However, since communications of a large number of stations share the same time-slot and the same frequency band, there is a problem in which an increase in the number of users to be accommodated per unit band is difficult due to the inter-station-interference-noise. That is to say, disturbance caused by such noise decreases frequency-utilization-efficiency and increases required transmit-power.

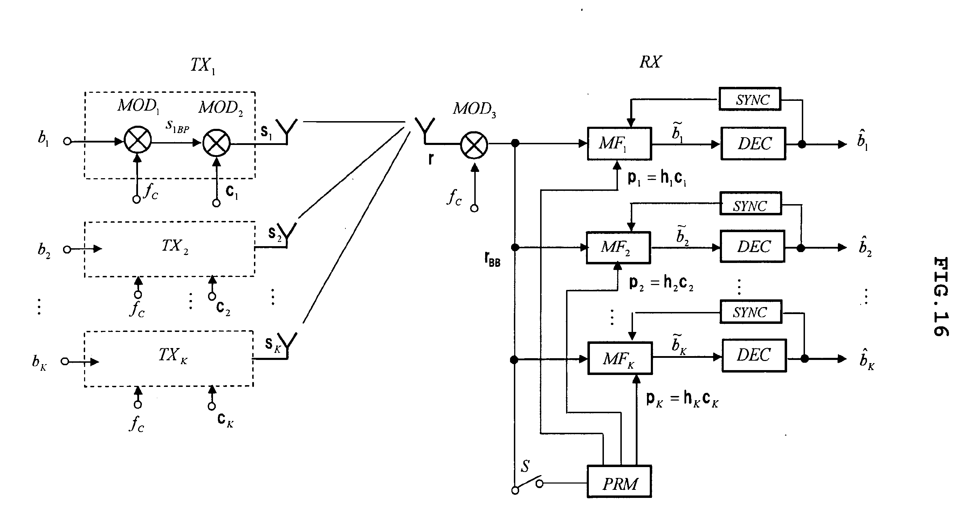

Figure 16 is a block diagram illustrating the general composition of a mobile communications system which performs direct-sequence spread-spectrum (DS-SS) communications via a radio communications channel. Here, a transmitter $TK_k$ of the $k$-th user $u_k$ in a cell modulates binary transmit-data $b_k$ to obtain a Binary Phase Shift Keying (PBSK) symbol $S_{KBP}$, and then by modulating the spreading-sequence $\mathbf{c}_k$ of the $k$-th user by $S_{KBP}$ to produce a spread spectrum signal $s_k^0$. A radio-band signal $S_k$ is produced by modulating a carrier wave $f_c$ by $s_k^0$. Thereafter, $s_k$ is transmitted through a radio communications channel. Generally, pseudo-noise (*PN*) sequences, each is different from one another, are used as spreading sequences, the $k$-th one is denoted by $c_k$, so that a receiver may discriminate addresses of the respective users.

A receiver $RX$ receives, through an antenna, a multiplexed received symbol $r$ which includes, as the components, spread-spectrum-modulated sequences received from all the users, and demodulates $r$ by a local carrier-wave $f_c$ to obtain a base-band-symbol $r_{RR}$.

Receiver $RX$ applies base-band-symbol $r_{BB}$ to a matched filter $MF_k$ matched to a pilot response $\boldsymbol{P}_k$ for producing a soft-output $\tilde{b}_k$. (Switch S illustrated is used so that *PRM* may receive the pilot signal in time division manner.) Soft-output $\tilde{b}_k$ is applied to a hard decision circuit *DEC* so as to be compared with a threshold value, thereby received binary data $\tilde{b}_k$ is detected. (This is called "correlative detection").

Detected data $\hat{b}_k$ is applied to a synchronizing circuit *SYNC* which controls a generating timing of the pilot response so that the component of transmitted symbol $\mathbf{s}_k$ contained in multiplexed received symbol $r$ may be synchronized with the phase of $\boldsymbol{p}_k$. In *TX* and *RX* in Fig.16, the arrangement of sequential order of multiplying functions of carrier-wave $f_c$ ($\hat{f}_c$) and spreading sequence $\mathbf{c}_k$ are often exchanged each other.

The above-described receiver is composed of different multiple matched filters arranged in parallel to detect respective user specific symbol components. In this system, due to a cross-correlation value between the $k$-th sequence $\mathbf{c}_k$ allocated to a user and the $k'$-th (different) sequence $\mathbf{c}_k(k \neq k')$ allocated to another user, a matched filter soft-output $\tilde{b}_k$ contains a large interfering noise incoming from the other users. A pilot-response $\boldsymbol{p}_k$ influenced by a multi-path channel gain between a transmitter and a receiver is an element generating inter-user-interference stated above, and an inter-user cross-correlation between a pair of such pilot responses takes a larger value than that between the corresponding spreading-sequences themselves. Furthermore, the multi-path waves due to adjacent symbols which a desired user and the other users have transmitted generate an inter-symbol interference.

AS a result, it is impossible to increase a user population $K$ compared to the sequence length (processing gain) $L$. For this reason, it is impossible to increase the frequency utilization efficiency. In order to suppress disturbance due to the above-mentioned interfering noise, technology on multi-user receivers for performing user signal separation and inter-symbol interference separation by utilizing a system of de-correlating sequences have been studied. However, sufficient noise suppression effect can not be achieved.

Here, let's explain 7 preceding techniques in a close relation to this invention.

(P-1) Mamoru Sawahashi, Yoshinori Miki, Hidehiro Andoh, and Kenichi Higuchi: "Pilot Symbol-Assisted Coherent Multistage Interference Canceller Using Recursive Channel Estimation for DS-CDMA Mobile Radio" IEICE Trans. Commun., Vol. E79-B, No.9, pp. 1262-1270, (1996-09.)

(P-2) Mitsuhiro Tomita, Noriyoshi Kuroyanagi, Satoru Ozawa, Naoki Suehiro: "Error rate performance improvement for a de-correlating CDMA receiver by introducing additional dummy pilot response", PIMRC'02, Lisbon (2002-09)

(P-3) Hiroki Inokura, Mitsuhiro Tomita, Kohei Otake, Noriyoshi Kuroyanagi, Satoru Ozawa, and Naoki Suehiro: "A CDMA-MIMO System with Multiple-Dimension-De-correlating-Detectors", VTC2003-Fall, ORLANDO (2003-10)

(P-4) Mitsuhiro Tomita, Noriyoshi Kuroyanagi, Naoki Seuhiro, Shinya Matsufuji, "Anti-heavy-interference performance of a lone pilot assisted CDMA system", SCI'2000, Orland, Florida U.S.A. (2000-07)

(P-5) Shengli Zhou, Georgios B. Giannakis, and Christophe Le Martet:"Chip-Interleaved Block-Spread Code Division Multiple Access" IEEE Transaction on Communications, Vol. 50, No.2, pp.235-248 February 2002

(P-6) Geert Leus and Marc Moonen,: "MUI-Free Receiver for a Synchronous DS-CDMA System Based on Block Spreading in the Presence of Frequency-Selective Fading", IEEE Transaction on Signal Processing, Vo1.48, No. 11, November 2000

(P-7) Yutaro Minami, Ken'ichi Asano, Kohei Otake and Noriyoshi Kuroyanagi "FIBS/CDMA-Frequency Interleaved Multiplexing Block-Spread Code Division Multiple Access Systems" IEICE Trans.on Fundamentals Vo1.J87-A No. 7 pp.1005-1016 2004-07

System (P-1) intends to upgrade the function of the $k$-th matched filter $MF_k$

(P-1) Mamoru Sawahashi, Yoshinori Miki, Hidehiro Andoh, and Kenichi Higuchi: "Pilot Symbol-Assisted Coherent Multistage Interference Canceller Using Recursive Channel Estimation for DS-CDMA Mobile Radio" IEICE Trans. Commun., Vol. E79-B, No.9, pp.1262-1270, (1996-09.)

(P-2) Mitsuhiro Tomita, Noriyoshi Kuroyanagi, Satoru Ozawa, Naoki Suehiro: "Error rate performance improvement for a de-correlating CDMA receiver by introducing additional dummy pilot response", PIMRC'02, Lisbon (2002-09)

(P-3) Hiroki Inokura, Mitsuhiro Tomita, Kohei Otake, Noriyoshi Kuroyanagi, Satoru Ozawa, and Naoki Suehiro: "A CDMA-MIMO System with Multiple-Dimension-De-correlating-Detectors", VTC2003-Fall, ORLANDO (2003-10)

(P-4) Mitsuhiro Tomita, Noriyoshi Kuroyanagi, Naoki Seuhiro, Shinya Matsufuji, "Anti-heavy-interference performance of a lone pilot assisted CDMA system", SCI'2000, Orland, Florida U.S.A. (2000-07)

(P-5) Shengli Zhou, Georgios B. Giannakis, and Christophe Le Martet:"Chip-Interleaved Block-Spread Code Division Multiple Access" IEEE Transaction on Communications, Vol. 50, No.2, pp.235-248 February 2002

(P-6) Geert Leus and Marc Moonen,: "MUI-Free Receiver for a Synchronous DS-CDMA System Based on Block Spreading in the Presence of Frequency-Selective Fading", IEEE Transaction on Signal Processing, Vol.48, No. 11, November 2000

(P-7) Yutaro Minami, Ken'ichi Asano, Kohei Otake and Noriyoshi Kuroyanagi "FIBS/CDMA-Frequency Interleaved Multiplexing Block-Spread Code Division Multiple Access Systems" IEICE Trans.on Fundamentals Vol.J87-A No. 7 pp. 1005-1016 2004-07

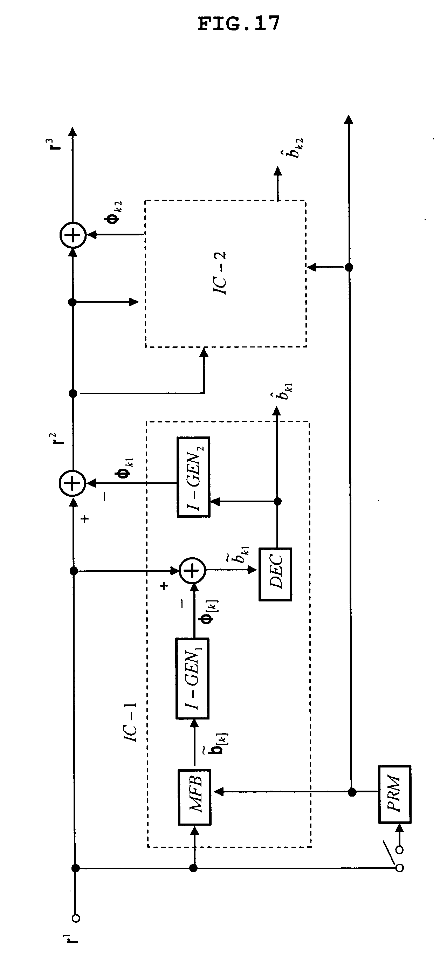

System (P-1) intends to upgrade the function of the $k$-$th$ matched filter $MF_k$ to detect a data of the $k$-th user $u_k$ in the system explained with Fig.16, and uses a receiver equipped with an interference canceller shown in Fig.17. At an interference canceller $IC$-1 (the first stage), a matched filter bank $MFB$ generates estimated transmit-data (soft-outputs) $\tilde{b}_{[k]}$ of all the users except that of the ($k$1)-th user by using the first stage received input $r^1$ and a pilot-response supplied from a pilot response memory $PRM$. By using soft-outputs $\tilde{b}_{[k]}$, the first interference generator $I$-$GEN_1$ generates a replica (pseudo input) $\Phi_{[k]}$.

By subtracting $\Phi_{[k]}$ from input $r^1$, interference canceller $IC$-1 generates a soft-output $\tilde{b}_{k1}$. By making soft-output $\tilde{b}_{k1}$ on the hard decision, is obtained a detected output $\hat{b}_{k1}$ with which a corresponding replica $\Phi_{k1}$ is generated with the second interference generator $I$-$GEN_2$. To a canceller (called the second stage) $IC$-2, is applied an input $r^2$ which is made by subtracting replica $\Phi_{k1}$ from received input $r^1$ Canceller $IC$-2 repeats to apply the same operation to input $r^2$ as that $IC$-1 has done.

In this method, due to existence of large cross-correlations between pilot-responses of respective users, large interference components resultantly remain in the soft-outputs. For this reason, an error rate can neither sufficiently reduce, nor the user population to spreading factor ratio ($K/L$) can sufficiently increase.

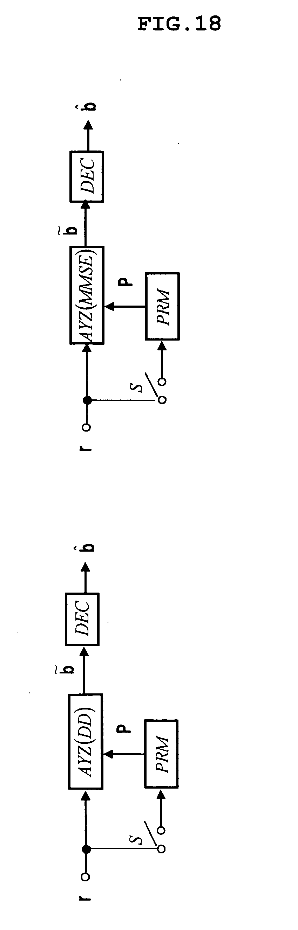

The functional block diagram of a related multi-user receiver corresponding to system (P-2) is shown in Fig. 18(a). Each user's transmitter transmits pilot symbols by inserting them in a data symbol frame, for example in time division manner. A receiver receives the pilot symbol of each user $u_k$. And the receiver always prepares the highly precise pilot responses $\mathbf{p}_k$ (convolution product of spreading sequence and channel gain characteristic) between respective of all the users and the receiver, and stores them in a memory *PRM.*

In broadband wireless transmission, delayed waves which have arrived via a large number of multi-paths generally are received. Received signal components appear outside of a transmit-symbol period $T_S$ due to delayed waves. They are inter-symbol interference *ISI* which gives disturbance to the succeeding symbols of desired user and the other users. In order to avoid this disturbance, That is to say, a guard added sequence is produced by appending a guard sequence to a core-sequence, and then an extended symbol is made by multiplying the guard added sequence by transmit-data as a transmit-symbol.

A receiver extracts a received core-symbol **r** illustrated which is an only components received on the core-sequence period. Foresaid interference *ISI* can be avoided for both down-link transmission of synchronous reception, and up-link transmission of quos-synchronous reception controlled so that all the user's signals may arrive almost simultaneously, if the guard sequence of which length is longer than the maximum delay time $\tau_{DM}$ is used.

Under these conditions, a received core-symbol **r** is given by the following equation,

$$\mathbf{r} = \sum_{k=0}^{K} b_k \mathbf{p}_k + \mathbf{x} \qquad\qquad (\text{E-1})$$

where $b_k$ is a transmit-data of $u_k$, and **x** is white noise (*AWGN*) included in received symbol **r.** By using a pilot-response-matrix **P** consisting of pilot-responses $\boldsymbol{p}_k$ of all the users, Eq.(E-1) is solved by an analyzer *AYZ* (*DD*, de-correlating detector) in Fig.18(a) to obtain a soft-output $\tilde{b}_k = b_k + \Delta b_k$ corresponding to the transmit-data, where $\Delta b_k$ is an error contained in the soft output corresponding to *AWGN.* This system has an advantage such that the influence of interfering waves can be almost removed.

However, it becomes impossible to generate a guard added symbol, in a case of $T_s < \tau_{DM}$ for the maximum delay time $\tau_{DM}$ due to the reduction of a transmit-symbol period $T_s$, when the data transmission speed increases using system (P-2). Hence, there is a problem such that an increase of the transmission rate causes spectral efficiency reduction and an increase in the transmit-power even for a condition of $T_S > \tau_{DM}$.

System (P-3) is of using an *MMSE-D* (Minimum Mean Square Error Detector) shown in Fig.18(b). This detector uses a similar method to that of above-mentioned method DD, such as to produce a system of de-correlating equations, to obtain a soft output of the transmitted data by an analyzing circuit *AYZ*(*MMSE*), and to detect the soft-output. System *MMSE - D* is to add an additive term to matrix P to enhance the regularity of matrix P, thereby suppressing *AWGN* multiplication effect occurred in the analyzing process. This system brings an improvement effect to the analysis such as to minimize the sum of errors due to the interference noise and the *AWGN.* However, it is difficult to increase the data-rate similarly to system (P-2).

In addition, system (P-3) contains (technology) a multi-user receiving function of user signal separating function by an *MMSE* system and multi-input and multi-output (MIMO) system using a reception output obtained from multiple receive

antennas. By using multiple transmit- and multiple receive-antennas, this system can acquire an enhanced space and time diversity effect.

That is to say, a concatenated received vector with $N_R L$ chips is produced by using received core-symbols, each having $L$ chips, received from $N_R$ piece of the receive-antennas.

On the other hand, a concatenated pilot response is beforehand produced using pilot responses which have received via the respective antennas from each of the users. The concatenated received vector stated above is analyzed by a pilot response matrix made of the concatenated pilot responses, to perform user signal separation and data-detection. The larger the numbers of receive-antennas are used, the larger the user population can be accommodated.

However, system (P-3) has the previously mentioned problem caused by the guard sequences, similarly to system (P-2).

In system (P-4), a spreading sequence with $L$ chips is assigned to each user. Each user transmitter produces a repeated sequence made by repeating the assigned spreading sequence $N$ times and makes ($M + 1$) pieces of base-band-symbols which are produced by modulating this repeated sequence by respective of $M$ bit transmit-data and 1 pilot information. Each user produces modulated outputs by modulating ($M + 1$) pieces of orthogonal carrier waves, prepared by the system, by respective of these base-band-symbols, producing a (multiplexed) transmit-symbol by concurrently summing the modulated outputs and transmitting it.(This method appears a kind of data-block transmission).

If each user uses a carrier wave out of different orthogonal frequencies, respective of $M$ pieces of symbol components can be separated (separation of intra-user components), because each of above stated base-band-symbols consisting of the repeated components has a comb-form-spectrum. Each of the separated component obtained in this way, consists of a component made by multiplexing $K$ pieces of the data and the pilot symbols which $K$ users have transmitted using an identical orthogonal carrier wave.

If applying demodulation processing of separating intra-user-components to a multiplexed received symbol made by multiplexing $K$ pieces of symbols which $K$ $(K \leq L)$ users have transmitted using an identical orthogonal carrier wave, a demodulated multiplexed core-symbol is obtained. When applying the technique of de correlation circuit of system (P-2) to this separated symbol, the inter-user separation can be achieved. Since each user's pilot symbol is transmitted using the identical orthogonal carrier wave in time division manner in this case, it results in comparatively small overhead for the pilot transmission.

However, system (P-4) can not increase the spectral efficiency in the high data-rate transmission, because each symbol contains the guard sequence. And, the peak transmit-power of $(M+1)^2$ times as large as that of a single symbol transmission system is required, because the each user transmitter transmits a symbol made by adding $(M+1)$ pieces of the symbol components. Therefore, in system (P-4), there is a problem concerning an increase in power and spectral efficiency.

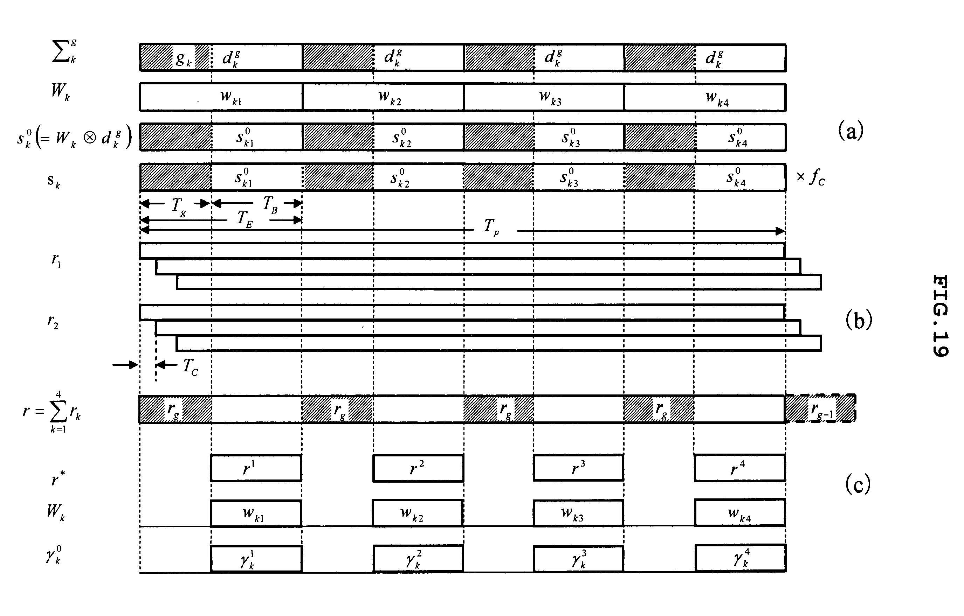

System (P-5) is a system performing user signal separation by allocating Walsh functions $W_k = (W_{k1}, W_{k2},...W_{kn},...W_{kK})$ $(k,n = 1,2,...K)$ (respective rows of an Hadamard matrix with size of $K \times K$) with length $K$ chips to $K$ users as the spreading sequences, and utilizing 0-shift orthogonality between $W_k$ and $W_{k'}(k' \neq k)$. User $u_k$ prepares a transmit-data of $M$ bits as a binary sequence $d_k$ (period $T_B = MT_C$, $T_C$ : chip period) with $M$ chips, as shown in Fig.19(a), and produces a guard added data-block $d_k^g$ (period $T_E$) by appending a guard sequence $g_k$ (period $T_g = L_gT_C$) which is a copy of the rear part of $d_k$ and has $Lg$ chips in length, to data-block $d_k$.

A base-band transmit-signal is obtained by the following equations, when obtaining a convolution product of the $k$-th spreading sequence and guard added data-block $d_k^g$ (the figure is a case of $K = 4$),

$$s_k^0 = W_k \otimes d_k^g \qquad\qquad (\mathrm{E}-2)$$

where $\otimes$ shows Kronecker product, taking a convolution product ($s_{kn}^0 = w_{kn}d_k^g$, $n$: ordinal block number). A transmit-symbol $s_k$ is produced by modulating a common carrier wave $f_c$ by signal $s_k^0$, and this symbol is transmitted. A base station receiver produces a demodulated symbol $r$ by modulating a multiplexed received symbol by local carrier wave $f_c$, as shown in Fig.19(b). In the figure $r_1$ and $r_2$ which users $u_1$ and $u_2$ have transmitted, out of the components of $r$, are shown in a case where each component consists of 3 waves. A multiplexed demodulated core-symbol $r^{*0}(r^1,r^2,\cdots r^K)$ is extracted by removing hatched part $r_g$ from a demodulated symbol $r$. A data-block soft output is obtained by the following equations, when multiplying symbol $r^{*0}$ by spreading sequence $W_k$.

$$\gamma_k = \frac{1}{K}\sum_{n=1}^{K} r^* w_{kn} \qquad\qquad (\mathrm{E}-3)$$

The above equations indicate a mean value counted by averaging all of $\gamma_k^n$ with respect to $n$, as illustrated. There is no inter-data-block interference, because the guard sequence is appended. Therefore, perfect user signal separation is achieved by the orthogonality of sequences in $W_k$. Since inter-bit interference is contained in a soft output vector $\gamma_k$ with $M$ chips, each of the transmit-data can be detected by carrying out inter-bit interference separation with system (P-2) and (P-3) using channel characteristic between a base station and each user.

However, the spectral efficiency considerably decreases, because guard sequence $g_k$ must be appended to every data-block $d_k$ in system (P-5), therefore an overhead factor $\xi = L_g/M$ increases as the data rate increases. In this case, when $M$ is chosen to an abnormally large value in order to make $\xi$ small, user signal separation with Eq.(E-3) tends to be difficult, because the channel characteristic changes during symbol period $T_P$ by the Doppler shift.

And, when transmitting a scrambled transmit-symbol made by multiplying each transmit-symbol by a scrambling sequence in order to avoid the inter-cell interference, the orthogonality of $W_k$ considerably degrades according to the slight synchronous deviation among the user specific received signal components which occurs in the up-link transmission. Therefore, the user signal separation can not be achieved.

In addition, there is a problem such that providing multi-rate symbol transmission services with different data rates to all the users become difficult.

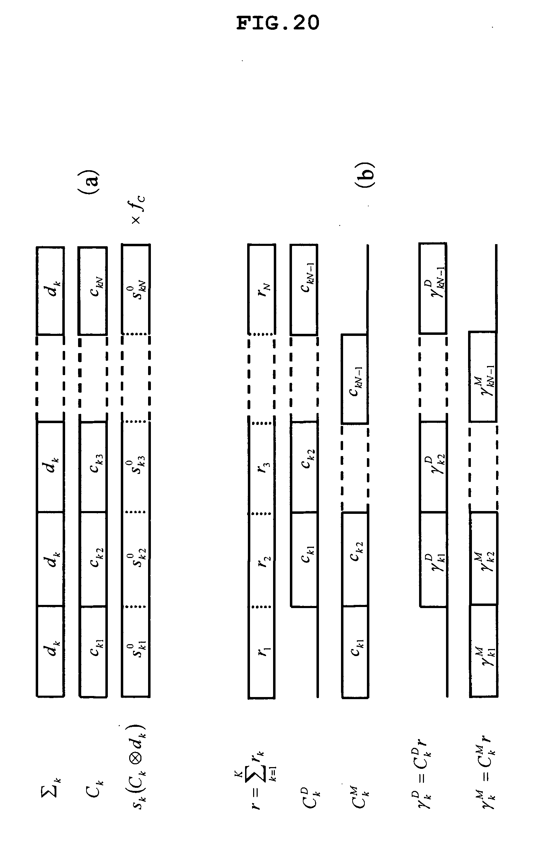

System (P-6) is a system where user $u_k$ modulates a shift orthogonal sequence $C_k(= c_{k1}, c_{k2}, ..., c_{kN})$ with length $N$ as shown in Fig.20(a) by data-block $d_k$ consisting of $M$ bits to produce a modulated output $s_k^0$, modulates a common carrier wave $f_c$ by output $s_k^0$ to produce a transmit-symbol $s_k$, and transmits this symbol.

A base-station receiver produces a demodulated symbol $r$ by demodulating a multiplexed received symbol of which components have been incoming from $K$ users in a synchronous condition with a local carrier wave. By multiplying this symbol $r$ by a sequence for main wave $C_k^M$ which is said orthogonal sequence $C_k$ itself, and by another sequence for delayed wave $C_k^D$ which is made by shifting sequence $C_k$ by one chip toward right (and removing the last chip from $C_k$), respectively, a multiplied output is obtained as follows.

$$\left. \begin{array}{l} \gamma_k^D = C_k^D r \\ \gamma_k^M = C_k^M r \end{array} \right\} \qquad\qquad (\text{E-4})$$

A correlated soft-output given by the following equation is obtained by averaging the multiplied output, in a unit of the block, and these outputs are shown in Fig. 20 (b).

$$\gamma_k = \frac{1}{N}\left\{ \sum_{n=2}^{N} c_{kn-1}^D r_n + \sum_{n=1}^{N-1} c_{kn}^M r_n \right\} \qquad\qquad (\text{E}-5)$$

Since user signal separation can be achieved due to the shift orthogonality of sequence set $C_k$ in this process, soft-output $\gamma_k$ is composed of transmit-data component with $M$ bits which $u_k$ has transmitted, and the delayed wave component. The transmit-data can be detected by removing the inter-bit interference included in $\gamma_k$ by the same means as that explained with system (P-7).

However, since the family size of the shift orthogonal sequence is $(N-1)/2$, the user population which can be accommodated in system (P-6), is limited to

$$K \leq (N-1)/2 \qquad\qquad (\text{E}-6)$$

In addition, there is a problem such that, this system does not have an interference avoiding function against the inter-cell interference, and it is difficult to perform multi-rate transmission, while retaining the user separating function within a cell.

In addition, there are problems such that this system does not have an interference avoiding function against the inter-cell interference similarly to system (P-7), and it is difficult to perform multi-rate transmission, while retaining the user separating function within a cell.

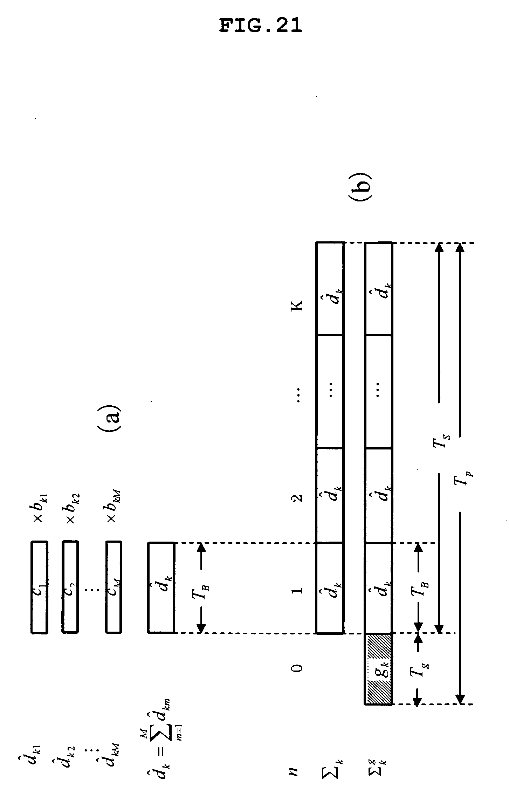

In system (P-7), $M(L \geq M \geq 1)$ kinds of spreading sequences $c_m(m = 1,2,..M)$ with a length of $L$ chips are allocated to the k-th user, and multiplexed spreading sequence $\hat{d}_k$ with $L$ chips (period $T_B = LT_C$) made by summing concurrently $M$ pieces of modulated outputs $d_{km}$ such as to be obtained by modulating the $m$-th sequence $c_m$ by the $m$-th transmit-data $b_{km}$, as shown in Fig.21 (a). A repeated block $\Sigma_k$ is produced by repeating this sequence $\hat{d}_k$, $K$ times, as a core-symbol (period $T_S = LKT_C$). By appending a guard sequence $g_k$ with $L_g$ chips (period $T_g = L_g T_c$) to the core-symbol as shown in Fig.21(b), a guard added multiplexed symbol $\Sigma_k^g$ with $(L_g + LK)$ chips (period $T_P = (L_g + LK)T_C$) is produced as a base-band transmit-symbol. When a receiver receives this signal, the core-part over period $T_S$ (LK chips) is extracted as a core-symbol. This core-symbol becomes a signal made by $K$ times repeating an identical component, if a sum of the delay time due to the multi-paths in transmission and inter-user timing deviation at the receiver is less than $L_g$ chips.

Since this core-symbol has a comb-form spectrum, if producing a transmit-symbol $s_k$ by modulating a carrier wave of different orthogonal frequency $f_k$ beforehand allocated to each user above stated symbol $s_k^0$ and transmitting it, the receiver can obtain a demodulated symbol such as not to contain components of the other users by demodulating a multiplexed received symbol with $f_k$. Namely, perfect user signal separation is performed. Since the demodulated and user signal separated output vector can be further separated into respective of $M$ pieces of sequence components, using $M$ pieces of the spreading sequences and channel characteristics which the receiver produced in advance, by the method of systems (P-2) and (P-3), $M$ pieces of the transmit-data can be detected.

However, since each transmitter of system (P-7) makes the transmit-symbol of a multiplexed sequence made by summing concurrently $M$ pieces of spreading sequences in chip-wise, the peak-transmit-power becomes $M^2$ times larger than that of a system transmitting one piece of spreading sequence. There is a problem that an increase in the required power brings a larger cost of the system.

In addition, intra-cell user separation function is lost according to slight synchronous deviation of the user signals in the up-link transmission, when a transmit-symbol which is additionally multiplied by a scrambling sequence is used, in order to prevent inter-cell interference. And, the user separating function is also lost for inter-block interference due to the delayed waves in the down- link transmission, when the scramble sequence is used. There is an additional problem such that this system does not have means to perform multi-rate transmission, while retaining said user separating function.

## DISCLOSURE OF THE INVENTION

This invention was made to solve the following issues, by offering design techniques for new multi-user transceivers. These issues include solving of imperfect user signal separation function which the interference canceller in system (P-1) indicates, avoiding of the spectral efficiency reduction due to guard sequence appended symbols, each carrying 1 bit, which are employed by de correlation circuit detection in system (P-2), multi-user CDMA with *MMSE* detection in system (P-3) or repeated sequence multiplexing modulation in system (P-4), avoiding of an increase in guard overhead caused by guard sequences appended to data-block-wise to a data-block-repetition-symbol used in system (P-5), avoiding of efficiency reduction caused by the user-restriction in system (P-6) which is allowed to accommodate a limited number of users less than a half of the spreading factor, because of using shift orthogonal spreading sequences, avoiding of an increase in transmit-power in system (P-7) using symbols composed of repetition of multiple spreading sequences.

Namely this invention was performed to construct systems which can achieve technical objectives characterized by providing anti-inter-cell intra-cell interference function or multi-rate transmission function which conventional systems have not provided.

In addition, this invention was made to solve a problem such that insufficient improvement in the soft-output *SN* ratio of conventional MIMO systems or adaptive array systems using multiple receive-antennae, and to establish optimization technology for improving the soft-output *SN* ratio by utilizing the surplus dimensions included in multiplexed received-symbols.

In order to solve the above-described problems, the invention claimed in claim 1 of the present invention is a data-block spread spectrum communications system, wherein a transmitter of each of the user stations comprises means for producing a block spread transmit-symbol by applying user specific spectral spreading processing and carrier wave modulation to a transmit data-block which is composed of a time sequence of plural transmit-data, and transmitting said transmit-symbol, and a receiver comprises means for receiving multiple of said transmit-symbols which all the users have transmitted by said means as a multiplexed received symbol, and performing all the user signal separation and separation of respective data contained in said transmitted data-blocks, using a knowledge of channel characteristics between said transmitters and said receiver beforehand acquired, said user specific spectral spreading processing and carrier wave modulation, characterized by that a transmitter of the $k$-th user comprises, means for producing a block spread symbol by modulating the $k$-th orthogonal carrier wave $f_k$ by a guard added data-block repeated sequence which is made by appending a guard sequence to a data-block repeated as a transmit-symbol, and said receiver comprises, means for producing a demodulated output by demodulating said multiplexed received symbol by the $k$-th orthogonal carrier wave $f_k$, applying averaging operation in an unit of the data-block to a demodulated core-symbol on the core symbol period which is made by removing a guard part of said demodulated output to produce a de-spread data-block corresponding to the data-block which the $k$-th user has transmitted, by removing the other user signal components, and detecting respective of said transmit-data by making on the hard decisions soft outputs which is obtained by separating respective of said transmit-data components, using said de-spread data-block and said channel characteristics.

The invention claimed in claim 2 of the present invention is a data-block spread spectrum communications system, wherein in said system a transmitter of each user comprises means for producing a block spread symbol by spreading a transmit data-block which is composed of a time sequence of plural transmit-data with a spreading sequence allocated to said user, and transmitting said block spread symbol using a common carrier wave as a transmit-symbol, and a receiver comprises means for receiving multiple transmit-symbols which all the users have similarly transmitted as a multiplexed received symbol, and performing separation of all the user symbols with said spreading sequence and separation of individual transmit-data contained in said symbol, characterized by that a transmitter of the $k$-th user comprises, means for producing a guard added block spread symbol by appending a guard sequence to a data block spread symbol which is made with the $k$-th spreading sequence $Z_k$ belonging to a zero-correlation-zone sequence-set as said spreading sequence, and producing a transmit-symbol by modulating said carrier wave by said guard added block spread symbol, and a receiver comprises means for producing a demodulated output by demodulating said multiplexed received symbol by said carrier wave, producing a demodulated core-symbol by removing a guard part from said demodulated output and producing separately a de-spread data-block corresponding to a data-block the $k$-th user has transmitted by removing the other users' signal components by a method of applying said demodulated core-symbol to a matched filter so as to de-spread said demodulated core-symbol and to average a resultant output, and means for producing a soft-output vector consisting of respective transmit-data, each is separated from the other data component, corresponding to said transmit-data-block using said de-spread data-block and said channel characteristic, and detecting respective of said transmit-data by making it on the hard decisions said soft-output vector.

The invention claimed in claim 3 of the present invention is a data-block spread spectrum communications system according to claim 2, characterized by that said system comprises means for allocating a zero correlation zone sequence $Z_k^0$ and a sequence $Z_k^1$ which is made by shifting sequence $Z_k^0$ by 1 chip cyclically to the left to users $u_k^0$ and $u_k^1$, respectively, and a transmitter of each user comprises means for producing each transmit-symbol by making a convolution product of said sequence and a transmit-data-block, and a receiver comprises, means for producing respective de-spread data-blocks by de-spreading said multiplexed demodulated symbol by respective of said sequences to make de-spread outputs, and applying averaging processing to the de-spread outputs, respectively, means for producing a system of de-correlating equations using three elements, those are a concatenated data-block made by concatenating said data-blocks, an unknown vector made by concatenating said transmit-data-blocks and a channel matrix made by said channel characteristics between respective users and the receiver, and means for detecting data by making on hard decisions each component of a soft output vector obtained by solving said system of de-correlating equations, producing a reproduced signal which contains received symbol components received from all the users using sequences $Z_k^0 (k = 1, 2, ... K)$, and applying repeatedly said de-spreading processing with sequence $Z_k^1$ to a signal which is made by removing said reproduced signal from said multiplexed received symbol, and thereby composing a system such that 2 users can simultaneously transmit transmit-symbols using one of said zero correlation zone sequences.

The invention claimed in claim 4 of the present invention is a data-block spread spectrum communications system, according to claim 1 to perform multiple data-rate transmission, characterized by that said transmitter of the $k$-th user comprises, means for producing a guard added symbol by appending a guard sequence to an output which is made by repeating $N$ times a data-block of a length $M$, and a transmitter of the $k'$-th user comprises, means for producing another guard added symbol of which transmission data-rate is different each other by appending a guard sequence to an output which is made by repeating $Nn$ times a data-block of a length $M/n$, and respective user transmitters comprise, means for producing transmit-symbols by modulating the $k$-th and the $k'$-th orthogonal carrier waves by said guard added symbols, respectively, and said receiver comprises, means for producing separately de-spread data-blocks corresponding to the respective user's transmit-symbols by modulating a received core-symbol which is made by removing the guard part from said multiplexed received symbol by respective of the $k$-th and the $k'$-th orthogonal carrier waves.

The invention claimed in claim 5 of the present invention is a data-block spread spectrum communications system, according to claims 2 and 3 to perform multiple data-rate transmission, characterized by that said transceiver system comprises, means for preparing spreading layers with $N$ hierarchical layers such as composed of sequence sets $Z^n = \left( Z_1^n, Z_2^n, ..., Z_k^n, ... Z_{Kn}^n \right)$ consisting of $K_n$ pieces of zero correlation zone sequences as the elements of the $n$-th layer, in advance, and a base station comprises, means for allocating sequences belonging to one or multiple spreading layers corresponding to transmit-data rates to each user, and each user's transmitter comprises means for producing a base-band multistage block spread symbol by a method of spreading a transmit-data-block by making sequentially convolution products of these sequences allocated and said data-block, and transmitting an output which is made by modulating a carrier wave by a guard added symbol made by appending a guard sequence to each of said multi-stage block spread symbols, and said receiver comprises, means for producing said demodulated core symbol by demodulating said multiplexed received symbol by the carrier wave, and separately producing each of de-spread data-blocks such as not to contain the other transmit-symbol components de-spread by different zero correlation zone sequences, by de-spreading, in an unit of the data block, said core-symbol with said spreading sequences which each transmitter has used as said spreading layers.

The invention claimed in claim 6 of the present invention is a data-block spread spectrum communications system, according to claims 1 and 4, characterized by that each of the user transmitters of the $k(= 1,2,...K)$-th user group in a system, of which users are divided by $K$ user groups, each user group having plurality $Q$ of users, comprises, means for modulating the $k$-th orthogonal carrier wave $f_k$ by said guard added data-block repeated sequence, and said receiver equipped with multiple receive-antennas with antenna ordinal number $e(= 1,2,...E)$ comprises, means for producing a demodulated symbol by modulating a multiplexed received symbol which has received via $e$-th antenna with the $k$-th orthogonal carrier wave $f_k$, and separately producing a multiplexed de-spread data-block corresponding to data-blocks which the $k$-th user group has transmitted, by applying the averaging operation to a demodulated core symbol made by removing the guard part from said demodulated symbol, to remove signal components of the other user groups, means for producing a concatenated de-spread vector by concatenating E pieces of said multiplexed de-spread data-blocks, and producing a soft output vector by solving a system of linear equations with multiple unknowns, composed of an extended channel matrix which is made of $Q$ times $E$ pieces of the channel characteristics between respective users of the $k$-th user group and the receive-antennas, said concatenated de-spread vector, and an unknown vector corresponding to the transmit-data of the $Q$ users, and means for obtaining transmit-data of the respective users belonging to said respective groups by making it on the hard decisions respective components of said soft output vector.

The invention claimed in claim 7 of the present invention is a data-block spread spectrum communications system, according to claims 2, 3 and 5, characterized by that said transmitter of the $k(= 1,2,...K)$-th user group in a system, of which users are divided by plural user groups, each user group having plurality $Q$ of users, comprises, means for producing a data-block spreading sequence using the $k$-th spreading sequence $Z_k$ belonging to said zero correlation zone sequence set, and said receiver equipped with multiple receive-antennas with antenna ordinal number $e(=1,2,...E)$ comprises, means for producing a demodulated output by demodulating the $e$-th multiplexed received symbol with said carrier wave, separately producing a multiplexed de-spread vector corresponding to data-block s which the $k$-th user group has transmitted, by applying de-spreading operation to a demodulated core symbol made by removing the guard part from said demodulated output with said spreading sequence $Z_k$ to produce de-spread output, and applying the averaging operation to said de-spread output to remove signal components of the other user groups, and means for producing a concatenated de-spread vector by concatenating E pieces of said multiplexed de-spread vector, producing a soft output vector by solving a system of linear equations with multiple unknowns, composed of an extended channel matrix which is made of $Q$ times $E$ pieces of the channel characteristics between respective users of the $k$-th user group and the receive-antennas, said concatenated de-spread vector, and an unknown vector corresponding to the transmit-data of the $Q$ users and, obtaining transmit-data of the respective users belonging to said respective groups by making it on the hard decisions respective components of said soft output vector.

The invention claimed in claim 8 of the present invention is a data-block spread spectrum communications system, according to claims 1 to 7, characterized by that said transmitter belonging to each cell comprises, means for producing said data-block repeated sequence or said data-block spread symbol over a cell specific transmit-core-block spreading period which is allocated to said cell beforehand, producing a transmit-symbol by modulating the carrier wave described in claims 1 to 6 by a base-band guard added symbol made by appending a guard sequence to said core symbol, and transmitting said transmit-symbol, and said receiver comprises, means for producing a demodulated core-symbol on a received timing synchronized with said cell specific transmit-core block spreading period using said multiplexed received symbol and said carrier wave which the transmitter has used, and thereby producing a de-spread data-block with suppressed inter-cell interfering components, by applying the same processing to said demodulated core-symbol as the method described in claims 1 to 6.

The invention claimed in claim 9 of the present invention is a data-block spread spectrum communications system, according to claims 1 to 7, characterized by that said transmitter belonging to each cell comprises, means for producing a guard added data-block repeated sequence or a guard added data-block spread symbol using a cell specific chip rate made by summing a chip rate bias which is allocated to said cell beforehand to a nominal chip rate, producing a transmit-symbol by modulating one of said carrier waves described in claims 1 to 6, and transmitting said transmit-symbol, and said receiver comprises, means for producing a correlation output between a multiplexed demodulated symbol with continuous waveform which has been produced using said carrier wave and a chip waveform on said cell specific chip rate, producing a discrete time sequence having the amplitude of said correlation output as a demodulated core symbol, and applying said averaging processing to an output made by de-spreading said demodulated core-symbol by the method described in claims 1 to 6, to produce a de-spread data-block where an inter-cell interfering component is suppressed.

The invention claimed in claim 10 of the present invention is a data-block spread spectrum communications system according to claims 2, 3, 4 and 7, characterized by that said system allocates one or plural cell specific zero correlation zone sequence sets as spreading sequence sets to each cell in which a cross correlation value between spreading sequences chosen from two spreading sequence sets belonging to an identical one of said spreading layers allocated to adjacent two cells takes small value.

The invention claimed in claim 11 of the present invention is a data-block spread spectrum communications system, according to claims 1 and 2, characterized by that each of said transmitters comprises, means for producing a transmit-symbol by substituting a pilot sequence for each of said transmit-data-blocks according to claims 1 and 2 as a pilot symbol, and transmitting said pilot symbol over a cell common pilot time slot, and said receiver comprises, means for producing a demodulated pilot response by demodulating, de-spreading and applying averaging processing to a multiplexed received pilot symbol extracted by the method described in claims 1 and 2, and obtaining a channel characteristic based on a correlation output between $j(= 0,1,2,...,J\text{-}1)$ shift analyzing sequence $a_j$ of an analyzing sequence orthogonal to said pilot sequence except at 0 shift position and said demodulated pilot response.

The invention claimed in claim 12 of the present invention is a data-block spread spectrum communications system, according to claim 11, characterized by that said transmitter comprises, means for preparing a pilot set consisting of multiple ($N_p$) pieces of pilot sequences of which frequency spectra complement each other, producing $N_p$ pieces of pilot symbols by such a method that each of them is constructed using a pilot sequence selected out of said pilot sequence set as a transmit-pilot symbol, and transmitting sequentially these $N_p$ pieces of transmit-pilot symbols, and an receiver comprises, means for preparing an analyzing sequence orthogonal to each of said pilot sequences except at the 0 shift position, obtaining $N_P$ pieces of channel characteristics using respective of received pilot symbols and said corresponding analyzing sequences, and producing a precise pilot response by taking a mean value of these $N_p$ pieces of channel characteristics as a pilot characteristic.

The invention claimed in claim 13 of the present invention is a data-block spread spectrum communications system, according to claims 6 and 7, characterized by that said receiver comprises, means for producing a de-spread

matrix $X_k$ using E pieces of said de-spread data-block $\gamma_k^e \left( e = 1,2,..., E \right)$ addressed to the $k$-th user which has been produced with the $e$-th receive-antenna output, and producing a transformed matrix $Y_k$ by multiplying said de-spread matrix by such an orthogonal transform matrix $\Omega_k$ that autocorrelation matrix of said transformed matrix may be diagonalized, means for selecting a weighting corresponding to the eigen value of said transformed matrix for the $e$-th transformed component $y_k^e$, obtaining a soft output vector $\widetilde{d}_k^e$ corresponding to said component $y_k^e$ by a method of solving a system of multiple linear equations, and means for producing a detected data vector $\hat{d}_k$ corresponding to said transmit-symbol by making it on the hard decisions an output vector which is made by summing some of said soft output vectors, each is multiplied by said weighting.

The invention claimed in claim 14 of the present invention is a data-block spread spectrum communications system, according to claim 13, characterized by that said receiver comprises, means for producing a transformed matrix

$W_k$ by applying orthogonal transform to a de-spread matrix $\Gamma_k$ consisting of $L$ pieces of de-spread data-block $\gamma_k^l$ which has been produced with a symbol on the $l(= 1,2,...,L)$-th time position by the method described in claims 6 and 7 with such an orthogonal transform matrix $\Lambda_k$ that an autocorrelation matrix of transformed matrix $W_k$ may be diagonalized,

and selecting for a soft output vector $w_k^l$ of said transformed matrix $W_k$, and a weighting corresponding to the $l$-th eigenvalue of transformed matrix $W_k$, and means for producing a detected data of the $k$-th user using an output vector made by summing some of soft output vectors $w_k^l$ each is multiplied by said weighting.

## BRIEF DESCRIPTION OF THE DRAWINGS

Figure 1 is propagation path model of transmission waves in a CDMA mobile communications system, and Fig.(a) shows intra-cell up-link paths, Fig.(b) shows intra-cell down link paths and Fig.(c) shows inter-cell interfering waves.

Figures 2(a)~(c) are time-charts of basic transmit and received data-block symbols.

Figures 3(a) and (b) are time-charts of transmit- and received symbols of a repeated data-block carrier wave modulation system.

Figures 4(a) and (b) are illustrations of comb-form spectra showing the principle of frequency division transmission.

Figure 5 is a block diagram of a base station transmitter [$TX(BS)$].

Figure 6 is a block diagram of the $k$-th user receiver [$RX(u_k)$].

Figures 7(a)~(c) are illustrations showing symbol composition and frequency spectrum of multi-rate transmit-signals.

Figures 8(a) and (b) are block diagrams of a user group transmission system using an identical carrier wave.

Figure 9 is a transmit-symbol time-chart used for a cell correspondent block-spread core symbol period allocation system.

Figure 10 is a transmit-symbol time-chart used for a cell correspondent chip rate allocation system.

Figures 11 (a) and (b) are symbol frame time-charts used for a pilot transmission.

Figures 12(a)~(c) are time-charts of transmit- and received symbols of a zero correlation zone sequence modulation system.

Figures 13(a) and (b) are block diagrams of the $k$-th user transceiver.

Figures 14(a) and (b) are time-charts of transmit and received symbols of the multistage data-block spreading system using zero correlation zone sequences.

Figures 15(a) and (b) are block diagrams of user group transmission system using an identical spreading sequence.

Figure 16 is a functional block diagram showing transceiver of a conventional CDMA communications system.

Figure 17 is a functional block diagram showing conventional multi-user receiver (interference canceller system).

Figures 18(a) and (b) are functional block diagrams showing conventional multi-user receivers (systems ofde-correlating equations), where Fig.(a) shows de-correlating detector (DD) and Fig.(b) shows minimum mean square error detector ($MMSE$ - $D$).

Figures 19(a)~(c) are time-charts of transmit- and received signals of conventional data-block spreading system using Walsh functions.

Figures 20(a) and (b) are time-charts of transmit- and received signals of a conventional data-block spread system using shift orthogonal sequence.

Figures 21 (a) and (b) are time-charts of transmit-symbol of a conventional multiplexed spread symbol repeating system using carrier wave modulation.

## BEST MODE FOR CARRYING OUT THE INVENTION

This invention provides CDMA systems which overcome the above-mentioned problems such that conventional CDMA systems are vulnerable to the interference disturbance due to the other mobile stations (users), and raise the spectral efficiency.

## A. Repeated data-block modulated orthogonal carrier wave system

### A-1. Basic system.

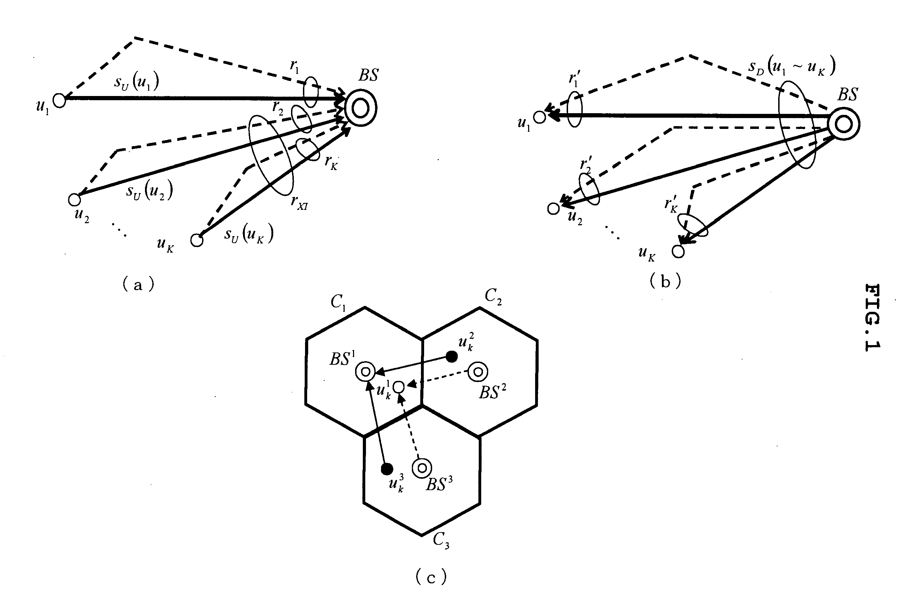

Figure 1 is a supplementary drawing for all embodiment examples of this invention, where intra-cell transmission routes of a CDMA mobile communications system are illustrated. Figure 1(a) shows the paths of up-link transmission via which a mobile station $u_k(k = 1,2,..K)$ (called hereafter user) in a cell transmits a transmit-symbol $S_U(u_k)$ to the base station (BS) in this cell. Now, let the first user $u_1$ be a desired user (the following part is explained under this assumption). A direct wave of a received symbol $r_D$ is a desired wave, while the dotted lines show here the delayed waves generated by the multi-path. Delayed waves which the transmit-symbol of the desired user has generated become auto-interference waves. On the other hand, transmit-waves sent out from the users (can be called interference users) other than the desired user are received as inter-user interference. In these waves, not only direct wave but also delayed waves, as illustrated, due to multi-paths are included. Therefore, received interference waves are the sum of the auto-interference waves and the inter-station interference waves.

All received waves are expressed in the following equations,

$$\left.\begin{array}{l} r = r_D + r_I + x \\ r_I = r_{SI} + r_{XI} \end{array}\right\} \qquad (1)$$

where $x$ is a white noise. ($AWGN$ : Additive White Gaussian Noise, generally $AWGN$ is shown by $x$ in the following part.) In Fig. 1(a), a received wave component received at a base station BS from the user $u_k$ is denoted by $r_k$. The received wave $r_1$ illustrated of the desired user is equivalent to $r_1 = r_D + r_{SI}$ in Eq. (1).

Figure 1(b) shows the paths of down link transmission. Delayed waves of multi-path waves take place also in this case, shown by the dotted lines. And, received wave $r_1$ which user (station) $u_1$, receives includes not only the direct wave and the delayed waves corresponding to the transmission of transmit-waves $s_D(u_1)$ illustrated, but also the direct wave and the delayed waves based on transmission waves $s_D(u_k)(k \neq 1)$ to the other users $u_k$ $(k \neq 1)$.

Therefore, the transmitter of base station BS has the almost same function as those of the transmitters of all the users in Figure 1(a), and transmit-signal $s_D(u_1 \sim u_K)$ is given by a sum of transmit outputs addressed to all the users.

Figure 1(c) is a diagram showing the paths of inter-cell interfering waves among 3 cells $C_1$, $C_2$ and $C_3$. The receiver of a base station BS[1] of a cell $C_1$ receives interference due to the up-link transmission paths shown by solid lines coming from users $u_k^2$ and $u_k^3$ belonging to cells $C_2$ and $C_3$, respectively. And, the receiver of user $u_k^1$ of cell $C_1$ receives interference due to the down link transmission paths shown by the dotted lines coming from base stations BS[2] and BS[3] of cells $C_2$ and $C_3$, respectively.

In this invention, the transmitter of a base station BS transmits user common pilot symbols to the $k(= 1,2,...K)$-th user $u_k$ via a down link, and $u_k$ estimates the channel (gain) characteristic from BS to $u_k$ using received response of pilot symbols. The BS transmitter converts $M$ bit binary data $d_k = (b_{k1}, b_{k2},..b_{km},..b_{kM})$ to transmit to $u_k$ into a data-block (unit) $d_k$. A guard added symbol $\mathbf{\Sigma}_k^g$ is made by appending a guard sequence to a core-symbol which is made by repeating $N$ times this data-block. An output made by modulating the $k$-th carrier wave $f_k$ by symbol $\mathbf{\Sigma}_k^g$ is sent out with similar data symbols of the other users.

The receiver of user $u_k$ receives a multiplexed received symbol in which all of user specific received symbol components have been multiplexed, and produces a demodulated data-block $\tilde{d}_k$ which is obtained by applying *the k*-th carrier-wave $f_k$ to the multiplexed received symbol, and thereby separating respective user specific components with following averaging operation. The receiver obtains a soft-output $\tilde{b}_{km}$ corresponding to the $m$-th data $b_{km}$ included in data-block by removing inter-bit interference between bits $b_{km}$ and $b_{km}$, $(m' \neq m)$ included in $\tilde{d}_k$ using a correlation matrix $H_k$ made of the channel characteristics.

Thus the receiver obtains a detected binary data-block $\hat{d}_k$ as a vector consisting of $M$ bit data with a method such as to make hard decisions on respective soft-outputs $\tilde{b}_{km}$ corresponding to the $m$-th transmit-data to the k-th user $b_{km}$. This is a system which can transmit information of $M$ bits per block-symbol, and it has a feature such as to enhance the spectral efficiency due to saving of the guard sequence.

For up-link transmission, a transmitter of the $k$-th user $u_k$ produces pilot and data symbols by the same method as that for the down link transmission, and transmits them to base station BS. The receiver of BS detects a data-block which transmitter of user $u_k$ has transmitted using the same method as that the receiver of $u_k$ uses.

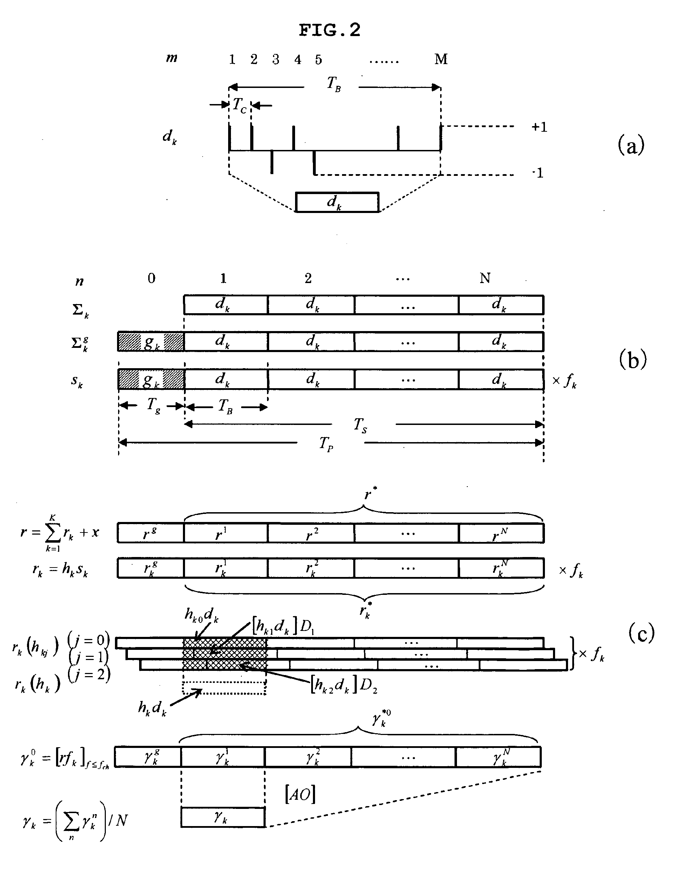

Figures 2, 3 and 4 are supplementary explaining drawings of the first embodiment of this invention, showing time composition and spectral characteristics of data-block symbols which are produced at the transceivers. $d_k$ in Fig. 2(a) shows a data-block which consists of a binary data sequence of $M$ bits to be transmitted by *the k*-th user $u_k$, and given by,

$$d_k = \left( b_{k1,} b_{k2,}...b_{km,}...b_{kM} \right) = \sum_{m=1}^{M} b_{km} \delta\left(t - mT_C\right) \qquad (2)$$

where $T_C$ and $\delta$ are chip period, and delta function, respectively. $T_B = MT_C$ illustrated is a data-block period.

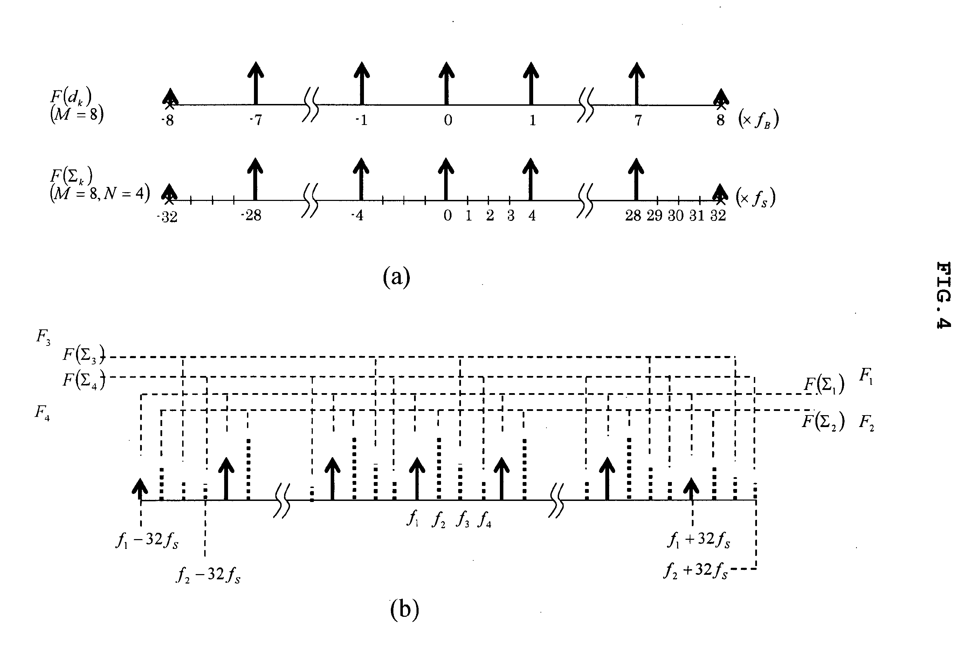

Figure 2(b) shows a data-block sequence specified by a sequential block ordinal number $n(0,1,2,...N)$. $\Sigma_k$ given by the following equation, is a core-block sequence (core-symbol) with length $L = MN$ (in chips) made by $N$ peaces of repeated data-blocks as illustrated,

$$\Sigma_k = w \otimes d_k \qquad (3)$$

where $w$ is a spreading sequence with $N$ chips in length, giving a repeating pattern of $d_k$ [Note, a periodic sequence such as (1, -1, 1,-1,...) or (1, 1,-1,-1,1, 1,-1,-1,...) can be used, because orthogonal relation can be kept with such a sequence, as explained later with Fig.4.], $\otimes$ indicates Kronecker product.

$\mathbf{\Sigma}_k^g$ illustrated in the figure is a guard added data-block repeated sequence which is made by appending a guard sequence $g_k$ with length $L_g$ to the header part (n = 0) of core-symbol $\Sigma_k$, and it is called a guard added symbol. In Fig.2(b), $T_P$ is guard added block spreading period (guard added symbol period) and $T_S$ is core block spreading period (core-symbol period) which is a time duration made by removing guard period $T_g$ from $T_p$.

Guard sequence $g_k$ is a cyclic prefix composed of the rear part with $L_g$ chips of $\Sigma_k$. $\Sigma_k^g$ is a sequence consisting of $L_E = (MN + L_g)$ chips, and it is given by the following equations, by denoting respective chips by $\sigma_{k1}$,

$$\Sigma_k^g = \left(\sigma_{k1}, \sigma_{k2}, \ldots \sigma_{k,MN+L_g}\right) = T_{CP}\left[w \otimes d_k\right] \qquad (4)$$

$$T_{CP} = \left(\frac{O_{Lg \times (NM-Lg)} \big| I_{Lg}}{I_{NM}}\right) \qquad (5)$$

where $T_{cp}$ is a guard appending operator that is a cyclic sequence generation matrix having a function of appending a guard sequence so that $\Sigma_k^g$ may become a cyclic sequence, $O_{a \times b}$ is a matrix with a size of $a \times b$ composed of an element "0", and $I_a$ is an identity matrix with a size of $a \times a$.

Guard added symbol $\Sigma_k^g$ is an impulse train signal on a discrete time axis such that each of the impulses arranged in chip period ($T_C$) spacing has a chip-amplitude-value $\sigma_{kl}$. It is necessary to replace each of the chips with a chip wave-form $q$ having a limited bandwidth in order to make it to be a base-band-signal for transmission. A guard added symbol having a continuous wave-form is given by the following equation by making a convolution product of $\Sigma_k^g$ and $q$.

$$\widetilde{\Sigma}_k^g = \Sigma_k^g \otimes q \qquad (6)$$

$s_k$ in Fig. 2(b) is a transmit-signal ("signal means a block spread symbol, and it may be expressed by BSS hereafter") given by the following equation which is made by modulating a carrier wave of the $k$-th frequency $f_k$ allocated to *the* $k$-th user $u_k$ by guard added symbol $\Sigma_k^g$,

$$s_k = \widetilde{\Sigma}_k^g \sqrt{2P_S} \cos 2\pi f_k t \qquad (7)$$

where $P_S$ is transmit-power ($P_S = 1W$ is assumed hereafter).
The carrier waves allocated to respective users have an orthogonal relation given by the following equations, for the purpose of user signal separation,

$$f_k = f_0 + kf_S \qquad (k = 1, 2, \ldots K) \qquad (8)$$

$$f_S = T_S^{-1} = (NMT_C)^{-1} \qquad (9)$$

where $f_0$, $f_S$ and $kf_s$ are a reference carrier frequency, a fundamental carrier frequency given by the reciprocal of core-symbol period $T_S$, and an intermediate frequency to discriminate respective signals of users $u_k$. (Such a method is generally used in actual equipment, that a base-band-symbol modulates frequency $kf_s$ at the first stage, and the resultant output modulates a frequency $f_0$ which is far higher than $kf_s$ at the next stage.)

Now, let's explain Fig.2(c). $r$ is a multiplexed received symbol, in which $K$ pieces of the $k$-th received symbol component $r_k$ (BSS) have been multiplexed. Symbol component $r_k$ is a signal which has arrived at a receiver so that the $k$-th transmit-symbol $s_k$ transmitted by user $u_k$ arrives at the receiver, on a synchronous (down-link) or a quasi-synchronous (up-link) condition with those transmitted by the other users.

It is here assumed that a channel characteristic to the $k$-th user $u_k$ from the base station is given by an impulse response of the following equation, because the time resolution is given by the chip period,

$$h_k = \left(h_{k0}, h_{k1}, .. h_{kj}, .. h_{k,J-1}\right)^T \qquad (10)$$

where $h_{kj}$ is a complex amplitude component which delays from the direct wave component $h_{k0}$ by $jT_C$. (for the down-link, response $h_k$ becomes identical for all the users). Therefore, a multiplexed received symbol in which the $k$-th received symbol component and the other similar user specific received symbol components have been multiplexed is given by the following equations, if denoting a time variable and an $AWGN$ component by $t$ and $x$ respectively.

$$\begin{aligned} r(t) &= \sum r_k(t) + x(t) \\ \sum r_k(t) &= \sum_{j=0}^{J-1} h_{jk} s_k(t - jT_C) + x(t) \end{aligned} \qquad (11)$$

Multiplexed received symbol $r$ consists of a guard sequence part $r^g$ and a multiplexed received core-symbol which is the core-symbol-part over a core-period $T_s$ as shown in the figure. The $k$-th user specific component of $r^*$ is denoted by $r_k^* \left(= r_k^1, r_k^2, ..., r^n, .. r_k^N\right)$. (The display of time variable $t$ is omitted hereafter.) $r_k(h_{kj})$ is a received symbol component having the $j$-th delayed wave amplitude shown in Eq.(10). A hatched part of the first block is composed of products of three elements which are transmit-data-block $d_k$, delayed wave amplitude $h_{kj}$ and an operator $D_j$ showing cyclical delay by $jT_C$($T_C$ : chip interval). $r_k(h_k)=h_k d_k$ in Fig.2(c) is a sum of these products with respect to $j(= 0,1,2,...,J-1)$.

Then, let's describe a principle of user (signal) separation. A demodulated base-band core-symbol $\gamma_k^{*0} = \left(\gamma_k^1, \gamma_k^2, ..., \gamma_k^N\right)$ is obtained on period $T_S$ by the following equation, when performing demodulation processing, such that a multiplexed receive-core-symbol $r^*$, shown in Fig.2, is multiplied by carrier wave $f_k$, and then only the low-frequency-component of the output less than a chip frequency $f_{ch}\left(= T_c^{-1}\right)$ is extracted with a filter,

$$\begin{aligned} \gamma_k^{*0} &= \left[\left\{\sum_{k=1}^{K}\sum_{j=0}^{J-1}\left(h_{kj}\Sigma_k\right)D_j\sqrt{2}\cos 2\pi f_k t + x(t)\right\}\cos 2\pi f_k(t)\right]\left(f \le f_{ch}\right) \\ &= \sum_{j=0}^{J-1}\left(h_{kj}\Sigma_k\right)D_j\left(1 + \cos 4\pi f_s t\right) \\ &\quad + \sum_{\substack{k'=1\\k'\neq k}}^{K}\sum_{j=0}^{J-1}\left(h_{k'j}\Sigma_{k'}\right)\left\{\cos 2\pi(k - k')f_s t + \cos 2\pi(k + k')f_s t\right\} + x(t) \end{aligned} \qquad (12)$$

where, $D_j$ is a delay operator with $jT_C$.

The demodulated output stated above is composed of $N$ pieces of demodulated block-components $\gamma_k^n (n = 1, 2, ..., N)$, each is on block period $T_B$, as shown in Fig.2(c). $\gamma_k^{*0}$ can be converted here into the form of a vector composed of $LM$ chips with chip period spacing $T_C$, by taking correlation output on every chip period $T_C$ between the chip waveform in Eq.(6) and this demodulated output. When applying averaging processing to this demodulated vector $\gamma_k^{*0}$, in an unit of data-block period ($T_B$), over one period $T_s$ of fundamental frequency $f_s$, the terms with a cosine wave take 0.

As a result, a demodulated data-block of the following equation is obtained as de-spread output $\gamma_k$.

$$\gamma_k = \frac{1}{N} \sum_{n=1}^{N} \gamma_k^n = \sum_{j=0}^{J-1} h_{1j} d_k D_j + x \qquad (13)$$

Thus, by averaging the output which is made by multiplying generally symbol $r^*$ by carrier wave $f_k$, the user components other than $u_k$ are removed by this averaging process, and resultantly de-spread data-block $\gamma_k$ of the $k$-th user is obtained as an user signal separated output consisting of $M$ chips. That is to say, the user signal separation is performed.

This de-spread data-block $\gamma_k$ contains delayed wave components ($h_{kj}d_kD_j$, $j \neq 0$) due to the multi-paths, as it was shown in Eq.(13). These components are equivalent to those of inter-bit interference contained in the de-spread components. In order to remove them, it is required to solve a system of de-correlating equations given by the following equations,

$$\gamma = Hd + x$$

$$\begin{pmatrix} \gamma_1 \\ \gamma_2 \\ \vdots \\ \vdots \\ \vdots \\ \vdots \\ \gamma_M \end{pmatrix} = \begin{pmatrix} h_0 & & & 0 & h_2 & h_1 \\ h_1 & h_0 & & & \vdots & \vdots \\ \vdots & h_1 & \ddots & & h_{J-1} & \vdots \\ h_{J-1} & \vdots & & h_0 & & h_{J-1} \\ & h_{J-1} & & h_1 & \ddots & \\ & & & \vdots & h_0 & \\ & 0 & & h_{J-1} & h_1 & h_0 & h_1 \end{pmatrix} \begin{pmatrix} b_1 \\ b_2 \\ \vdots \\ \vdots \\ \vdots \\ \vdots \\ b_M \end{pmatrix} + \begin{pmatrix} x_1 \\ x_2 \\ \vdots \\ \vdots \\ \vdots \\ \vdots \\ x_M \end{pmatrix} \Biggr\} \qquad (14)$$

where subscript component $k$ indicating the $k$-th user is omitted for simplicity; and H, $d = (b_1, b_2, ..., b_m, ..., b_M)^T$ and $x = (x_1, x_2, ..., x_M)^T$ are a channel response matrix consisting of the channel characteristic in Eq. (10) as the element, the transmit-data-vector block in Eq.(2), and an $AWGN$ component, respectively. It is possible to obtain a soft-output vector $\tilde{d}$ as a solution vector of an unknown data-vector d by solving Eq.(14), with a de-correlating detector which multiplies $\gamma$ by an inverse matrix of H, or an MMSE detector which multiplies $\gamma$ by a matrix $H^H$ that is a conjugate transpose matrix of H, and additionally by $(H^H H + N_{r0}I)^{-1}$, the well-known means [refer to Eq.(45)] already explained with Fig.18. By making hard decisions on the respective components $\tilde{b}_m$ of soft-output-vector $\tilde{d}$, a detected output $\hat{b}_m$ of each transmit-data $b_m$ can be obtained. That is to say, it is possible to obtain a detected vector $\hat{d}_k$ as represented by the following expression to which the subscript k is appended to indicate a vector related to $the$ $k$-th user $u_k$.

$$\hat{d}_k = \left( \hat{b}_{k1}, \hat{b}_{k2}, ..., \hat{b}_{km}, ..., \hat{b}_{KM} \right)^T \qquad (15)$$

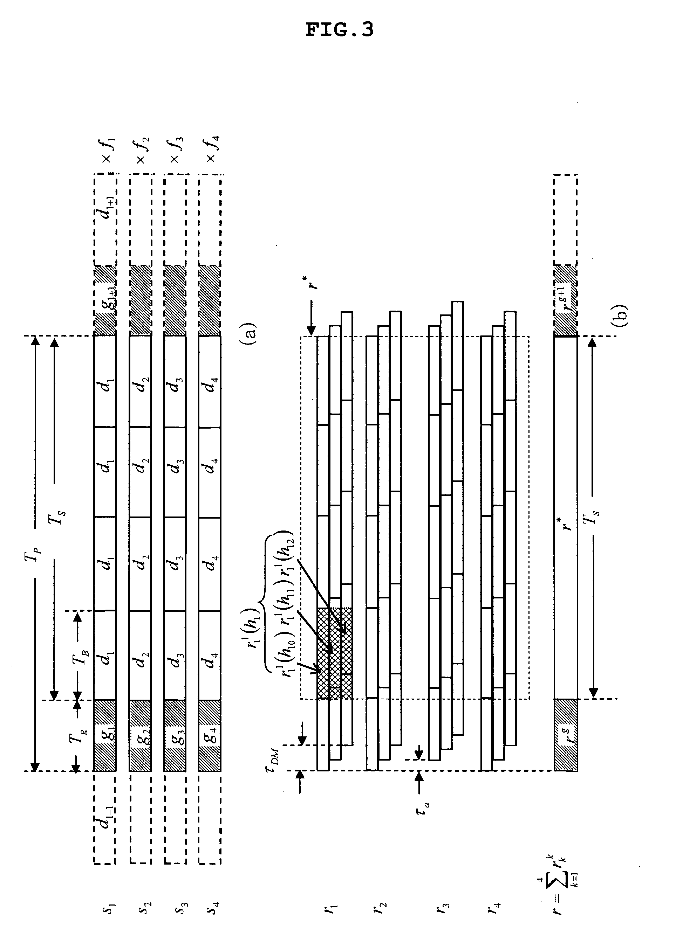

Figure 3 shows compositions of transmit- and received symbols of a repeated data-block orthogonal carrier-wave-modulation system which is the first embodiment of this invention. Figure (a) shows transmit-symbols $s_k$ (BSS) for 4 users $u_k$ ($k$ = 1,2,3,4) which are made by the method explained with Fig.2. Preceding and succeeded parts of respective symbols are also shown in the figure. In this example, each transmit-symbol $s_k$, corresponding to 4 users, is made by modulating *the k-th carrier wave* $f_k$ by the *k*-th guard added data-block sequence $\Sigma_k^g$ which is composed of 4 pieces of data-blocks and a guard sequence.

Figure 3(b) shows the received symbol component $r_k$ on the *k*-th carrier wave $f_k$ and a multiplexed received symbol *r (BSS)* composed of 4 components, which a receiver has received, when only transmit-symbols $s_k$ shown in Fig.3(a) have been transmitted. The figure is a received symbol in case of *J* = 3, and each user specific received symbol component $r_k$ consists of 3 waves. $\tau_{DM}$ [= (*J* - 1)$T_c$] and $\tau_a$ in the figure are the maximum delay time and arrival time difference of $r_3$ compared to a reference arriving time of $r_1$. $\tau_a$ arises only in up-link so as to be generally $\tau_a \neq 0$, because the received symbol components asynchronously arrive. Now consider a method that a base-station controls each user's transmit-timing so that the maximum absolute value of the arriving time deviation takes less than $\tau_{aM}$ as given by the following equations.

$$T_g > \left(\tau_{aM} + \tau_{DM}\right) \qquad\qquad (16)$$

This is called quasi-synchronous condition.

The other received symbol components are composed in the same way as that described above, and each of the received symbol components is also composed of a repeated sequence of the first block component $r_k^1$ for up-link transmission as well as the down-link synchronous transmission ($\tau_a$ = 0), as long as Eq. (16) is consistent. Multiplexed received core-symbol *r\** as well as user specific received core-symbol $r_k^*$ corresponding to *the k*-th user have also been composed of such sequences as to be made by repeating identical blocks $r^1$ and $r_k^1$ with period $T_B$ *N* times, respectively, because the guard sequences are appended. Therefore, the receiver extracts core-symbol part *r\**, as explained in Fig. 2, then demodulates this extracted core-symbol with a local (the *k*-th) carrier wave $f_k$, and applying an averaging processing to the resultant demodulated symbol to produce a de-spread data-block $\gamma_k$.

Figure 4 shows spectral components of the transmit-symbols illustrated in Figs.2 and 3. $F(d_k)$ in Fig.4(a) is a both sided spectral characteristics obtained by analyzing data-block $d_k$ in Fig.2 with DFT (Discrete Fourier Transform) method. It has line spectra at frequency slots of the integer times as many as frequency $f_B \left(= T_B^{-1}\right)$. If the role-off factor of above-mentioned chip waveform *q* is assumed to be $\alpha(\in 0 \sim 1)$, the characteristic has plural line spectra over the frequency range from 0 to $\pm \{M(1+\alpha)/2\}f_B$ in a spacing of $f_B$, corresponding to M bits. In a practical equipment, factor $a \neq 0$ is used in order to suppress the oscillation of this chip waveform. This figure shows an example such that the spectra exist for a range from 0 to $\pm Mf_B$, corresponding to a case in which $\alpha$ = 1 is assumed. (Though the actual amplitude at $\pm Mf_B$ is 0, it is shown in the figure by a low amplitude.)

$F(\Sigma_k)$ is spectra of a core-symbol $\Sigma_k$ (BSS) which is made by repeating $d_k$ *N* = 4 times, and *N* - 1 = 3 pieces of empty slots between the adjacent spectra are produced as a result of the waveform repetition. $F(\Sigma_1)$ (solid lines) in Fig. 4(b) shows spectral characteristic of a modulated output $s_1$ which is produced by modulating a carrier wave $f_1$ illustrated by a data-block sequence $\Sigma_1$. The spectra of the dotted lines are equivalent to outputs which are made by modulating carrier wave $f_2 \sim f_4$ by $\Sigma_2 \sim \Sigma_4$, respectively, by the same method as described above, and any frequency slots such as to overlap one another do not exist, because $f_k$ is given by Eq.(8). Therefore, these 4 modulated waveforms are mutually orthogonal.

Above-mentioned received core-symbol component $r_k^*$ [refer to Fig.2(c)] is made by repeating *N* times an identical block component on period $T_B$, similarly to $\Sigma_k$. Therefore, frequency slots which *spectrum* $F\left(r_k^*\right)$ occupies become identical to that of $F(\Sigma_k)$, and the respective core-symbol components, having different user's ordinal numbers one another, are orthogonal.

Therefore, by demodulating symbol *r\** by $f_k$ and $f_{k'}$, respectively, demodulated signals $\gamma_k^0$ and $\gamma_{k'}^0$, corresponding to components $r_k^*$ and $r_{k'}^*(k' \neq k)$ included in *r\**, at respective output terminals can be produced as explained in Eqs.(12) and (13). Thus de-spread data-blocks $\gamma_k$ and $\gamma_{k'}$ can be obtained using these demodulated signals, respectively. Thus, the user signal separation can be achieved.

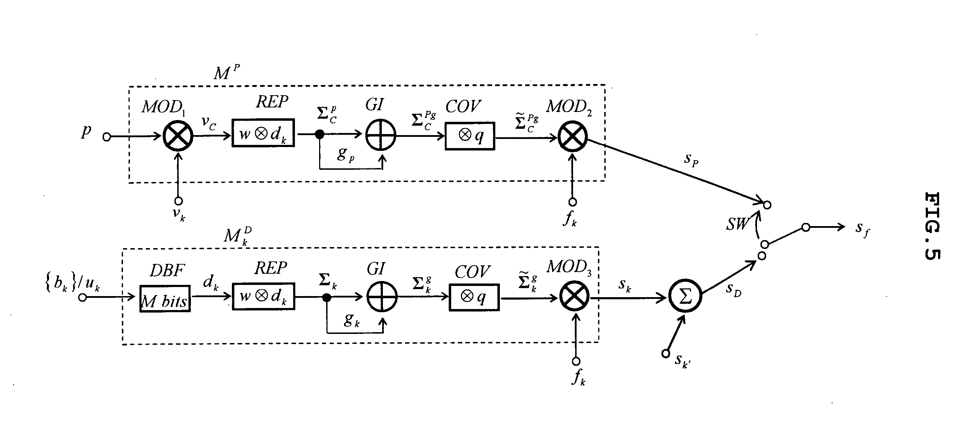

Figure 5 is a block diagram of a base station transmitter of the first embodiment example of this invention, and it is composed of a transmit-signal generation block $M_k^D$ which has a function of making a signal to be sent to the *k*-th user ($u_k$), and a common pilot generation block $M^P$. *M* bit binary data $\{b_k\}/u_k$ and user common pilot information $p = 1$ are applied to the transmitter as inputs in time division manner.

The former is converted into a binary data-block $d_k$ consisting of *M* chips in Eq.(2) at a data-block generation circuit *DBF* shown in the figure. This data-block $d_k$ is applied to a repeating circuit REP illustrated which produces a data-block repeated sequence (core-symbol) $\Sigma_k$ with $L = NM$ chips in length by repeating *N* times as many as data-block $d_k$. In addition, a Guard Inserter circuit *GI* illustrated produces a guard added data-block repeated sequence (guard added symbol) $\Sigma_k^g$ with a total sequence length of $L_P(=NM+L_g)$ by appending a guard sequence $g_k$ which is made by copying the rear $L_g$ chips of $\Sigma_k$, to the front side of $\Sigma_k$.

By applying this chip impulse train to a convoluting multiplier *COV,* a convolution product $\widetilde{\Sigma}_k^g$ convoluted by a chip waveform *q* is produced. That is to say, multiplier *COV* converts discrete signal $\Sigma_k^g$ into a base-band transmit-symbol $\widetilde{\Sigma}_k^g$ of a continuous time waveform over a guard added block spread symbol period $T_P = L_P T_c$ ($T_c$ : chip period).

This base-band-symbol $\widetilde{\Sigma}_k^g$ is applied to a multiplier $MOD_3$, where a transmit-symbol $S_k$ (*BSS*) addressed to $u_k$ is produced by modulating above-mentioned carrier wave $f_k$ allocated to $u_k$ with $\widetilde{\Sigma}_k^g$. This signal is concurrently summed with ($K$-1) pieces of symbols, made by the same method as described above, addressed to the other users $u_{k'},(k'=1,2,..K,k'\neq k)$ at an adder $\Sigma$, to produce a transmit-symbol (*BSS*) used for the down link as shown by the following equation.

$$s_D = \sum_{k=1}^{K} s_k \qquad (17)$$

(For the up-link transmission, above-mentioned symbol $s_k$ is transmitted as it is, as a transmit-symbol.)

On the other hand, modulator $MOD_1$ produces a user common pilot sequence $v_C$ with a length of *M* chips for a timing slot of pilot-information *P,* different from the timing slot of data inputs. [By appending an upper-script *P* to a data symbol in Fig.2, a pilot symbol is expressed. By replacing $d_k$ in Fig.2 for $v_C$, a pilot symbol is produced.]

A repeating circuit REP and a guard sequence inserting circuit *GI* placed behind $MOD_1$ append a guard sequence $g_p$ by the same method as previously described to produce a guard added pilot repeated sequence given by the following equation.

$$\Sigma_C^{Pg} = T_{CP}[w \otimes v_C] \qquad (18)$$

Convoluting multiplier *COV* and modulator $MOD_2$ illustrated produce a base-band pilot symbol $\widetilde{\Sigma}_C^{Pg}$ (guard added pilot symbol), and then modulates common carrier wave $f_c$ [for data and pilot time division transmission, $f_k$ with an arbitrary subscript k given by Eq.(8) can be used as frequency $f_c$] with the guard added pilot symbol, thereby producing a transmit-pilot symbol $S_p$.

A radio-band transmit-symbol $s_f$ is obtained, by synthesizing these outputs $s_D$ and $s_p$ at a switch SW, by a method such as to switch them in time division manner.

A similar block diagram to that in Fig.5 is used as the composition of each user's transmitter for up-link transmission, on condition that respective signals $v_C$, $\Sigma_C^{pg}$ and $\widetilde{\Sigma}_C^{pg}$ in common pilot generation block $M^p$ in Fig.5 are

replaced by user $u_k$ specific signals $v_k$ (An user common sequence $v_k = v_C$ may be also used, because user signal separation can be performed with $f_{k'}$.), $\Sigma_k^{pg}$ and $\widetilde{\Sigma}_k^{pg}$ ; carrier wave $f_c$ is replaced by $f_k$, pilot signal $s_p$ is replaced by $s_k^p$ ; in addition, adder circuit $\Sigma$ which synthesizes the other user transmit-symbols $s_{k'}$ is removed, and symbol $s_f$ made by multiplexing $s_k$ and $s_k^P$ in time division manner at switch SW is transmitted to the base station (BS).

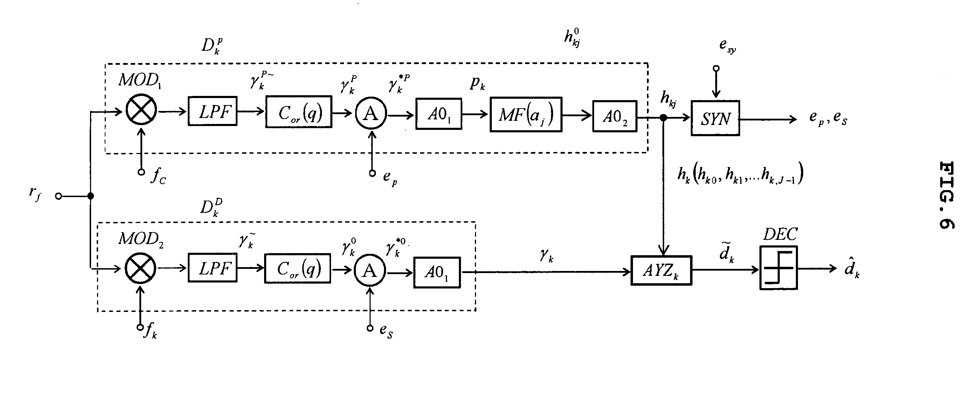

Figure 6 is a block diagram of a user receiver of the first embodiment example of this invention, and the receiver is composed of a demodulated signal generation block $D_k^D$ which demodulates a signal addressed to the $k$-th user $u_k$ , a pilot response generation block $D_k^P$ , and an analyzing circuit $AYZ_k$. Block $D_k^P$ is also called a channel response generation block between BS and $u_k$, having a function of extracting a pilot symbol which is included in a multiplexed received symbol $r_f$ received in time division manner corresponding to transmit-symbol $s_f$ in Fig.5 (with an omitted circuit in the illustration).

This extracted output over the pilot period is converted into a base-band-signal $\gamma_k^{p\sim}$ at a modulator $MOD_1$ and a low pass filter $LPF$, illustrated to which a local carrier wave of frequency $f_c$ has been applied. [In this process, a complex output consisting of real part ($I$) and imaginary part ($Q$) components is actually obtained by applying the real part $\cos 2\pi f_C t$ and the imaginary part $\sin 2\pi f_C t$ of the carrier wave to respective modulators $MOD_I$ and $MOD_Q$, and then applying the resultantly obtained outputs to respective low pass filters. Such a detailed circuits used for separating and generating the IQ outputs have been omitted, for simplicity. And, the attenuated power level of received signals is compensated by an equalizing circuit, not shown here.]

On the other hand, a demodulated signal generation block $D_k^D$ extracts a data-block spread symbol included in a multiplexed received symbol $r_f$ at the data period as well as a pilot in time division manner. To the output, it applies o multiplication processing with a local carrier wave $f_k$, filtering, and averaging, thereby producing a de-spread data-block $\gamma_k$ which consists of $M$ chips, corresponding to $M$ bit components of data-block $d_k$ for *the* $k$-th user.

Though signals $\gamma_k^{p\sim}$ and $\widetilde{\gamma}_k$ are both continuous time waveforms, chip waveform correlation circuit $C_{or}(q)$ illustrated produce correlated outputs between each of these continuous waveforms and a chip waveform $q$ in chip period spacing $T_c$. Thus these waveforms are converted into discrete time waveforms, each having a value at discrete time spacing. [Useful signal components are included in these discrete signals.] That is to say, chip period spacing discrete sequences $\gamma_k^p$ and $\gamma_k^0$ are obtained.

On the other hand, a synchronizing circuit $SYN$ produces timing pulses $e_P$ and $e_S$ illustrated which are synchronized to a principal wave ($h_{k0}$) of received waves addressed to $u_k$, using a frame synchronization signal as described later, and these pulses designate the time position of synchronized received core-symbol period $T_S$. Two gates A extract core-symbols $\gamma_k^{*P}$ and $\gamma_k^{*0}$ with respective inputs which is denoted by $e_P$ and $e_S$ illustrated, are by removing the guard parts from extracted demodulated pilot response $\gamma_k^P$ and demodulated data symbol $\gamma_k^0$ , respectively.

These core-symbols are pilot and data-block repeated sequences respectively, and they consist of $L(= MN)$ pieces of chip impulses. These repeated sequences are applied to averaging circuits $AO_1$ illustrated. By averaging processing in an unit time of block period $T_B$, $AO_1$ converts the sequence length of these signals from $MN$ to $M$ chips, respectively, to output a pilot response $P_k$ between BS and $u_k$ and de-spread data-block $\gamma_k$ addressed to the $k$-th user. The other user's signal components are removed through this process. Pilot response $p_k$ thus produced is given by the following equations, with user common transmit-pilot sequence $v_C$ and channel characteristic in Eq. (10).

$$p_k = h_k \otimes v_C + x \qquad\qquad (19)$$

Let's consider an analyzing sequence $a(i)$ such as to be orthogonal to $v_C$ at shift positions except for the 0-shift and to satisfy the following equations,

$$\frac{1}{M}\sum_{i=1}^{M} v_C(i)a(i-j) = 1 \qquad (j=0) \\ = 0 \qquad (j \neq 0) \Biggr\} \qquad (20)$$

where $i$ is a chip position variable, $a(i-j)$ is a cyclic $j$ shift periodic sequence of $a(i)$, that is denoted by $a_j$ in the figure. If pilot response $p_k$ is applied to a matched filter $MF$ matched to the cyclically $j$ shift-sequence $a(i-j)$, the following cross correlation function with complex amplitude is produced

$$h_{kj}^0 = \frac{1}{M}\sum_{i=1}^{M} p_k(i)a(i-j) \qquad (j=0,1,2,...,J-1) \qquad (21)$$

as a response of the transmission channel between base station BS and user $u_k$. Generally, in order to decrease an

$AWGN$ component included in this output $h_{kj}^0$, plural outputs similarly obtained in an adj acent time zone are applied to averaging circuit $AO_2$ illustrated to produce a pilot response vector $h_k$ which consists of J components shown in Eq. (10). This response vector is applied to an analyzing circuit $AYZ_k$ and synchronizing circuit $SYN$.

Each transmitter transmits a frame which consists of a symbol sequence and a frame synchronization signal, prepared in advance, and the receiver establishes receiving synchronization using this frame synchronization signal by well-known means. The receiver applies the frame synchronization outputs $e_{sy}$ produced in this process to synchronizing circuit $SYN$. $SYN$ produces timing pulses $e_P$ and $e_s$ to indicate positions of the data and pilot core-symbols based on $e_{sy}$ and channel response vector $h_k$, and transmits these pulses to gates A illustrated. With the assistance of these timing pulses, core-symbols $\gamma_k^{*P}$ and $\gamma_k^{*0}$ are produced as mentioned above.

Analyzing circuit $AYZ_k$ is of composed of a de-correlating detector ($DD$) or an minimum mean square error detector ($MMSE\text{-}D$) shown in Fig.18, and produces a soft output vector (estimates) $\tilde{d}_k = (\tilde{b}_{k1},\tilde{b}_{k2},...\tilde{b}_{kM})$ corresponding to $M$ pieces of the data transmitted by a desired station $u_k$, by solving Eq.(14) using de-spread data-block $\gamma_k$ and channel response matrix H composed of channel response vector $h_k$ as mentioned previously. This output is applied to a hard decision circuit DEC which makes respective components of vector $\tilde{d}_k$ on the hard decisions to produce a detected output vector $\hat{d}_k = (\hat{b}_{k1},\hat{b}_{k2},...\hat{b}_{kM})$ of a data-block.

The block diagram of a base station receiver for the up-link transmission takes a composition using respective elements in Fig.6. That is to say, $K$ pieces of the same circuit as the $k$-th user receiver circuit $RX(u_k)$ in Fig.6 are prepared corresponding to the user population. A circuit $D_k^P$ to be used here is made by replacing carrier wave $f_C$ for $D_k^P$ in Fig.6 by $f_k$, and by replacing analyzing sequence $a$ by sequence $a_k$ which is orthogonal to pilot sequence $v_k$. It is possible to obtain a detected vector $\hat{d}_k$ using thus modified circuits $D_k^P$, $D_k^D$, and $AYZ_k$ prepared for each user.

### A-2. The multi-rate transmission system.

Associated with an increase in data rate to be provided by mobile communications systems, respective users desire for use of various kinds of transmission data rates. In this case, it is necessary to avoid the waste of the frequency resources such as to transmit a low-speed data using a high-speed transmission channel.

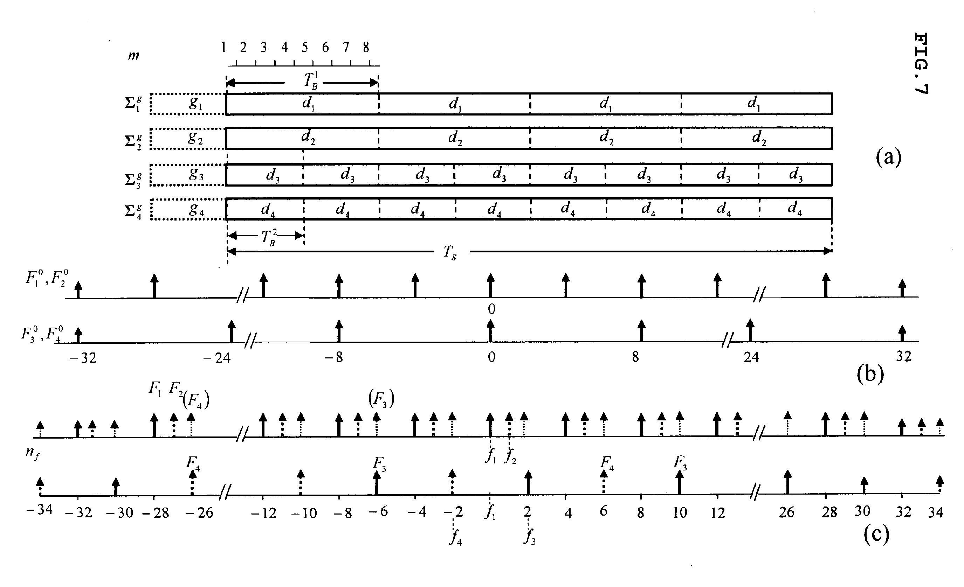

Figure 7 shows symbol compositions and frequency spectrum characteristics of multi-rate transmit-symbols as the second embodiment example of this invention. Figure (a) shows base-band transmit-symbols $\Sigma_k^g$ (guard added data-block repeated sequences) which are transmitted by 4 users $u_k(k = 1,2,3$ $and$ 4). (refer to Fig.2)

In this example, $\Sigma_1^g$ and $\Sigma_2^g$ are sequences such that data-blocks $d_1$ and $d_2$, each having 8 chips corresponding to binary data-block of $M = 8$ bits on the block period $T_B^1$, are arranged repeatedly, and $s_3$ and $s_4$ are sequences

such that data-blocks $d_3$ and $d_4$, each having 4 chips corresponding to $M = 4$ bits on a block period $T_B^2$, are arranged repeatedly. There is a relation of $T_S = 4T_B^1 = 8T_B^2$ as shown in the figure, and the spreading factors of transmit-symbols $(s_1,s_2)$ and $(s_3,s_4)$ are $N = 4$ *and* 8 respectively. Figure (b) illustrates both sided spectrum $F_k^0$, that is obtained by the same method as that shown in the lower part of Fig.4(a). Namely, they are obtained by applying *DFT* analysis to $\Sigma_k$ on period $T_S$, a part of guard added data-block repeated sequence $\Sigma_k^g$. The number of frequency slots in $F_3^0$ or $F_4^0$ except $f = 0$ is 8, which is equivalent to a half value in comparison with 16, the number of slots for $F_1^0$ or $F_2^0$. [similarly to the case in Fig.4, $\alpha = 1$ is here assumed, and note that actual amplitude at the most outside frequency slots takes a value 0.] Spectrum $F_k$ illustrated is obtained by modulating orthogonal carrier waves $f_k(k = 1,2,3,4)$ illustrated by core-symbol $\Sigma_k$, because the spectrum of the modulated outputs shifts to the right by $f_k$, as shown in Fig.(c). $F_1$ and $F_2$ are indicated by thick continuous and dotted lines, respectively, in the upper stage of Fig.(c), while $(F_3)$, and $(F_4)$ are shown by thin dotted lines. In the lower part of Fig.(c), $F_3$ and $F_4$ are illustrated by thick continuous line and dotted lines, respectively.

Frequency spectra made by summing $F_3$ and $F_4$ shown in the lower stage is correspondent with $(F_3)$ and $(F_4)$ in the upper stage. That is to say, $F_3$ and $F_4$ alternately utilize the frequency slots whose number is equal to that used by $F_1$ or $F_2$. Therefore, $u_3(u_4)$ transmits symbols with a half transmission rate as much as that of $u_1(u_2)$, and the channel of $u_3(u_4)$ occupies a half as many as the frequency slots which the channel of $u_1(u_2)$ occupies corresponding to the full transmission rate.

Channels with different transmission rates can be multiplexed while the orthogonal characteristic between these signals are retained, by producing thus the transmit-symbols of which spectra are orthogonal each other. (This orthogonal characteristic holds good for the relation between correspondingly received core-symbols.) As an example, if all users desire for an $M = 8$ bit transmission per data-block, the service can be provided *to K* = 4 users, if they desire for an $M = 4$ bit transmission, it is given to the $K = 8$ users. Accommodated user population is given by the following equation in a case where all the users transmit $M$ bits per symbol by assuming that the basic spreading factor is $\overline{N}$, and the highest data rate is $\overline{M}$.

$$K = \frac{\overline{N}\,\overline{M}}{M} \qquad\qquad (22)$$

Various transmission rate combined transmission is achieved by dividing and utilizing the basic channel ($2M + 1$ pieces of the frequency slots which each basic user occupies) by multiple users, as explained in Fig. (c).

Hence, with the simple method of assigning a frequency slot set consisting of several pieces of idle frequency slots according to each user's request on data rate, highly efficient multi-rate service which occupies a band-width in proportion to transmission rate can be achieved. And, the perfect user signal separation can be achieved in cases such that whatever the transmission rates are transmitted, because each core- symbol is carried on a common core-symbol period $T_S$. In addition, the receiver can separate these data symbols by allocating two carrier waves shown in Eq.(8) to this user, in a case where one user transmits simultaneously data with two kinds of transmission rates. [Transmit-power each user transmitter needs to transmit one of data symbol is proportional to the transmission rate. It is because effective spreading factor $N_e$ is inverse proportion to the transmission rate. However, it does not have any harmful effect on the system operation, as this fact is rational, and the peak transmit-power is constant.]

In the first and the second embodiment examples, the system has allocated carrier frequency $f_k$ to the $k$-th user, in accurate expression, a set of frequency slots to be occupied, to each user. Therefore, the spectral efficiency $\eta$ (bits/band-width) of the system, is given by the following equations, where a band-width W is given, and Nyquist role-off characteristic denoted by $\alpha = 0$ is assumed.

$$\eta = \frac{KM}{W} = \frac{KM}{MN + L_g} \cong 1 \qquad\qquad (23)$$

And, the approximate value on the right-hand side is obtained, on a condition satisfying $K = N$ and $MN \gg L_g$.

## A-3. Multi-output user group transmission system.

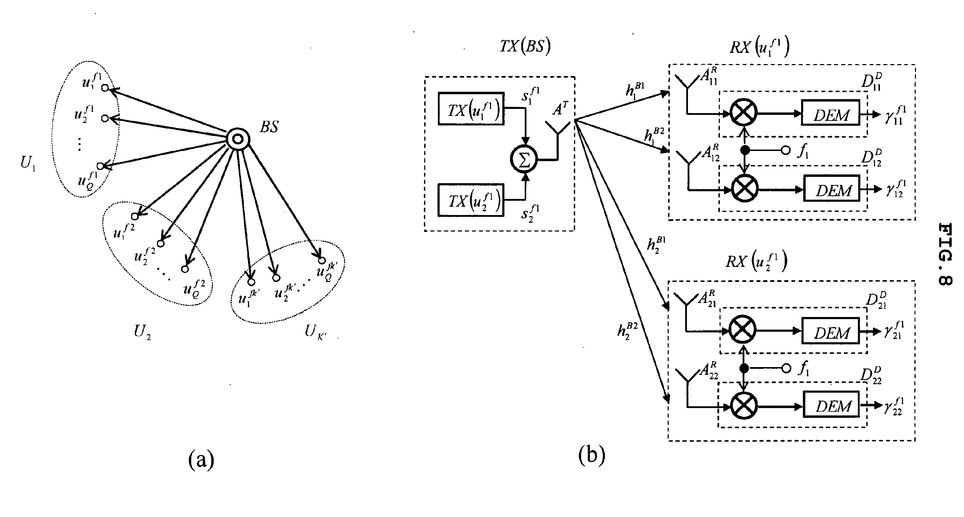

Figures 8 is the third embodiment example of this invention, indicating a transmitter to receiver diagram and the block diagram of a multiple-output user group transmission system using an identical carrier wave. Communications systems using multiple transmit-antennas and multiple receive- antennas are called MIMO (multiple input and multiple output) systems, and let us here describe a multiple output system equipped with multiple (E pieces) receive-antennas.

Figure 8(a) shows a user group $U_{k'}(k' =1,2,...K')$ in the down-link transmission. A common group carrier wave $f_{k'}$ (a common frequency slot set) is given to the $Q$ users $u_q^{fk'}(q = 1,2,...Q)$ belonging to group $U_{k'}$. Figure 8(b) shows transmitter blocks $\left[\, TX\!\left(u_1^{f1}\right) \ \text{and} \ TX\!\left(u_2^{f1}\right)\right]$ of a base station transmitter $TX(BS)$ which transmits signals to users belonging to the first user group $U_1$, and receiver input blocks $\left[\, RX\!\left(u_1^{f1}\right) \ \text{and} \ RX\!\left(u_2^{f1}\right)\right]$ of the users $\left(u_1^{f1} \ \text{and} \ u_2^{f1}\right)$. Two transmit-symbols $\left(s_1^{f1} \ \text{and} \ s_2^{f1}\right)$ are coherently summed by an adder $\Sigma$, and the output is transmitted through a transmit-antenna $A^T$. (Generally the error rate characteristic can be improved due to the transmission diversity effect, if each user transmits with multiple transmit-antennas. It is assumed here to use one transmit-antenna per user, for simplicity.)

And each receiver demodulates received symbols which have been received via two pairs of receive-antennas $\left(A_{11}^R, A_{12}^R \; ; A_{21}^R, A_{22}^R\right)$ at the input side, with group carrier wave $f_1$ (a case of $E$ = 2 is here taken for an example.), and produces de-spread data-blocks $\left(\gamma_{11}^{f1}, \gamma_{12}^{f1} \; ; \gamma_{21}^{f1}, \gamma_{21}^{f1}\right)$. $D_{11}^D \sim D_{22}^D$ are the same demodulated signal generation blocks as $D_k^D$ in Fig.6, and $DEM$ is equivalent to a circuit consisting of $LPF$, $Cor(q)$, and $AO_1$ as shown in Fig. 6. Channel characteristics $h_1^{B1} \sim h_2^{B2}$ between transmit-antenna $A^T$ and respective of 4 receive-antennas $A_{11}^R \sim A_{22}^R$ are beforehand given to each receiver using the previously mentioned pilot responses.

In a process of generating $\gamma_{11}^{f1}$ and $\gamma_{12}^{f1}$, components which users belonging to the other user groups $U_{k'}$ have transmitted are removed, because group carrier waves $f_1$ and $f_{k'}(k'{\neq}1)$ applied to both $D_{11}^D$ and $D_{12}^D$, are orthogonal each other. However, a component corresponding to signal $s_2^{f1}$ which has been transmitted to user $u_2^{f1}$ belonging to the same user group $U_1$ must be removed, because it is included in de-spread data-blocks $\gamma_{11}^{f1}$ and $\gamma_{12}^{f1}$ as an interfering component. Define a concatenated de-spread data-vector made by concatenating $M$-chip vectors $\gamma_{11}^{f1}$ and $\gamma_{12}^{f1}$ in cascade, and a concatenated transmit-data vector which is an element of the above vector, using transverse superscript $^T$ by the following equations.

$$\left.\begin{aligned} \gamma_1^{f1C} &= \left(\gamma_{11}^{f1T}, \gamma_{12}^{f1T}\right)^T \\ d^{f1C} &= \left(d_1^{f1T}, d_2^{f1T}\right)^T \end{aligned}\right\} \qquad (24)$$

Each of these vectors is of 2M chips.

The channel characteristics from the $q$-th user to the $e$-th receive-antenna is denoted by $h_q^{Be} = \left(h_{q0}^{Be}, h_{q1}^{Be},..., h_{qJ-1}^{Be}\right)^T$ . A following system of de-correlating equations holds good,

$$\gamma_1^{f1C} = Hd^{f1C} + x \qquad (25)$$

$$H = \begin{bmatrix} \hat{h}_1^{B1} & \hat{h}_2^{B1} \\ \hat{h}_1^{B2} & \hat{h}_2^{B2} \end{bmatrix}$$

$$\hat{h}_q^{Be} = \begin{bmatrix} h_{q0}^{Be} & & & & & h_{q2}^{Be} & h_{q1}^{Be} \\ h_{q1}^{Be} & h_{q0}^{Be} & & & & h_{qJ-1}^{Be} & \vdots \\ \vdots & \vdots & \ddots & & & & h_{qJ-1}^{Be} \\ h_{qJ-1}^{Be} & \vdots & & h_{q0}^{Be} & \ddots & & \\ & h_{qJ-1}^{Be} & \ddots & \vdots & & h_{q0}^{Be} & \\ & & \ddots & h_{qJ-1}^{Be} & h_{q1}^{Be} & h_{q0}^{Be} \end{bmatrix} \qquad (26)$$

where the parameters range ($q \in 1,2$; $e \in 1,2$).

A partial matrix $\hat{h}_q^{Be}$ in Eq.(26) takes the same form as that in Eq.(14), and it is produced on the basis of channel characteristic $\left( h_{q0}^{Be}, h_{q1}^{Be}, \ldots h_{qJ-1}^{Be} \right)$ from base station(BS) to the $q$-th user $u_q^{f1}$ belonging to user group $U_1$.

H is an extended channel matrix produced of $\hat{h}_q^{Be}$. An unknown vector $\tilde{d}^{f1C}$ made by solving this system by the principle of a de-correlating detector or an *MMSE* detector is called a soft-output vector. By making hard decisions on the respective components of this vector, it is possible to detect respective data. Although a method for down link transmission is here described, a similar method can be applied for up-link transmission. That is to say, the number of users to be accommodated in the system can increase by providing the base station with $E$ pieces of receive-antennas.

The efficiency $\eta$ in Eq.(23) can generally increase by $E$ times, because it is possible to set the number of users of each group with $E$, and the number of all the users with $K = EN$, by using the technology of this embodiment example.

As the matrix size of the above equations increases with $E$, the regularity of the matrix degrades, and consequently the error rate characteristics degrade. To avoid this problem, by choosing a value less than the threshold value for the number of users of each group, for example, that is $E/2$, it is possible to increase the number of users at a low error rate.

In the explanation stated above, the user separation techniques for intra-cell users are described. Now, let's describe methods how to avoid the disturbance due to inter-cell interfering waves as shown in Fig.1(c).

**A-4. Inter-cell interference avoiding system.**

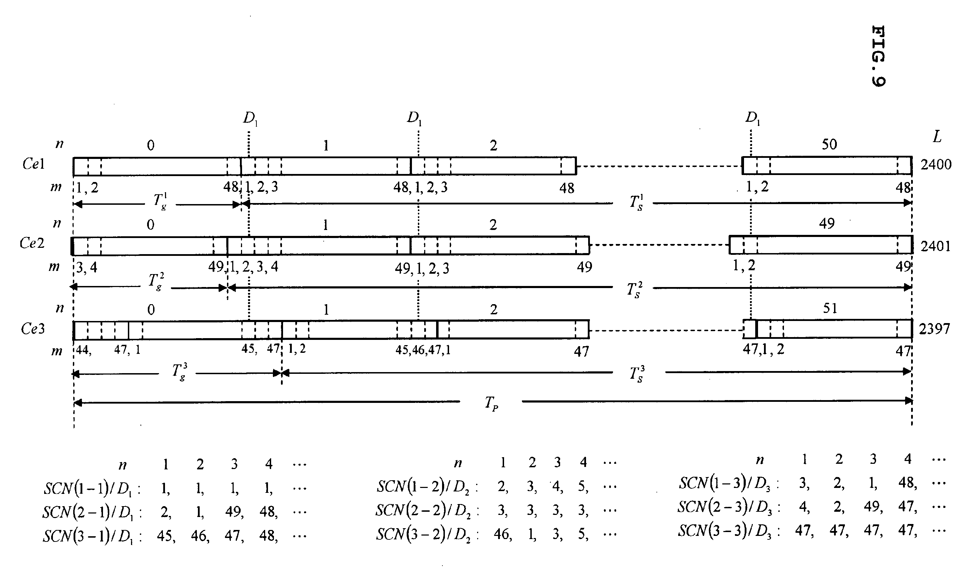

Figure 9 shows a composing method of transmit-symbols such as to avoid inter-cell interference as the fourth embodiment example of this invention. Figure 9 is a time chart showing a symbol composition to be used by the transmitters of a cell correspondent block spreading period assignment system. $\theta$ denotes a symbol showing the cell ordinal number. $Ce\theta(\theta = 1,2,3)$ shows block spread symbols such as shown in Figs.2(b) and 3(a) which respective transmitters (of base stations or users) located in respective of 3 cells produce.

Respective symbols are produced with cell specific parameters [a block spread symbol period $T_s^\theta$, a data-block size $M^\theta$, a spreading factor $N^\theta$ and a carrier frequency $f_k^\theta$]. Let a chip rate $f_{Ch} = T_C^{-1}$ and a guard added block spread symbol period $T_P$ be cell common values. In this case, the following relation hold good generally for the above parameters (refer to Eqs.(8) and (9)).

$$\left.\begin{aligned}
T_P &= T_s^\theta + T_g^\theta \\
T_s^\theta &= M^\theta N^\theta T_C \\
f_s^\theta &= \left(T_s^\theta\right)^{-1} \\
f_k^\theta &= f_0 + k f_s^\theta
\end{aligned}\right\} \quad (27)$$

A parameter set given to respective cells in the example of Fig.9 is as follows,

$$Ce1: \quad M^1 = 48, \quad N^1 = 50, \quad T_s^1 = 2400 T_C \quad T_g^1 = 48 T_C$$

$$Ce2: \quad M^2 = 49, \quad N^2 = 49, \quad T_s^2 = 2401 T_C \quad T_g^2 = 47 T_C$$

$$Ce3: \quad M^3 = 47, \quad N^3 = 51, \quad T_s^3 = 2397 T_C \quad T_g^3 = 51 T_C$$

where a relation $T_P = 2448 T_C$ exists.

Now, let's assume a case in which respective base stations in 3 cells $Ce\ \theta(\theta = 1,2,3)$ have transmitted only transmit-symbols $(s_k^1 \searrow s_k^2 \text{ and } s_k^3)$ using an identical carrier frequency $f_k$ addressed to users belonging to these respective cells. Let's assume a bad interference condition in which a receiver $RX\left(u_k^1\right)$ of $u_k^1$ receives these signals under a synchronous condition. Among the signal components received by $u_k^1$ in this case, a symbol component addressed to $u_k^1$ is a desired one. The components of a symbol which $RX\left(u_k^1\right)$ receives is given by the following equation, if channels $h_{k0}^{B\theta 1}$ are assumed to have only direct waves, corresponding to respective transmission paths, for simplicity.

$$r\left(u_k^1\right) = h_{k0}^{B11} s_k^1 + h_{k0}^{B21} s_k^2 + h_{k0}^{B31} s_k^3 + x \quad (28)$$

When the front part circuit of $D_k^D$ shown in Fig.6 demodulates this received signal by common carrier wave $f_k$, the demodulated core-symbol obtained before the averaging processing contains a transmit-data-block repeated sequence $\sum_k^\theta$ such as shown in Fig.2(b) as a constituent. Let guard added transmit-symbol period $T_p$ be identical, regardless of the cells, and assuming the synchronous reception, then the demodulated core-symbol (*BSS*) is given by the following equations

$$\gamma_k^{*0}\left(u_k^1\right) = \sum_{\theta=1}^{3} h_{k0}^{B\theta1}\Sigma_k^{\theta} + x \qquad\qquad (29)$$

In the example in Fig.9, a core-symbol (block repeated sequence) period $T_s^{\theta}$ is set to be a cell specific value. Consider two cases, one is to use the same parameter-set *(M, N)*, and the other does a cell specific one $(M^{\theta}, N^{\theta})$. When applying the averaging processing to the above-mentioned outputs, de-spread data-blocks are given by the following equations, respectively,

$$\gamma_k^{\theta}\left(u_k^1\right) = \sum_{\theta=1}^{3} h_{k0}^{B\theta1} d_k^{\theta} + x \quad (M,\ N) \qquad\qquad (30)$$

$$\gamma_k\left(u_k^1\right) = h_{k0}^{B11} d_k^1 + h_{k0}^{B21} d_k^{2a} + h_{k0}^{B31} d_k^{3a} + x \qquad \left(M^1,\ N^1\right) \qquad (31)$$

where $d_k^{\theta}$ is a data-block output which is obtained by applying rightly averaging to an $N^{\theta}$ times data-block repeated output $\Sigma_k^{\theta}$ with averaging parameters used by the transmitter, while $d_k^{\theta a}$ shows an output which is obtained by applying the processing with different parameters from those used by the transmitters. The terms $d_k^2$ and $d_k^3$ become large interfering components in the cases using the identical parameter-set in Eq.(30).

Now, let's consider a case using the different parameter-set given by Eq.(31). Pay attention to the first chip position ($D_1$) on symbol component $\Sigma_k^1$, contained in the received symbol, ($D_1$ means a transmit-chip position denoted by $m = 1$ on the respective data-blocks of a transmit-symbol generated in the first cell $Ce$1.) Let a chip ordinal number $m$ (the chip position on the dotted line drawn to the downward from $D_1$) of respective blocks of the transmit-symbol generated in $Ce\theta'$ be a summing chip number. Then the respective chips on the blocks of core-symbol $\Sigma_k^{\theta'}$ $\left(\theta' \neq 1\right)$ according to the parameter of cell $Ce$1 are summed with respect to the block ordinal number n of a transmit-symbol generated in cell $Ce$1, to take respective averages. The result at the lower stage of Fig.9 is thus obtained, when using a method as shown by $SCN(\theta'-\theta)/ID_1$. Hence, it is understood that the chip ordinal numbers constituting demodulated data-block component $d_k^{\theta a}$ in a case of $\theta' \neq \theta$ are randomized. [The sum takes a large valve in case of using a common parameter, because the chip ordinal numbers of a received signal coming from another cell which arrives at the same timing as $D_1$ take always an identical value.] If a number of amplitudes on the different chip number positions are averaged in the summing operation of the averaging process performed by circuit $AO_1$ in Fig.6, both of the mean value and variation approach to zero by law of great numbers, because data sequence takes binary ($\pm$1).

Therefore, by setting the parameters so that the summed components $SCN(\theta'-\theta)$ ($\theta' \neq \theta$) based on $d_k^{\theta a}$ may take enough random values, and by making $N^{\theta}$ sufficiently large, it is possible to reduce the interference power from another cell by $(N^{\theta})^{-1}$ times less. In this system, this interference power further decreases due to a carrier frequency deviation between carrier wave $f_{k'}^{\theta'}$ of the $k'(k' \neq k)$-th user belonging to $Ce\theta'(\theta' \neq \theta)$ and carrier wave $f_k^{\theta}$ used for the demodulation of a receiver of $Ce\theta$, because it enhances the randomization of the demodulated chips.

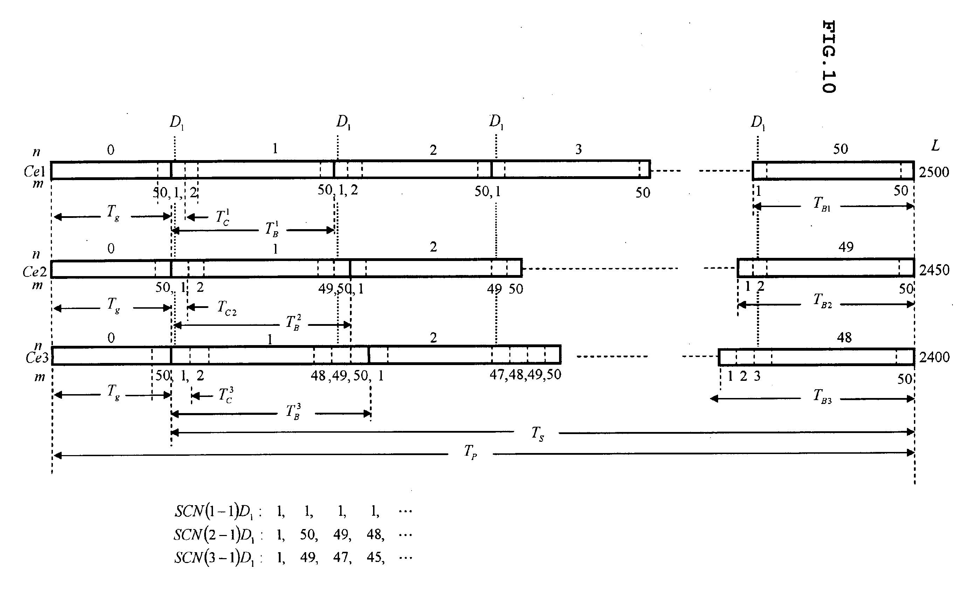

Figure 10 shows a time chart of compositions of transmit-symbol of a cell correspondent chip rate assignment system used for the fifth embodiment example. This system has a function of avoiding inter-cell interference similarly to that in Fig.9.

Let $\theta$ be a cell specific ordinal number. Transmit-symbols are produced using the cell proper parameters [a spreading factor $N^{\theta}$, a number in chip count/core-symbol ($L^{\theta}=MN^{\theta}$), and a chip-rate $f_{ch}^{\theta}$ (or chip-period $T_C^{\theta}$)], corresponding to cell $Ce\theta(\theta = 1,2,3)$ with the same method as that explained with Fig.9. Parameters such as guard-period

$T_g$, core-symbol-period $T_S$, symbol-period $T_P$, and block-size $M$ take respective cell common values generally, and the following relation holds good among the parameters stated above.

$$\left.\begin{array}{l} T_P = T_S + Tg \\ T_S^\theta = MN^\theta T_c^\theta \\ f_{ch}^\theta = \left(T_c^\theta\right)^{-1} = MN^\theta / T_S \end{array}\right\} \qquad (32)$$

In case of $M = 50$, a parameter set given to each cell in the example in Fig.10 takes the valves as follows.

$$Ce1: \quad N^1 = 50 \quad L^1 = 2500 \quad T_C^1 = 2500/T_S$$

$$Ce2: \quad N^2 = 49 \quad L^2 = 2450 \quad T_C^2 = 2450/T_S$$

$$Ce3: \quad N^3 = 48 \quad L^3 = 2400 \quad T_C^3 = 2400/T_S$$

In this case as well as described above, as de-spread data-blocks, the same equations as those in Eqs.(30) and (31) are obtained, when the averaging processing with parameter-sets $(N, f_{ch})$ and $\left(N^\theta, f_{ch}^\theta\right)$ are applied, respectively, to the demodulated core-symbol $\gamma_k^{*0}\left(u_k^1\right)$ (BSS) in Eq.(29), in cases where one is to give the common parameter-set $(N, f_{ch})$ to all the cells, and the other is to give the cell specific one $\left(N^\theta, f_{ch}^\theta\right)$ to each cell.

A result shown at the lower stage in Fig.10 is obtained, when noticing the first chip position ($D_1$) of transmit-data-block repeated sequence $\Sigma_k^1$, and indicating the chip ordinal number $SCN(\theta'-\theta)/D_1$ to obtain by the same method as the one described with Fig.9. Therefore, it can be understood that the chip ordinal numbers constituting de-spread data-block component $d_k^{\theta a}$ in a case of $\theta' \neq \theta$ are randomized. Consequently, inter-cell interference suppressing effect is obtained, similarly to the system described with Fig.9.

Interference avoiding effect can be acquired, if two kinds of above-mentioned interference avoiding systems are widely applied to not only block spreading CDMA systems but also conventional CDMA systems which transmits 1 bit per symbol. Because the symbols coming from the other cells are all randomized in the de-spreading process, even if each cell uses an identical spreading sequence-set.

**A-5. Pilot transmission system.**

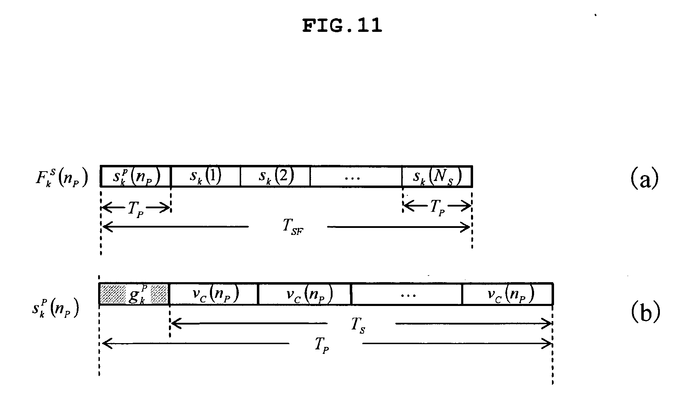

Figure 11 is the sixth embodiment example of this invention, showing a time chart of a symbol frame composition used for pilot transmission. In Fig. (a), $F_k^S\left(n_p\right)$ is a symbol frame composed of one piece of pilot-symbol $s_k^P$ and $N_S$ pieces of data-symbols $s_k$. $s_k(n_S)$ ($n_S = 1, 2, ..., N_S$) is the $n_S$-th guard added data-block spread *symbol $s_k$* (BSS) (period $T_P$) as shown in Fig.2(b) which user $u_k$ transmits. $s_k^P\left(n_P\right)$ ($n_p = 1, 2, ..., N_P$) is a pilot symbol to be inserted, in time division manner, in the $n_P$-th symbol-frame, and the pilot symbol is composed of $N$ (spreading factor) pieces of pilot symbols, the $n_P$-th one is denoted by $v_C(n_p)$ corresponding to $v_C$ shown in Fig.5. Therefore, $N_P$ pieces of the pilot symbols to be sequentially transmitted on the $N_P$ pieces of the frames constitute a cyclic set. Denoting the symbol-frame period and the pilot-frame period by $T_{SF}$, and $T_{PF}$, respectively, the following relation holds good.

$$T_{SF} = (N_S + 1)T_P \left. \right\}$$
$$T_{PF} = N_P T_{SF}$$

$$(33)$$

Figure 11(b) shows a configuration of the $n_P$-th pilot-symbol $s_k^P(n_p)$ which $u_k$ transmits, and it takes a form made by replacing data-block $d_k$ in guard added data-block repeated sequence $\Sigma_k^g$ in Fig.2 (b) by $\nu_C(n_P)$. The receiver demodulates a received pilot-symbol extracted by the synchronizing circuit using the method explained with Fig.6, to produce a channel response $h_{kj}(n_p)$ which corresponds to $h_{kj}^0$ in Eq.(21).

When applying frequency analysis to a pilot sequence $\nu_C$ composed of binary chips, generally the amplitude spectrum does not always have a flat characteristic. Now, let's prepare a sequence set composed of $N_p$ pieces of mutually different pilot sequences as mentioned above, so that the mean value of the spectral characteristics obtained for these sequences may become flat. When averaging estimates $h_{kj}(n_p)$ obtained by Eq.(21) with respect to $N_p$ pieces of pilot- symbols, not only the white noise power contained in the channel-response decreases, but also non-biased frequency characteristics are obtained as the channel response. If there is uneven distribution in the characteristics, the property of data demodulation and detection deteriorates, because the channel characteristic $h_k$ which the receiver uses resultantly contains an error.

**B. Zero correlation zone sequence modulation system**

**B-1. Basic system**

As another method of performing the user signal separation for a multiplexed received symbol by a receiver, it is known that conventional system (P-5) uses a method of modulating a shift-orthogonal sequence $C_k$ by transmit-data-block $d_k$. It is difficult for this system to increase the spectral efficiency, because the user population $K$ is forced to design less than a half of the sequence length $N$ of sequence $C_k$ as shown in Eq.(E-6).

Let's here use, a well-known Zero-Correlation-Zone sequence (ZCZ) as a spreading sequence. (Kenji Takatsukasa, Shinya Matsufuji, Yoshihiro Tanada "On Generating Functions for Binary ZCZ Sets of Length $2^n$ " Proceedings of International Symposium on Information Theory and Its Applications, pp-203-206,2002.10)

Now, let

$$F(Z) = (Z_1, Z_2, ..., Z_k, ..., Z_K)$$
$$Z_k = (z_{k1}, z_{k2}, ..., z_{kn}, ..., z_{kN})$$

be a ZCZ sequence set with length $N$ and family size $K$, where $Z_k$ is *the k*-th member sequence and $Z_{kn}$ is the *n*-th chip amplitude [one of binary, quadric-phase, or ternary (0, 1, -1) values etc. can be taken]. Generally, let denote a sequence which is made by cyclic shifting $Z_k$ to the left by b chips by $Z_k^b$, and denote the original sequence by symbol $Z_k^0$ shown on the right-hand side in the above equation, when distinction on the shifting number is necessary.

The periodic auto-correlation and cross-correlation functions of this sequence set are given by the following equations,

$$\rho_{kk}(\tau) = \frac{1}{N}\sum_{n=1}^{N} z_{kn}\, z^{*}_{k,n+\tau\ (\mathrm{mod}\ N)}$$

$$\rho_{kk'}(\tau) = \frac{1}{N}\sum_{n=1}^{N} z_{kn}\, z^{*}_{k',n+\tau\ (\mathrm{mod}\ N)}\, , \qquad (k \neq k') \tag{34}$$

where $\tau$ is an integer showing cyclic shift of the sequence, and * shows of a complex conjugate. The ZCZ sequences have the following correlation characteristic and the sequence length vs. family size characteristics, for a zero correlation zone $\tau_m$.

$$\rho_{kk}(\tau) = 1 \qquad (\tau = 0)$$
$$= 0 \qquad (\tau \neq 0,\ |\tau| \leq \tau_m)$$
$$\rho_{kk'}(\tau) = 0 \qquad (\ |\tau| \leq \tau_m,\ k \neq k') \tag{35}$$

$$K = \frac{N}{2\tau_m} \qquad (\tau_m \neq 0) \tag{36}$$

Now, let's consider a case of a binary sequence with $\tau_m = 1$ and $N = 8$ as an example.

In such a case, $\rho_{kk}(0)=1$, $\rho_{kk}(\pm1)=0$, $\rho_{kk'}(0)= \rho_{kk'}(\pm1)=0$, ($k \neq k'$); and $K = 4$ are obtained. An example consisting of two different sequence sets, $F_1$, and $F_2$, is shown in the following.

$$F_1(00000101,\ 00110110,\ 01100011,\ 01010000)$$

$$F_2(00110110,\ 00000101,\ 01010000,\ 01100011)$$

[a chip value 0 indicates -1 for a binary sequence.]

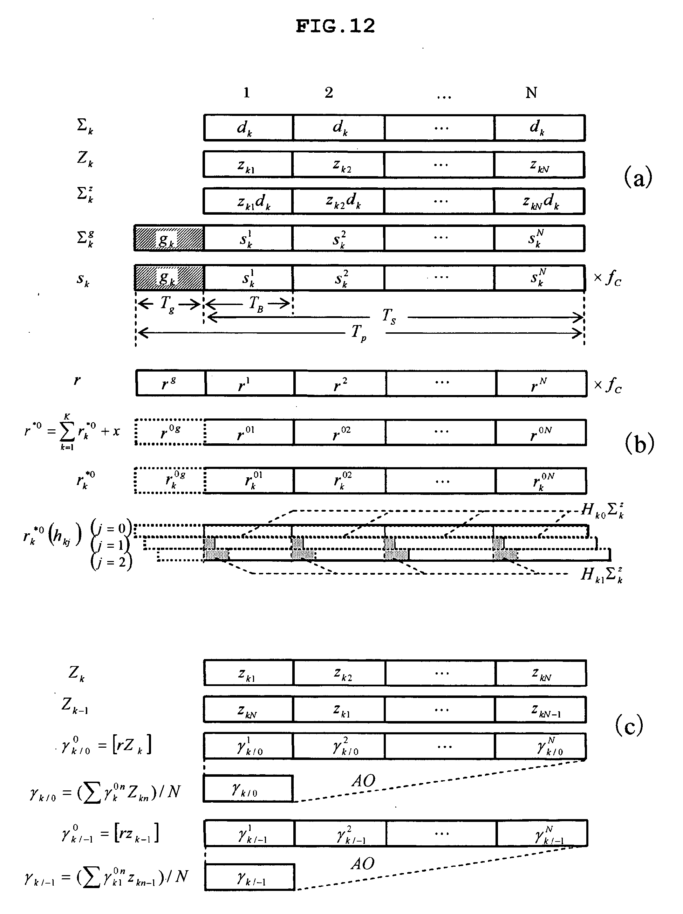

Figure 12 is the seventh embodiment example of this invention, indicating a transmit- and a received symbols each of which composed of data-blocks to be processed by the transceiver. Figure 12(a) shows a process of producing a transmit-symbol $s_k$ from data-block $d_k$ shown in Fig.2 (a) by the similar method to that shown in Fig.2 (b). The difference with Fig.2 (b) is that multiplication with sequence $Z_k$ and modulation by an user common carrier-wave $f_c$ are performed here.

That is to say, a data-block spreading core-symbol $\Sigma_k^z$ consisting of the $N$ pieces of blocks is produced, by multiplying respective chip elements ($z_{kn}, n = 1,2,...,N$) of the $k$-th sequence $Z_k$, belonging to a $ZCZ$ sequence-set, by a repeated data-block sequence $\Sigma_k$ (core-symbol) made by sequentially arranging $N$ pieces of data-blocks. (This corresponds to generating of a convolution product of $Z_k$ and $d_k$.) A guard added data-block spread symbol $\Sigma_k^g$ for the k-th user is produced by appending a guard sequence $g_k$ to this core-symbol, by the same method as shown in Eqs.(4) and (5).

$$s_k^0 = \Sigma_k^g = T_{CP}\left[ Z_k \otimes d_k \right] \tag{37}$$

Each transmitter multiplies symbol $\Sigma_k^g$ by such a chip-wave shown in Eq.(6), to produce a continuous waveform

$\widetilde{\Sigma}_k^g$, and then transmits symbol $s_k$ which is produced by modulating a common carrier wave $f_C$, instead of $f_k$ in Eq.(7), with $\widetilde{\Sigma}_k^g$.

In Fig.12 (b), $r$ is a multiplexed received symbol corresponding to $K$ pieces of transmit-symbol, and consisting of a sum of user $u_k$ correspondent received symbol components $r_k$ for $K$ users, as given by the following equations.

$$r = \sum_{k=1}^{K} r_k + x \tag{38}$$

When extracting a core-part $r^*$ by removing a guard block $r^g$ from this multiplexed received symbol $r$, and demodulating the core-part by multiplying carrier wave $f_C$, so as shown in Eq.(12), a base-band multiplexed received symbol $r^{*0}$ given by the following equations is produced,

$$\left. \begin{array}{l} r^{*0} = \sum_{k=1}^{K} r_k^{*0} + x = \sum_{n=1}^{N} r^{0n}\delta(l-n) + x \\[2em] r_k^{*0} = \sum_{n=1}^{N} r_k^{0n}\delta(l-n) \end{array} \right\} \tag{39}$$

where $r_k^{*0}, r_k^{0n}$, and $l$ are user $u_k$ correspondent demodulated core-symbol, its $n$-th block component, and a block position variable, respectively.

Here, the superscripts $^0$, $^*$ and $^n$ indicate a demodulated output by the local carrier wave, a symbol component made by removing the guard block, and its $n$-th block component, respectively. $r^{*0}$ and $r_k^{*0}$ are respectively composed of $r^{0n}$ and $r_k^{0n}(n=1,2,...,N)$, as shown in Fig.12. $r_k^{*0}$ is composed of multi-path-components of 3 waves, as shown in Fig.12(b), when the channel characteristic of $J=3$ is assumed in Eq.(10). Blank block parts illustrated show received components $(\mathbf{H}_{k0}\Sigma_k^z)$ of the present (concurrent) symbol-blocks, while hatched block parts show received components $(\mathbf{H}_{k1}\Sigma_k^z)$ of delayed waves from the preceding symbol-blocks to the present blocks. $\mathbf{H}_{k0}$ and $\mathbf{H}_{k1}$ are the principal wave and the delayed wave channel matrices.

Considering arriving time difference $\tau_a$ (refer to Fig.3) of received symbol component $r_k$, when setting received symbol component $r_1$ as a reference time, the channel matrices stated above can be generalized into $\mathbf{H}_{k0}$ ($a$) and $\mathbf{H}_{k1}$ ($a$), with channel characteristic $h_k$ and time difference $\tau_a$. They take forms corresponding to the upper right and the lower left triangle matrices in Eq.(14). Examples in case of $J=3$ and $a=0, 1$ are given by the following equations.

$$H_1^0 = \begin{bmatrix} & & & & h_2 & h_1 \\ & & & & & h_2 \\ & & & & & \\ & & & & & \\ 0 & & & & & \end{bmatrix}$$

$$H_0^0 = \begin{bmatrix} h_0 & & & & 0 \\ h_1 & h_0 & & & \\ h_2 & h_1 & & & \\ & h_2 & \ddots & h_0 & \\ 0 & & & h_1 & h_0 \end{bmatrix} \Bigg\}$$

$$(J = 3, \; a = 0) \qquad (40)$$

$$H_1^1 = \begin{bmatrix} & & & h_2 & h_1 & h_0 \\ & & & & h_2 & h_1 \\ & & & & & h_2 \\ & & & & & \\ 0 & & & & & \end{bmatrix}$$

$$H_0^1 = \begin{bmatrix} 0 & & & & \\ h_0 & & & & \\ h_1 & h_0 & & & \\ h_2 & h_1 & \ddots & & \\ & h_2 & & h_0 & 0 \\ & & & h_1 & h_0 \end{bmatrix} \Bigg\}$$

$$(J = 3, \; a = 1) \qquad (41)$$

The *n*-th block component of the multiplexed demodulated core-symbol in Eq.(39) consists of above-mentioned preceding block component and present block component, as given by the following equations. (hereafter $\alpha = 0$ is assumed for simplicity, and the indication of "*a*" is omitted)

$$\left. \begin{aligned} r_k^{0n} &= r_{k1}^{0n} + r_{k0}^{0n} \\ r_{k1}^{0n} &= \mathrm{H}_{k1}\left(z_{k,n-1} d_k\right) \\ r_{k0}^{0n} &= \mathrm{H}_{k0}\left(z_{k,n} d_k\right) \end{aligned} \right\} \qquad (42)$$

Here, $H_{k0}$ and $H_{k1}$ made by appending a subscript $k$ to the symbols in Eqs.(40) and (41) are used, because a channel characteristic from $u_k$ (or to $u_k$) must be used. Symbol component $r_{k1}^{0n}$ shows the hatched part, and $r_{k0}^{0n}$ dose the blank part at the lowest stage in Fig.12 (b).

De-spread outputs are obtained here by multiplying the multiplexed demodulated core-symbol $r^{*0}$ by sequence $Z_k = Z_k^0$ allocated to desired user $u_k$, and sequence $Z_k^{-1}$ made by cyclic shifting $Z_k^0$ by 1 chip right-ward, respectively. A de-spread data-block given by the following equation is obtained, by averaging these outputs in an unit of period $T_B$,

$$
\left.
\begin{aligned}
\gamma_k &= \frac{1}{N}\left\{\sum_{n=1}^{N}\left(r^{0n}z_{kn-1}^{*} + r^{0n}z_{kn}^{*}\right)\right\} \\
&= H_{k1}d_k + H_{k0}d_k + x \\
&= H_k d_k + x
\end{aligned}
\right\}
\qquad (43)
$$

where a relation $H_k = H_{k1} + H_{k0}$ is used. De-spread data-blocks $\gamma_{k/-1}^{0}$ and $\gamma_{k/0}^{0}$ in Fig.l2(c) are averaged components corresponding to $r^{0n}Z_{kn-1}$ and $r^{0n}Z_{kn}$ in the above equation.

In order to correlatively separate present block components and the preceding block components of the k-th user from another user's components using spreading sequence $Z_k$ and the 1 chip right shifted sequence $Z_{k-1}$, the following relation is required, for zero correlation zone $\tau_m$ (an integer normalized by $T_C$) and the largest delay time ($\tau_{aM} + \tau_{DM}$) in Eq.(16).

$$
\left.
\begin{aligned}
\tau_{aM} + \tau_{DM} &\le \tau_m T_B \\
T_B &= MT_C
\end{aligned}
\right\}
\qquad (44)
$$

In this case, it is generally possible to hold $\tau_m = 1$ for a high speed data-rate transmission, by choosing $M$ to be a large value.

The above equations show that a received symbol component addressed to user $u_k$ corresponding to the transmit-data-block can be separately extracted from multiplexed received symbol $r$, based on the orthogonality in Eq. (35). When applying well-known means such as a de-correlating detector or an minimum mean square error detector to Eq.(43), it is possible to obtain an estimate vector $\tilde{d}_k$ of transmitted data vector $d_k$,

$$
\left.
\begin{aligned}
\tilde{d}_k &= [H_k]^{-1}\gamma_k & [DD] \\
\tilde{d}_k &= [H_k^H H_k + N_{r0}I_M]^{-1}H_k^H \gamma_k & [MMSE]
\end{aligned}
\right\}
\qquad (45)
$$

where $H_k^H$、 $N_{r0}$ and $I_M$ are Hermitian transposed matrix of $H_k$, *AWGN* power included in de-spread output $\gamma_k$, and an identity matrix with size $M \times M$. A data-block detected output vector of user $u_k$ in Eq.(15) is obtained, when making respective components of vector $\tilde{d}_k$ on the hard decisions.

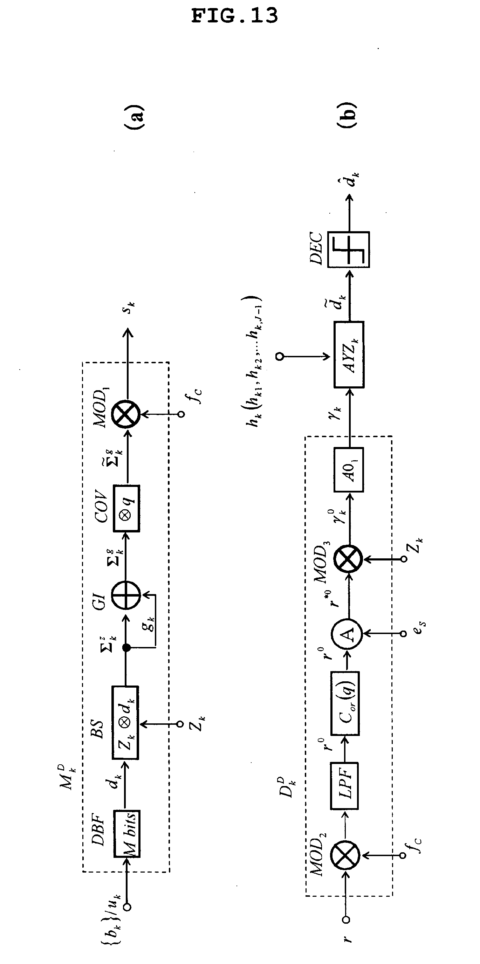

Figure 13 is an eighth embodiment example of this invention, showing a block diagram of the transceiver for the up-link transmission. Figure(a) shows a transmit-signal generating block $M_k^D$ for the data transmission of user $u_k$, while Fig.(b) does a demodulated signal generating block $D_k^D$ and a detected output generating block of a base-station receiver (illustration of generating and demodulating blocks of the pilot-symbol is omitted).

Figure (a) is a composition made by replacing sequence repeating circuit REP shown in Fig.5 by a block spreading circuit *BS.* Circuit *BS* outputs a core-symbol $\Sigma_k^z$ by obtaining a convolution product of spreading sequence $Z_k$ and data-block $d_k$. Guard insertion circuit *GI* appends a guard sequence to core-symbol $\Sigma_k^z$, multiplies a resultant output of *GI* by chip-waveform q at convoluting multiplier *COV,* and thereby produces a base-band transmit-symbol $\widetilde{\Sigma}_k^g$ with continuous waveform. Modulator $MOD_1$ modulates a common carrier wave $f_C$ by $\widetilde{\Sigma}_k^g$ to produce a transmit-symbol $s_k$.

Figure 13(b) shows a composition such as made by additionally inserting a modulator $MOD_3$ between gate *A* and averaging circuit $AO_1$ shown in Fig.6. Multiplexed received symbol *r* is converted into a multiplexed demodulated core-symbol $r^{*0}$ having amplitude values on discrete timings at the circuits from modulator $MOD_2$ to gate *A*. Modulator $MOD_3$ produces a demodulated core-symbol in Fig.12 by de-spreading core-symbol $r^{*0}$ with $Z_k^0$, and $Z_k^{-1}$. Circuit $AO_1$ produces a de-spread data-block $\gamma_k$ by averaging it, as an user signal separated output.

The function of the succeeding circuits in the figure is the same as that in Fig.6. Furthermore, a down-link transmission system having the same operating principle can be constructed by means such that the base-station and the users have the same transmitting and receiving functions as those stated above, respectively.

The method stated above results in a relation of $K = N/2$ for sequence length $N$, reducing a possible user population to be accommodated for spreading factor to a half in comparison with that of system *A*. Let's explain a method to double the user population so as to be $K = N$.

**B-2. Highly efficient transmission system.**

Let's assign two kinds of shifted ZCZ sequences to 2 users $u_{k1}$ and $u_{k2}$ as the following, respectively.

$$u_k^0 : Z_k^0 = \left( z_{k1}^0, z_{k2}^0, \ldots, z_{kN}^0 \right)$$

$$u_k^1 : Z_k^1 = \left( z_{k2}^1, z_{k3}^1, \ldots, z_{kN}^1, z_{k1}^1 \right)$$

That is to say, $Z_k^1$ is a sequence made by cyclic shifting a sequence $Z_k^0 = \left( Z_k \right)$ to the left by 1 chip. Therefore, there is a relation of $z_{kn}^1 = z_{kn+1}^0$ between respective chip amplitudes of these sequences. A base-band block spreading transmit-symbol similar to Eq. (37) is given by the following equation.

$$s_k^{0Q} = T_{CP} \left\lfloor Z_k^Q \otimes d_k^Q \right\rfloor \qquad \left( Q \in 0,1 \right) \qquad\qquad (46)$$

If such a transmit-symbol made by modulating common carrier-wave $f_c$ is sent out from each of the *N* users designated by parameters ($k = 1 \sim N/2$, $Q = 0, 1$), the (multiplexed) received symbol is given by

$$r = \sum_{k=1}^{N/2} \sum_{Q=0}^{1} r_k^Q \tag{47}$$

A base-band output made by demodulating the received symbol by the carrier wave is given by the following equations, when using the same symbols as used in Eqs.(39) and (42) (there is only a difference denoted by $Q$),

$$\left. \begin{aligned} r^{*0} &= \sum_{Q=0}^{1} \sum_{k=1}^{N/2} r_k^{Q*0} = \sum_{n=1}^{N} r^{0n} \delta(l-n) \\ r_k^{Q*0} &= \sum_{Q=0}^{1} \sum_{n=1}^{N} r_k^{Q0n} \delta(l-n) \end{aligned} \right\} \tag{48}$$

$$\left. \begin{aligned} r_k^{Q0n} &= r_{k1}^{Q0n} + r_{k0}^{Q0n} \\ r_{k1}^{Q0n} &= \mathrm{H}_{k1}\left(z_{k,n-1}^Q d_k^Q\right) \\ r_{k0}^{Q0n} &= \mathrm{H}_{k0}\left(z_{k,n}^Q d_k^Q\right) \end{aligned} \right\} \tag{49}$$

Let $Z_k^0(0)$ be a sequence made by shifting $Z_k^0(-1)$ to the right by 1 chip. Then a de-spread vector given by the following equation is obtained, considering a relation of $Z_k^0(0) = Z_k^1(-1)$, by de-spreading the respective components of $r_k^{Q*0}$ using sequence $Z_k^0(0)$.

$$\left. \begin{aligned} \gamma_k &= \frac{1}{N}\left\{\sum_{n=1}^{N} r^{0n} z_{kn}^*\right\} \\ &= H_{k0} d_k^0 + H_{k1} d_k^1 + x \end{aligned} \right\} \tag{50}$$

Now, the following equations are obtained, when solving de-spread vector $\gamma_k$ to produce data-vector $d_k^0$ with an *MMSE* detector using the symbols in Eq.(45),

$$\tilde{d} = \left[H_{k0}^H H_{k0} + N_{r0}I_M\right]^{-1}\left[H_{k0}^H \gamma_k\right]$$
$$= d_k^0 + d_k^{0I} + x^0$$
$$d_k^{0I} = \rho_Z^{0/1} d_k^1$$
$$\rho_Z^{0/1} = \left[H_{k0}^H H_{k0} + N_{r0}I_M\right]^{-1}\left[H_{k0}^H H_{k1}\right]$$

$$(51)$$

where, $d_k^{0I}$ and $\rho_Z$ are an interfering component due to $d_k^1$ which is included in $\gamma_k$, and an interfering matrix from $d_k^1$ to $d_k^{0I}$, respectively. The following equations are obtained, when solving $\gamma_k$ similarly to produce $d_k^1$ with an *MMSE* detector.

$$\tilde{d} = \left[H_{k1}^H H_{k1} + N_{r0}I_M\right]^{-1}\left[H_{k1}^H \gamma_k\right]$$
$$= d_k^1 + d_k^{1I} + x^1$$
$$d_k^{1I} = \rho_Z^{1/0} d^0$$
$$\rho_Z^{1/0} = \left[H_{k1}^H H_{k1} + N_{r0}I_M\right]^{-1}\left[H_{k1}^H H_{k02}\right]$$

$$(52)$$

For concatenated vectors of the following equations based on Eqs.(51) and (52),

$$d_k^C = \left[d_k^{0T}, \ d_k^{1T}\right]^T$$
$$\tilde{d}_k^C = \left[\tilde{d}_k^{0T}, \tilde{d}_k^{1T}\right]^T$$

$$(53)$$

a system of linear equations represented by the following equations,

$$H_C d_k^C = \tilde{d}_k^C$$
$$\begin{bmatrix} I_M & \rho_Z^0 \\ \rho_Z^1 & I_M \end{bmatrix}\begin{bmatrix} d_k^0 \\ d_k^1 \end{bmatrix} + \begin{bmatrix} x_0 \\ x^1 \end{bmatrix} = \begin{bmatrix} \tilde{d}_k^0 \\ \tilde{d}_k^1 \end{bmatrix}$$

$$(54)$$

is obtained, where $H_C$ is a correlation matrix with size $2M \times 2M$. A soft-output of a concatenated vector $d_k^C$ is obtained by the following equation, with such a method as multiplying $\tilde{d}_k^C$ in Eq.(54) by an inverse matrix of $H_C$.

$$[\tilde{d}_k^C] = H_C^{-1}\tilde{d}_k^C$$

$$(55)$$

By making it on the hard decisions the respective components of soft-output vector with length 2*M*, a $\hat{d}_k^C$ is obtained.

Therefore, it is possible to obtain $\hat{d}_k^0$ and $\hat{d}_k^1$ of data-blocks which have been transmitted by two users $u_k^0$ and $u_k^1$ using the *k*-th ZCZ sequence $Z_k$.

However, it is impossible to obtain all the values $\hat{b}_{km}^1$, those are the components of $\hat{d}_k^1$. Received symbol components which correspond to (*M* - *J* + 1) bits from the head of data-block $d_k$ are not included in the delayed wave components appearing on a block shifted to the right side by 1 block. Because the number J of the multi-path-waves must be designed in this system so as to satisfy a condition of $J \le (M + 1)$ based on the relating equations in Eqs.(35) and (44).

That is to say, it is impossible to detect data corresponding to the (*M* - *J* +1) bits from the head of $d_k^1$, when using the above-mentioned method, because the second term $H_{k1}d_k^1$ on the right-hand side of de-spread vector $\gamma_k$ shown in Eq.(50) does not contain the above-described components.

Then, let's notice hard decision output $\hat{d}_k^0$ of $\widetilde{d}_k^0$ obtained from Eq.(55). By obtaining this solution for all of *k*, a component corresponding to all the users $u_k^0$ using $Z_k^0$ which is included in multiplexed demodulated core-symbol $r^0$ can be estimated, by the following equations as a reproduced symbol component ( $\widetilde{d}_k^0$ may be used instead of $\hat{d}_k^0$, for a high signal to noise ratio).

$$w^0 = \sum_{k=1}^{K} \mathrm{H}_{k1}\left[\mathrm{T}_{CP}\left\{Z_k^0 \otimes \hat{d}_k^0\right\}\right] \tag{56}$$

The first part I (component corresponding to *Q* =1) of the multiplexed demodulated core-symbol which is made by removing reproduced component $w^0$ from the multiplexed demodulated symbol is obtained by the following equation.

$$r^{1*0} = r^{*0} - w^o = \sum_{n=1}^{N} \gamma^{10n}\delta(l-n) \tag{57}$$

This symbol includes a little component corresponding to $d_k^0$ if it is assumed that the major components of $\hat{d}_k^0$ are correct.

Therefore, when de-spreading this symbol by the same means as explained with Eq.(43) to produce a sum of the present block components and delayed block components, a de-spread data-block is obtained by the following equation,

$$\begin{aligned} \gamma_k^1 &= \frac{1}{N}\left\{\sum_{n=1}^{N} r^{10n} z_{kn+1}^* + r^{10n} z_{kn}^*\right\} \\ &= \mathrm{H}_{k1}d_k^1 + \Delta d_k^1(w^0) + x \end{aligned} \tag{58}$$

where $\Delta d_k^1(w^0)$ is an error component due to the error of $w^0$. Solving the data block with an MMSE detector,

$$\widetilde{d}_k^1 = \left[\mathrm{H}_{k1}^H\mathrm{H}_{k1} + N_{r0}\mathrm{I}_M\right]^{-1}\mathrm{H}_{k1}^H\gamma_k^1 \tag{59}$$

is obtained. A detected output vector $\hat{d}_k^1$ similarly to Eq.(15) is obtained, by making it on the hard decisions, the respective components of $\widetilde{d}_k^1$.

Now, let's obtain all of vectors $\hat{d}_k^1$ *for K* users, and thereby produce reproduced symbol components corresponding to all the users of $u_k^1$.

$$w^1 = \sum_{k=1}^{K} \mathrm{H}_{k1} \left[ \mathrm{T}_{CP} \left\{ Z_k^1 \otimes \hat{d}_k^1 \right\} \right] \qquad (60)$$

The 0-th part of the multiplexed demodulated core-symbol (corresponding to *Q* = 0), made by removing the above component from the multiplexed demodulated symbol is expressed by the following equation.

$$r^{0*0} = r^{*0} - w^1 = \sum_{n=0}^{N} r^{0n} \delta(l-n) \qquad (61)$$

In $r^{0*0}$, most of the components carrying $d_k^1$ have been removed.

Therefore, when de-spreading the above output, the following de-spread data-block

$$\left. \begin{array}{l} \gamma_k^0 = \dfrac{1}{N} \left\{ \displaystyle\sum_{n=1}^{N} r^{0n} z_{kn}^* + r^{0n} z_{kn-1}^* \right\} \\[3mm] = \mathrm{H}_{k1} d_k^0 + \Delta d_k^0 (w^1) + x \end{array} \right\} \qquad (62)$$

is obtained. Thus, it is possible to obtain a detected output vector $\hat{d}_k^0$ in the same way as explained with Eq.(59). This output has higher accuracy than that obtained with soft-output $\hat{d}_k^C$ in Eq.(55), because this method can utilize additionally the preceding block components. By repeating the above-described processing multiple times to produce $\widetilde{d}_k^0$ and $\widetilde{d}_k^1$ in turn, the error component which the previous soft-output has contained reduces, resulting in production of detected output $\hat{d}_k^0$ and $\hat{d}_k^1$ with less error. These analyzing operations are carried out at $AYZ_k$ in Fig.13 (b).

It is possible to increase the total user population to a value *k* = *N*.

**B-3. Multi-rate transmission system.**

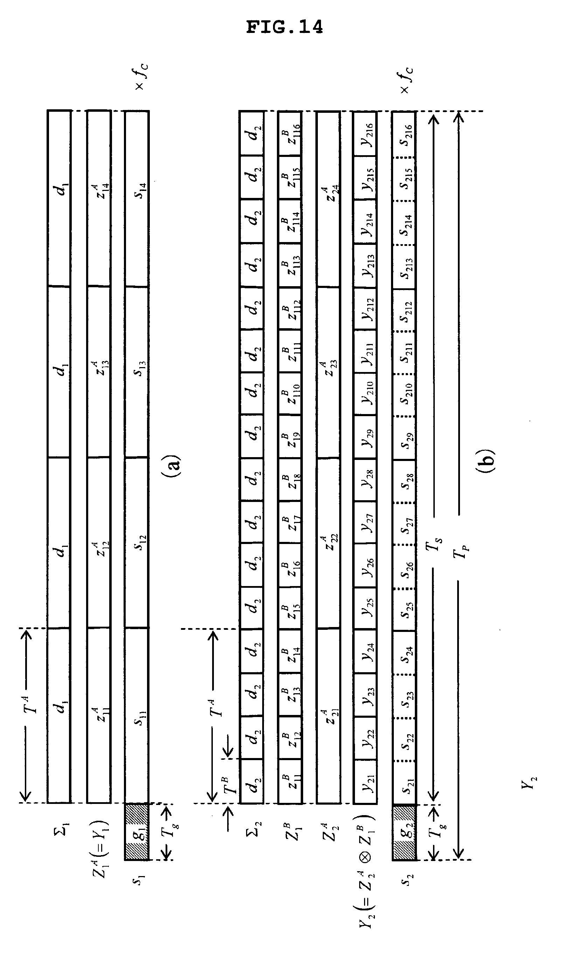

Figure 14 is the ninth embodiment example of this invention, showing a configuration of the transmit-symbol for multi-rate transmission systems. For simplicity, let $F(Z^A)$ be the first ZCZ sequence set to be used for the user signal separation, and let $Z_k^A \left( = z_{k1}^A, z_{k2}^A, \ldots, z_{kN}^A \right)$ be the *k*-th sequence (it is called hereafter sequence A).

By setting the sequence length to be *N* = *N^A* = 4, and assuming $\tau_m$ = 1 in basic system B-1, it leads to *N^A*/2=2 as the user population *K* from Eq.(31). Let $F(Z^B)$ be the second ZCZ sequence set to be used for user signal separation and rate setting, and let $Z_k^B \left( = z_{k1}^B, z_{k2}^B, \ldots, z_{kN}^B \right)$ be the *k* -th member sequence (it is called hereafter sequence B), then it results in *N^B* / 2 = 2 as the family size of the sequence-set, for the sequence length of *N* = *N^B* = 4. Under the above-described condition, the number of total users is given by $K_T = N^A N^B /4 = 4$, when allocating respective sequences of a sequence-set ($Y_{k'}$) composed of $Z_k^A$ and $Z_{k'}^B$ to the individual users.

Let's consider a case of 3 users where allocating a spreading sequence $Y_1 = Z_1^A$ to user $u_1$, and $Y_2 = \left(Z_2^A, Z_1^B\right)$ $\left[Y_3 = \left(Z_2^A, Z_2^B\right)\right]$ to $u_2(u_3)$. $Y_2(Y_3)$ is made by means of making a convolution product of $Z_1^B \left(Z_2^B\right)$ and $Z_2^A$, as given by the following equations.

$$\left. \begin{array}{l} Y_2 = Z_2^A \otimes Z_1^B \\ Y_3 = Z_2^A \otimes Z_2^B \end{array} \right\} \tag{63}$$

A transmit-symbol $s_k$ of user $u_k$ is produced, by modulating user common carrier wave $f_C$ by a base-band-symbol $s_k^0$ (*BSS*) which is produced by replacing $Z_k$ by $Y_k$ in Eq. (37).

Figure 14(a) shows a production order such that a base-band core symbol $s_1^0 = \left(s_{11}^0, s_{12}^0, \ldots s_{1N}^0\right) \left(N = N^A\right)$ is produced, by spreading a data-block $d_1$ (data-block period $T^A$) of user $u_1$ with spreading sequence $Z_1^A \left(= Y_1\right)$ (corresponding chip wise product as illustrated), and then a transmit-symbol $s_1$ (*BSS*) is produced by modulating carrier wave $f_C$ by a guard added base-band-symbol made by appending a guard sequence g, to the core-symbol.

In Fig. (b), $\Sigma_2$ is a repeated sequence of a data-block $d_2$ (data-block period $T^B = T^A/4$) of user $u_2$. A sequence made by making a convolution product of sequence $Z_1^B$ and $Z_2^A$ illustrated is denoted by $Y_2$ (= $y_{21}, y_{22}, \ldots, y_{2N}$) ($N = N^A N^B$) (that is to make a corresponding chip wise product as illustrated). The figure indicates such a process that a base-band-symbol $s_2^0 [s_{2n}^0 = y_{2n} d_2]$ is produced by making a product of $\Sigma_2$ and $Y_2$, and a transmit-symbol $s_2$ is produced by modulating carrier wave $f_c$ by this symbol.

The respective components of a multiplexed received symbol $r$ which a base-station BS has received on quasi-synchronous condition, take the same composition as that in figure 3(b), and the symbol consists of 3 received symbol components $r_1$, $r_2$ and $r_3$ corresponding to transmit-symbols $s_1$, $s_2$ and $s_3$.

By de-spreading received symbol $r$ with respective multiplications of $Z_1^A(0)$ and $Z_1^A(-1)$ as shown in Fig. 12(c) and Eq.(43), and then averaging the de-spread signal in an unit of period $T^A$, it is possible to obtain de-spread data-block $\gamma_1^A$ (sequence length $M^1$) corresponding to a received symbol component $r_1$ coming from user $u_1$. And, a de-spread data-block $\gamma_2^A$ (sequence length $M^1$) obtained by similarly de-spreading received symbol $r$ by $Z_2^A(0)$ and $Z_2^A(-1)$, and then averaging the resultant outputs, corresponds to the sum of components $r_2$ and $r_3$. When de-spreading further the latter $\gamma_2^A$ by sequences B $\left[Z_1^B(0) \text{ and } Z_1^B(-1)\right]$ and $\left[Z_2^B(0) \text{ and } Z_2^B(-1)\right]$, respectively, and then averaging the de-spread outputs in an unit of period $T^B$, de-spread data-blocks $\gamma_2^B$ and $\gamma_3^B$ (each having a sequence length $M^2$) can be obtained, respectively, corresponding to received symbol components $r_2$ and $r_3$ coming from users $u_2$ and $u_3$.

That is to say, by de-spreading and averaging symbol $r$ by 2 pieces of sequences $A$, outputs corresponding to component $r_1$ can be separated from components ($r_2$ and $r_3$), and components $r_2$ and $r_3$ can be separated by de-spreading the latter components ($r_2$ and $r_3$) and averaging them by two sequences $B$. When applying the method shown in Eq.(45) to de-spread data-blocks $\gamma_1^A$ 、 $\gamma_2^B$ and $\gamma_3^B$ thus obtained, with channel matrix $H_k$ produced from the channel characteristics between $u_k$ and BS, inter-bit interference can be removed to obtain a soft-output vector $\tilde{d}_k$, thus leading to producing a detected output vector $\hat{d}_k$.

The service range of transmission data rate can be widely established by the above-mentioned multi-rate transmission system, because this system can be generalized as a system which is constructed by making convolution products of respective sequences which are exclusively chosen from respective stages of a multi-stage ZCZ sequence set. The number of simultaneous users on service increases, in a case where many of low rate users take place. And, total transmission data rate decreases to a half in the every stage, in cases where basic system B-1 is used. However, in cases where high-efficient transmission system B-2 is applied, the data-rate reduction dose not arise, even if the number of sequence stages increases, therefore the high spectral efficiency can be achieved.

### B-4. Multi-output user group transmission system.

Let's explain an embodiment example which increases the available user population by a method using multiple of receive-antennas similarly to a system explained in A-3. Although the example of the two user transmission system using identical carrier wave is described in A-3, zero correlation zone sequence modulation systems use a common carrier wave. Let's explain here, user signal separation techniques to increase the user population, under a condition of using one ZCZ sequence $Z_k$ and increasing the number of the receive-antennas.

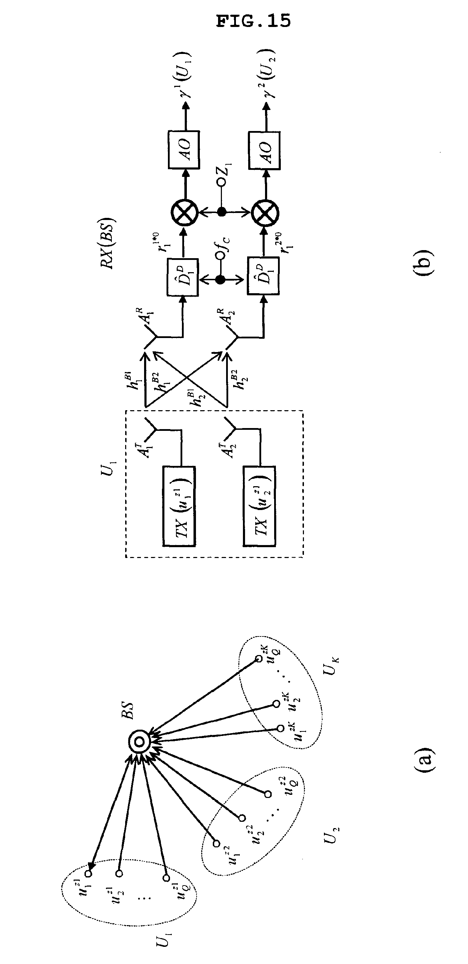

Figure 15 shows a system diagram from transmitter to receiver as the ten-th embodiment example of this invention, and a block diagram of a multi-output user group transmission system using an identical spreading sequence. Figure (a) is a diagram of an up-link transmission system in which $Q$ users belonging to each of user groups $U_k$ $(k = 1,2,..., K)$ transmit their signals with an identical spreading sequence $Z_k$.

Figure 15(b) is a block diagram showing functions such that $Q = 2$ users belonging to the first user group $U_1$ transmit signals from the transmit-antennas $A_1^T$ and $A_2^T$ of their transmitters $TX\left(u_1^{z1}\right)$ and $TX\left(u_2^{z1}\right)$, a base-station receiver $RX$(BS) equipped with 2 receive-antennas $A_1^R$ and $A_2^R$ produces de-spread data-blocks $\gamma^1(U_1)$ and $\gamma^2(U_1)$ illustrated, by separating the respective components which users $u_1^{Z1}$ and $u_2^{Z1}$ have transmitted. $h_q^{Be}$ (q: an user number inside each group, $e$ : receive-antenna number) shows a channel characteristic between the transmit- and receive-antennas. 2 pieces of $\hat{D}_1^D$ are the same circuits as the front part of the data demodulating block in Fig. 13, producing multiple demodulated core-symbols $r_1^{e*0}$ .

A circuit $AO$ averages a de-spread signal made by multiplying symbol $r_1^{e*0}$ by spreading sequence $Z_1$ used by the transmitters, to obtain 2 pieces of de-spread data-blocks. By concatenating these data-blocks, a concatenated demodulated vector is produced,

$$\left.\begin{array}{l} \gamma^C(U_1) = \left\{\gamma^1(U_1)^T, \gamma^2(U_1)^T\right\}^T \\[2mm] \gamma^1(U_1) = \hat{h}_1^{B1}d_1(U_1) + \hat{h}_2^{B1}d_2(U_1) + x_1 \\[2mm] \gamma^2(U_1) = \hat{h}_1^{B2}d_1(U_1) + \hat{h}_2^{B2}d_2(U_1) + x_2 \end{array}\right\} \qquad (64)$$

where, $\hat{h}_q^{Be}$ is a channel matrix taking the same form as the triangular matrix $\hat{h}_q^{Be}$ in Eq.(26) which is made by using channel characteristic $h_q^{Be} = \left(h_{q0}^{Be}, h_{q1}^{Be}, ..., h_{qJ-1}^{Be}\right)$ between the $q$-th user of group $U_1$ and base-station BS.

Hence, based on this relation, the following equation is obtained where symbol $U_1$ is omitted for simplicity,

$$\gamma^C = \mathrm{H}d^C + x$$

$$\begin{pmatrix} \gamma^1 \\ \gamma^2 \end{pmatrix} = \begin{pmatrix} \hat{h}_1^{B1} & \hat{h}_2^{B1} \\ \hat{h}_1^{B2} & \hat{h}_2^{B2} \end{pmatrix} \begin{pmatrix} d_1 \\ d_2 \end{pmatrix} + \begin{pmatrix} x_1 \\ x_2 \end{pmatrix} \quad \Bigg\} \qquad (65)$$

where, H is an extended channel matrix. By solving the above equations for concatenated data-block $d^C$ by the method in Eq.(45), soft-output vectors $\tilde{d}_1(U_1)$ and $\tilde{d}_2(U_2)$ can be obtained. Detected output vectors are obtained by making it on the hard decisions the respective components of these vectors. Thus, using one ZCZ sequence, two user signals can be separated. E times many more user signals can be generally separated, without increasing the frequency band occupancy, by using E pieces of receive-antennas.

### B-5. Inter-cell interference avoidance system.

For respective of systems B-1 to B-4, the same effect as stated above can be obtained by applying inter-cell interference avoiding technology explained with system A-4.

In addition, for systems B, can be designed plural sets of zero correlation zone sequences with an identical sequence length, such as different sequence sets $F_1$ and $F_2$ described with system B-1. Cross-correlation values among the member sequences, each belonging to a different sequence set, can be designed low, by increasing sequence length $N$. Therefore, by assigning zero correlation zone sequence sets (multiple sets per cell for system B-3) which differ one another to respective cells, it is possible to sufficiently decrease interfering power included in the de-spread output.

### B-6. Pilot transmission system.

Let's consider of constructing a pilot transmission system, using the principle of basic system B-1 by a similar method to that explained with system A-5. This system produces a time sequence $s_k^p(n_p)$ $(n_p = 1,2,...N_p)$ consisting of $N_p$ pieces of the pilot symbols which is made by replacing transmit-data-block $d_k$ in figure 12(a) by pilot sequence $v_c(n_P)$, and then inserts them into the same frame as that in Fig.11 in time division manner. By carrying out the user signal separation by the method in Eqs.(43) and (45), de-spread pilot response $p_k(n_p)$ can be produced, because $s_k(n_p)$ is composed of a convolution product of ZCZ sequence $Z_k$ and sequence $v_C(n_p)$.

A response $h_{kj}(n_p)$ corresponding to channel characteristic $h_{kj}^0$ in Eq.(21) is produced here by obtaining correlation-output between $p_k(n_p)$ and $j$-shift sequence $a(n_p)(i$-$j)$ using analyzing sequence $a(n_p)$ in Eq.(20) which is orthogonal to $v_c(n_p)$ except for the 0-shift position. A channel characteristic without a deviation in the frequency characteristics is obtained, if $Np$ pieces of the responses produced in this way are averaged.

From the view point of spectral efficiency and accuracy, this system is more advantageous than exiting systems, because channel responses which are perfectly separated from the data and the other user's signals are obtained, in addition to that, the identical pilot symbol slots can be shared by $K(= N/2)$ users.

### C. Space based orthogonal transform system.

The multi-output user group transmission systems described with systems A-3 and A-4 have used technology for increasing the user population by using multiple receive-antennas. Let's explain here, a *SN* ratio improved multi-output system which can improve the signal-to-noise ratio of the received de-spread output by using multiple antennas, as the 11th embodiment example, while referring to the system parameters of system A-3 and Fig.8.

Let user population $Q$ belonging to user group $U_k$ using orthogonal carrier wave $f_k$ be one, for simplicity, and let the k-th user group be $u_k$. In this assumption, consider a system in which respective of $K$ users transmit transmit-symbols produced by the block spreading modulation using $K$ pieces of the carrier waves, and a receiver receives multiplexed received symbol $r$ in the $e(=1,2,...,E)$-th receive-antenna of the receiver. E pieces of de-spread data-blocks given by the following equation, similar to those shown in Eqs.(13) and (14) where the user signals have been separated, are obtained, when demodulating the symbols with orthogonal carrier wave $f_k$ by the means explained in system A-1.

$$\dot{\gamma}_k^e = \mathbf{H}_k^e d_k + x \qquad (66)$$

The following de-spread matrix is produced by concatenating outputs similarly obtained with respect to all the receive-antennas.

$$\mathbf{X}_k = \left( \gamma_k^1, \gamma_k^2, ..., \gamma_k^E \right) \qquad (67)$$

This matrix is converted using an orthogonal transform matrix $\Omega_k$ into an orthogonalized transformed matrix $Y_k$. This process becomes a spatial conversion, when regarding spatially arranged antennas as a space axis. Let's select $\Omega_k$ here so that auto-correlation matrix of matrix $Y_k = X_k\Omega_k$ may become an identity matrix $I_E$, and the following equations is satisfied,

$$E\left( \mathbf{Y}_k^H \mathbf{Y}_k \right) = \mathbf{I}_E \qquad (68)$$

where E means taking an ensemble average. This condition can be achieved by obtaining an unitary matrix $U_k$ which satisfies the following equations, using auto-correlation matrix $R_{Xk}$ of $X_k$.

$$\left. \begin{aligned} \mathbf{U}_k^H &\left( \mathbf{R}_{Xk}^{-1/2} \hat{\mathbf{H}}_k^H \hat{\mathbf{H}}_k \mathbf{R}_{Xk}^{-1/2} \right) \mathbf{U}_k \\ &= diag\left[ \lambda_1, \lambda_2, ..., \lambda_E \right] \\ \mathbf{R}_{Xk} &= E\left( \mathbf{X}_k^H \mathbf{X}_k \right) \\ \hat{\mathbf{H}}_k &= \left( \mathbf{H}_k^1, \mathbf{H}_k^2, ..., \mathbf{H}_k^E \right) \end{aligned} \right\} \qquad (69)$$

Here, a channel matrix $\hat{H}_k$ corresponding to user $u_k$ is used. Hence, the orthogonal transform matrix is given by the following equation.

$$\Omega_k = \mathbf{R}_{Xk}^{-1/2} \mathbf{U}_k \qquad (70)$$

The same detected signals can be obtained even if using either $X_k$ or $Y_k$ if there is no noise. The above equations show that $Y_k$ consists of E pieces of the eigen-vectors. Signal to noise ratio *SN* of the *e*-th component vector $y_k^e$ of $Y_k$ is given by the following equation,

$$(SN)_e = \frac{E[\|y_k^e\|^2]}{E[\|y_x^e\|^2]} = \frac{\lambda_e}{1 - \lambda_e} \tag{71}$$

where $y_k^e$ and $y_x^e$ are a signal component and *AWGN* component included in the above-described component vector, and $\lambda_e$ is an eigen value shown in Eq.(69).

Let's consider a weighting factor so as to give a large weight to the component vector which shows a high *SN* ratio. As the *k*-th component vector $y_k^e$ is a demodulated data-block, a soft-output vector $d_k$ can be obtained by solving Eq.(14) using channel matrix $H_k$. A synthesized soft-output is produced, by summing products which are made by multiplying *E* pieces of vectors $d_k$ by the respective weights stated above. This output has a high *SN* ratio due to the above-mentioned weighting. Therefore, low error rate transmission can be achieved by using a detected output vector which are obtained by making it on the hard decisions the soft-output.

An orthogonal transformation on a time basis can be also used as well as the above-mentioned spatial conversion method. Let a de-spread matrix composed of de-spread data-blocks which have been produced from *L* pieces of symbols by the following equation.

$$\Gamma_k = \left( \gamma_k^0, \gamma_k^1, \ldots, \gamma_k^{L-1} \right) \tag{72}$$

Here let $l(= 1,2, \ldots \ell^* -1)$ be the symbol number. This demodulated matrix is subjected to an orthogonal transform by the following equation,

$$W_k = \Lambda_k^H \Gamma_k \tag{73}$$

where $\Lambda_k$ is a temporal orthogonal transform matrix.

An unitary matrix such as to satisfy the following equation is chosen, so that auto-correlation matrix $U_k$ of matrix $W_k$ may be diagonalized by the method stated above.

$$\left. \begin{array}{l} U_k^H \left( R_{Xk}^{-1/2} \hat{H}_k^H \hat{H}_k R_{Xk}^{-1/2} \right) U_k \\ \\ = diag \left[ \lambda_0, \lambda_1, \ldots, \lambda_{L-1} \right] \end{array} \right\} \tag{74}$$

Based on this equation, a transform matrix is obtained as follows.

$$\left. \begin{array}{l} \Lambda_k = R_{\Gamma k}^{-1/2} U \\ R_{\Gamma k} = E\left( \Gamma_k^h \Gamma_k \right) \end{array} \right\} \tag{75}$$

The *SN* ratio of the *l*-th component vector of transformed matrix $W_k$ which have been thus produced, is given by the following equation.

$$\left(SN\right)_i = \frac{\lambda_i}{1 - \lambda_i} \qquad\qquad (76)$$

Now, let's select weighting based on this ratio. A synthesized soft-output can be obtained, by summing products which are made by multiplying soft-outputs obtained from the respective component vectors by the weights stated above. Low error rate transmission can be achieved by using outputs which are made by making it on the hard decisions the synthesized soft-output.

The invention described in claim 1 has solved a problem such that the peak transmit-power required for obtaining necessary error rate characteristics considerably increases (by $M^2$ times larger power of that of single sequence transmission) in case of the conventional repeated sequence orthogonal carrier wave modulation system, because system (P-7) uses a multiplexed spreading sequence (a sequence made by concurrently summing $M$ pieces of spreading sequences each of which is multiplied by a transmit-data for $M$ bit transmission) as each of the data-blocks.

That is to say, the transmit-power of this invention can be considerably reduced in comparison with that of system (P-7), because this invention uses data-block of a single sequence consisting of the binary $M$ chips conveying $M$ bit data without using sequence addition. In addition, the spectral efficiency of system (P-3) decreases, because it is generally necessary for the receiver to choose a length of said spreading sequence (data-block) such as to satisfy $M < L$, in order to separate $M$ multiplexed sequences on condition of a good error rate characteristic.

Since this invention uses respective data-blocks, each having a length $M$ that is the number of bits of the transmit-data as it is, the system of this invention achieves a high spectral efficiency such that spectral efficiency $\eta$ may take nearly one. Besides, there is an effect such that a system using a low transmit-power can be achieved.

And, system (P-5) which transmits a transmit-symbol made by spreading guard added data-blocks with an orthogonal sequence set, suffers an excessive guard sequence overhead, and system (P-6) which transmits a transmit-symbol made by spreading a data-block with a shift orthogonal sequence suffers that the user population decreases to a half of spreading factor. Therefore, the spectral efficiency of these conventional systems can not increase. In contrast, this invention has an effect to achieve reduction in guard sequence and increase in the user population.

On the other hand, systems (P-2) and (P-3) using a single data spreading method and pilot-data multiplexing symbol transmission system (P-4) suffer an increase in the guard sequence overhead, in case of high data transmission rate. This invention has a remarkable effect in reducing the overhead to a small value, because one guard sequence is inserted in each data-block sequence.

The invention described in claims 2 and 3 has solved such a problem that the available user population $K$ is limited to $(N-1)/2$, despite shift orthogonal sequence spreading system (P-6) using a shift orthogonal sequence with spreading factor $N$, requires $N$ times larger bandwidth than that of the data-rate. That is to say, this invention can construct a system so that the user population $K$ increases to $(N/2)$ by the technology described in claim 2, and, in addition, to $N$ by using the technology described in claim 3.

That is to say, this invention has an effect such as to double the user population, and thereby improve the spectral efficiency $\eta$ to almost one by utilizing spreading method with $ZCZ$ sequences, and a new de-correlating technique in the receiver.

The invention described in claims 4 and 5 has solved a problem such that various systems using the conventional block spreading techniques failed to provide effective means to adapt to users' multi-rate demand (of services in which multiple access of data transmission rates intermingle).

Since this invention uses a method such as to allocate both a data-block repetition rate and carrier frequency slots or a set of hierarchical spreading sequences for a multiple stage modulation technique of the $ZCZ$ sequences corresponding to a desired data rate, to each user's transmitter, the inter-rate interference can be avoided. As a consequence, it has an effect to provide the multi-rate services, without decreasing the comprehensive spectral efficiency of the system.

The invention described in claims 6 and 7, has solved the problem such that the spectral efficiency of conventional *MMSE* multi-user MIMO reception system (P-3) considerably decreases, because system (P-3) has applied a multi-input multi-output system (MIMO) to single symbol transmission systems carrying 1 bit, resulting in necessity of a long guard sequence compared to the core sequence for a high data rate transmission.

As a result of producing a block spread symbol and then transmitting it, this invention established a technique of analyzing a concatenated vector which is made by concatenating receive-antenna outputs supplied from multiple ($E$ pieces of) antennas installed in the receiver, it has achieved improvement in the spectral efficiency and reduction in the noise (decrease in the error rate or decrease in the transmit-power).

That is to say, it is effective that a system using this invention can considerably decrease power bandwidth product required for one bit transmission by the system, by increasing spectral efficiency $\eta$ to almost a value of E, while achieving low transmit-power consumption.

The invention described in claims 8, 9 and 10 has solved a problem such that in the conventional single data spreading systems (P-1) to (P-4), not only inter-cell interference could not be sufficiently removed, but also intra-cell interference increases, because the systems use a method of transmitting signals made by multiplying a transmit-symbol by a cell specific scrambling sequence to avoid inter-cell interference, and descrambling a received symbol by the scrambling sequence to randomize the interference coming from the other cells, leading to that the orthogonality between received symbol components considerably reduces. This invention has also solved an additional problem such that inter-user interference in a cell increases due to multi-path, when applying the scrambling sequence multiplication technology to conventional data-block spreading technology used in systems (P-7) to (P-9).

This invention has an effect such that the error rate characteristics remarkably improves, by considerably reducing the inter-cell interference, while maintaining user's complete separation function in a cell by the following transmit-symbol producing methods. In a system of this invention, each transmitter produces a transmit-symbol using a cell specific core-symbol period allocated to the cell to which the transmitter belongs, or a cell specific chip rate.

The invention described in claims 11 and 12 has solved a problem such that the accuracy of channel characteristics obtained by a conventional method considerably deteriorates, because a conventional system obtains channel characteristics by transmitting a transmit-symbol composed of data and pilot information correspondent real axis and imaginary axis components, as a result interference between the real and imaginary components of the received symbol generates under a condition of the multi-path transmission. And this invention solved a problem such that an effective pilot transmission method has not been developed for the conventional block spreading transmission systems.

This invention described in claims 1 to 10 provides a simple technology of acquiring channel characteristics by a method, characterized by that a transmitter produces a transmit-pilot symbol by replacing a transmit-data-block with a spreading sequence and transmits this symbol on a common pilot time slot shared by the other users, and a receiver obtains the channel characteristics by demodulating a multiplexed received pilot symbol corresponding to these pilot symbol to separate respective user components, and by analyzing each of the separated outputs. Since, in this method, the multiple users transmit the pilot sequences, while sharing an identical band and time with a large number of users. This method has an effect of producing a highly precise pilot response with flat frequency characteristic without reducing the spectral efficiency of the system.

The invention described in claims 13 and 14 solved a problem such that optimum reception technology of MIMO systems or adaptive array-antenna systems, both using multiple receive antennas for purpose of detecting a desired user component on condition of high $SN$ ratio with multiple pieces of multiplexed received symbols, has not been established. This invention provides technology which utilizes surplus signal dimensions based on the multiple antenna outputs (or symbols on multiple time positions) to improve the $SN$ ratio, resulting in reduction of the error rate, in contrast to the effect of increasing of the user population E times larger which is provided by the invention described in claims 6 and 7 using plurality $E$ of antennas.

This invention has an effect of considerably increasing the $SN$ ratio of soft outputs corresponding to the transmit-data, by applying orthogonal transformation to a demodulated matrix consisting of plurality E of demodulated outputs to produce a transformed matrix, and by summing weighted components, each is made by multiplying a high $SN$ ratio component of said transformed matrix by a large weighting.

Furthermore, it is also possible to construct a system which accommodates $E_1$ times larger user population and achieves a low error rate performance by allocating $E_1$ pieces of receive-antennas operating according to the invention described in claims 6 and 7, and allocating $E_2(= E/E_1)$ pieces of receive antennas operating to this invention. Thus, two principles can be used together.

**Claims**

1. A data-block spread spectrum communications system, wherein a transmitter of each of the user stations comprises means for producing a block spread transmit-symbol by applying user specific spectral spreading processing and carrier wave modulation to a transmit data-block which is composed of a time sequence of plural transmit-data, and transmitting said transmit-symbol, and a receiver comprises

   means for receiving multiple of said transmit-symbols which all the users have transmitted by said means as a multiplexed received symbol, and performing all the user signal separation and separation of respective data contained in said transmitted data-blocks, using a knowledge of channel characteristics between said transmitters and said receiver beforehand acquired, said user specific spectral spreading processing and carrier wave modulation, **characterized by** that a transmitter of the $k$-th user comprises,

   means for producing a block spread symbol by modulating the $k$-th orthogonal carrier wave $f_k$ by a guard added data-block repeated sequence which is made by appending a guard sequence to a data-block repeated as a transmit-symbol, and said receiver comprises,

   means for producing a demodulated output by demodulating said multiplexed received symbol by the $k$-th orthogonal

carrier wave $f_k$, applying averaging operation in an unit of the data-block to a demodulated core-symbol on the core symbol period which is made by removing a guard part of said demodulated output to produce a de-spread data-block corresponding to the data-block which the $k$-th user has transmitted, by removing the other user signal components, and detecting respective of said transmit-data by making on the hard decisions soft outputs which is obtained by separating respective of said transmit-data components, using said de-spread data-block and said channel characteristics.

2. A data-block spread spectrum communications system, wherein in said system a transmitter of each user comprises means for producing a block spread symbol by spreading a transmit data-block which is composed of a time sequence of plural transmit-data with a spreading sequence allocated to said user, and transmitting said block spread symbol using a common carrier wave as a transmit-symbol, and a receiver comprises
means for receiving multiple transmit-symbols which all the users have similarly transmitted as a multiplexed received symbol, and performing separation of all the user symbols with said spreading sequence and separation of individual transmit-data contained in said symbol, **characterized by** that a transmitter of the $k$-th user comprises,
means for producing a guard added block spread symbol by appending a guard sequence to a data block spread symbol which is made with the $k$-th spreading sequence $Z_k$ belonging to a zero-correlation-zone sequence-set as said spreading sequence, and producing a transmit-symbol by modulating said carrier wave by said guard added block spread symbol, and a receiver comprises
means for producing a demodulated output by demodulating said multiplexed received symbol by said carrier wave, producing a demodulated core-symbol by removing a guard part from said demodulated output and producing separately a de-spread data-block corresponding to a data-block the $k$-th user has transmitted by removing the other users' signal components by a method of applying said demodulated core-symbol to a matched filter so as to de-spread said demodulated core-symbol and to average a resultant output, and
means for producing a soft-output vector consisting of respective transmit-data, each is separated from the other data component, corresponding to said transmit-data-block using said de-spread data-block and said channel characteristic, and detecting respective of said transmit-data by making it on the hard decisions said soft-output vector.

3. A data-block spread spectrum communications system according to claim 2, **characterized by** that said system comprises,
means for allocating a zero correlation zone sequence $Z_k^0$ and a sequence $Z_k^1$ which is made by shifting sequence $Z_k^0$ by 1 chip cyclically to the left to users $u_k^0$ and $u_k^1$, , respectively, and a transmitter of each user comprises,
means for producing each transmit-symbol by making a convolution product of said sequence and a transmit-data-block, and a receiver comprises,
means for producing respective de-spread data-blocks by de-spreading said multiplexed demodulated symbol by respective of said sequences to make de-spread outputs, and applying averaging processing to the de-spread outputs, respectively,
means for producing a system of de-correlating equations using three elements, those are a concatenated data-block made by concatenating said data-blocks, an unknown vector made by concatenating said transmit-data-blocks and a channel matrix made by said channel characteristics between respective users and the receiver, and
means for detecting data by making on hard decisions each component of a soft output vector obtained by solving said system of de-correlating equations, producing a reproduced signal which contains received symbol components received from all the users using sequences $Z_k^0 (k = 1, 2, \ldots K)$, and applying repeatedly said de-spreading processing with sequence $Z_k^1$ to a signal which is made by removing said reproduced signal from said multiplexed received symbol, and thereby composing a system such that 2 users can simultaneously transmit transmit-symbols using one of said zero correlation zone sequences.

4. A data-block spread spectrum communications system, according to claim 1 to perform multiple data-rate transmission, **characterized by** that said transmitter of the $k$-th user comprises,
means for producing a guard added symbol by appending a guard sequence to an output which is made by repeating $N$ times a data-block of a length $M$, and a transmitter of the $k'$-th user comprises,
means for producing another guard added symbol of which transmission data-rate is different each other by appending a guard sequence to an output which is made by repeating $Nn$ times a data-block of a length $M/n$, and respective user transmitters comprise,
means for producing transmit-symbols by modulating the $k$-th and the $k'$-th orthogonal carrier waves by said guard added symbols, respectively, and said receiver comprises,
means for producing separately de-spread data-blocks corresponding to the respective user's transmit-symbols by modulating a received core-symbol which is made by removing the guard part from said multiplexed received symbol by respective of the $k$-th and the $k'$-th orthogonal carrier waves.

5. A data-block spread spectrum communications system, according to claims 2 and 3 to perform multiple data-rate transmission, **characterized by** that said transceiver system comprises,
means for preparing spreading layers with $N$ hierarchical layers such as composed of sequence sets

$$Z^n = \left( Z_1^n, Z_2^n, ..., Z_k^n, ... Z_{Kn}^n \right)$$ consisting of $K_n$ pieces of zero correlation zone sequences as the elements of the $n$-th layer, in advance, and a base station comprises,
means for allocating sequences belonging to one or multiple spreading layers corresponding to transmit-data rates to each user, and each user's transmitter comprises
means for producing a base-band multistage block spread symbol by a method of spreading a transmit-data-block by making sequentially convolution products of these sequences allocated and said data-block, and transmitting an output which is made by modulating a carrier wave by a guard added symbol made by appending a guard sequence to each of said multi-stage block spread symbols, and said receiver comprises,
means for producing said demodulated core symbol by demodulating said multiplexed received symbol by the carrier wave, and separately producing each of de-spread data-blocks such as not to contain the other transmit-symbol components de-spread by different zero correlation zone sequences, by de-spreading, in an unit of the data block, said core-symbol with said spreading sequences which each transmitter has used as said spreading layers.

6. A data-block spread spectrum communications system, according to claims 1 and 4, **characterized by** that each of the user transmitters of the $k(= 1,2,...K)$-th user group in a system, of which users are divided by $K$ user groups, each user group having plurality $Q$ of users, comprises,
means for modulating *the $k$-th orthogonal carrier wave $f_k$* by said guard added data-block repeated sequence, and said receiver equipped with multiple receive-antennas with antenna ordinal number $e(= 1,2,...E)$ comprises,
means for producing a demodulated symbol by modulating a multiplexed received symbol which has received via $e$-th antenna with the $k$-th orthogonal carrier wave $f_k$, and separately producing a multiplexed de-spread data-block corresponding to data-blocks which the $k$-th user group has transmitted, by applying the averaging operation to a demodulated core symbol made by removing the guard part from said demodulated symbol, to remove signal components of the other user groups,
means for producing a concatenated de-spread vector by concatenating E pieces of said multiplexed de-spread data-blocks, and producing a soft output vector by solving a system of linear equations with multiple unknowns, composed of an extended channel matrix which is made of $Q$ times $E$ pieces of the channel characteristics between respective users of the $k$-th user group and the receive-antennas, said concatenated de-spread vector, and an unknown vector corresponding to the transmit-data of the $Q$ users, and
means for obtaining transmit-data of the respective users belonging to said respective groups by making it on the hard decisions respective components of said soft output vector.

7. A data-block spread spectrum communications system, according to claims 2, 3 and 5, **characterized by** that said transmitter of the $k(= 1,2,...K)$-th user group in a system, of which users are divided by plural user groups, each user group having plurality $Q$ of users, comprises,
means for producing a data-block spreading sequence using the $k$-th spreading sequence $Z_k$ belonging to said zero correlation zone sequence set, and said receiver equipped with multiple receive-antennas with antenna ordinal number $e(= 1,2,...E)$ comprises,
means for producing a demodulated output by demodulating the $e$-th multiplexed received symbol with said carrier wave, separately producing a multiplexed de-spread vector corresponding to data-block s which the $k$-th user group has transmitted, by applying de-spreading operation to a demodulated core symbol made by removing the guard part from said demodulated output with said spreading sequence $Z_k$ to produce de-spread output, and applying the averaging operation to said de-spread output to remove signal components of the other user groups,
means for producing a concatenated de-spread vector by concatenating E pieces of said multiplexed de-spread vector, producing a soft output vector by solving a system of linear equations with multiple unknowns, composed of an extended channel matrix which is made of $Q$ times $E$ pieces of the channel characteristics between respective users of the $k$-th user group and the receive-antennas, said concatenated de-spread vector, and an unknown vector corresponding to the transmit-data of the $Q$ users and, obtaining transmit-data of the respective users belonging to said respective groups by making it on the hard decisions respective components of said soft output vector.

**8.** A data-block spread spectrum communications system, according to claims 1 to 7, **characterized by** that said transmitter belonging to each cell comprises,
means for producing said data-block repeated sequence or said data-block spread symbol over a cell specific transmit-core-block spreading period which is allocated to said cell beforehand, producing a transmit-symbol by modulating the carrier wave described in claims 1 to 6 by a base-band guard added symbol made by appending a guard sequence to said core symbol, and transmitting said transmit-symbol, and said receiver comprises,
means for producing a demodulated core-symbol on a received timing synchronized with said cell specific transmit-core block spreading period using said multiplexed received symbol and said carrier wave which the transmitter has used, and thereby producing a de-spread data-block with suppressed inter-cell interfering components, by applying the same processing to said demodulated core-symbol as the method described in claims 1 to 6.

**9.** A data-block spread spectrum communications system, according to claims 1 to 7, **characterized by** that said transmitter belonging to each cell comprises,
means for producing a guard added data-block repeated sequence or a guard added data-block spread symbol using a cell specific chip rate made by summing a chip rate bias which is allocated to said cell beforehand to a nominal chip rate, producing a transmit-symbol by modulating one of said carrier waves described in claims 1 to 6, and transmitting said transmit-symbol, and said receiver comprises,
means for producing a correlation output between a multiplexed demodulated symbol with continuous waveform which has been produced using said carrier wave and a chip waveform on said cell specific chip rate, producing a discrete time sequence having the amplitude of said correlation output as a demodulated core symbol, and applying said averaging processing to an output made by de-spreading said demodulated core-symbol by the method described in claims 1 to 6, to produce a de-spread data-block where an inter-cell interfering component is suppressed.

**10.** A data-block spread spectrum communications system according to claims 2, 3, 4 and 7, **characterized by** that said system allocates one or plural cell specific zero correlation zone sequence sets as spreading sequence sets to each cell in which a cross correlation value between spreading sequences chosen from two spreading sequence sets belonging to an identical one of said spreading layers allocated to adjacent two cells takes small value.

**11.** A data-block spread spectrum communications system, according to claims 1 and 2, **characterized by** that each of said transmitters comprises,
means for producing a transmit-symbol by substituting a pilot sequence for each of said transmit-data-blocks according to claims 1 and 2 as a pilot symbol, and transmitting said pilot symbol over a cell common pilot time slot, and said receiver comprises,
means for producing a demodulated pilot response by demodulating, de-spreading and applying averaging processing to a multiplexed received pilot symbol extracted by the method described in claims 1 and 2, and obtaining a channel characteristic based on a correlation output between $j (= 0,1,2,...,J\text{-}1)$ shift analyzing sequence $a_j$ of an analyzing sequence orthogonal to said pilot sequence except at 0 shift position and said demodulated pilot response.

**12.** A data-block spread spectrum communications system, according to claims claim 11, **characterized by** that said transmitter comprises,
means for preparing a pilot set consisting of multiple ($N_p$) pieces of pilot sequences of which frequency spectra complement each other, producing $N_p$ pieces of pilot symbols by such a method that each of them is constructed using a pilot sequence selected out of said pilot sequence set as a transmit-pilot symbol, and transmitting sequentially these $N_p$ pieces of transmit-pilot symbols, and an receiver comprises,
means for preparing an analyzing sequence orthogonal to each of said pilot sequences except at the 0 shift position, obtaining $N_p$ pieces of channel characteristics using respective of received pilot symbols and said corresponding analyzing sequences, and producing a precise pilot response by taking a mean value of these $N_p$ pieces of channel characteristics as a pilot characteristic.

**13.** A data-block spread spectrum communications system, according to claims 6 and 7, **characterized by** that said receiver comprises,

means for producing a de-spread matrix $X_k$ using E pieces of said de-spread data-block $\gamma_k^e (e = 1, 2, ..., E)$

addressed to the $k$-th user which has been produced with the $e$-th receive-antenna output, and producing a transformed matrix $Y_k$ by multiplying said de-spread matrix by such an orthogonal transform matrix $\Omega_k$ that autocorrelation matrix of said transformed matrix may be diagonalized,
means for selecting a weighting corresponding to the eigen value of said transformed matrix for the $e$-th transformed component $y_k^e$, obtaining a soft output vector $\widetilde{d}_k^e$ corresponding to said component $y_k^e$ by a method of solving a system of multiple linear equations, and

means for producing a detected data vector $\hat{d}_k$ corresponding to said transmit-symbol by making it on the hard decisions an output vector which is made by summing some of said soft output vectors, each is multiplied by said weighting.

**14.** A data-block spread spectrum communications system, according to claim 13, **characterized by** that said receiver comprises,

means for producing a transformed matrix $W_k$ by applying orthogonal transform to a de-spread matrix $\Gamma_k$ consisting of $L$ pieces of de-spread data-block $\gamma_k^l$ which has been produced with a symbol on the $l(=1,2,...,L)$-th time position by the method described in claims 6 and 7 with such an orthogonal transform matrix $\Lambda_k$ that an autocorrelation matrix of transformed matrix $W_k$ may be diagonalized, and selecting for a soft output vector $w_k^l$ of said transformed matrix $W_k$, and a weighting corresponding to the $l$-th eigen-value of transformed matrix. $W_k$, and

means for producing a detected data of the $k$-th user using an output vector made by summing some of soft output vectors $w_k^l$ each is multiplied by said weighting.

# FIG.1

(a)

(b)

(c)

# FIG.2

$m$   1 2 3 4 5  ......  M

$T_B$

$T_C$

$d_k$

+1

$-1$

$d_k$

(a)

$n$   0   1   2   ...   N

$\Sigma_k$   $d_k$ | $d_k$ | ... | $d_k$

$\Sigma_k^g$   $g_k$ | $d_k$ | $d_k$ | ... | $d_k$

$s_k$   $g_k$ | $d_k$ | $d_k$ | ... | $d_k$   $\times f_k$

(b)

$T_g$   $T_B$

$T_S$

$T_P$

$r^*$

$r = \sum_{k=1}^{K} r_k + x$   $r^g$ | $r^1$ | $r^2$ | ... | $r^N$

$r_k = h_k s_k$   $r_k^g$ | $r_k^1$ | $r_k^2$ | ... | $r_k^N$   $\times f_k$

$r_k^*$

$h_{k0}d_k$   $[h_{k1}d_k]D_1$

$r_k(h_{kj})$ $(j=0)$
$(j=1)$   $\times f_k$
$r_k(h_k)$ $(j=2)$

$[h_{k2}d_k]D_2$

$h_k d_k$

(c)

$\gamma_k^{*0}$

$\gamma_k^0 = [rf_k]_{f \le f_{ch}}$   $\gamma_k^g$ | $\gamma_k^1$ | $\gamma_k^2$ | ... | $\gamma_k^N$

$[AO]$

$\gamma_k = \left(\sum_n \gamma_k^n\right)/N$   $\gamma_k$

FIG. 3

(a)

(b)

$$r = \sum_{k=1}^{4} r_k^k$$

$r_1^1(h_1)$

$r_1^1(h_{10})\ r_1^1(h_{11})\ r_1^1(h_{12})$

$F(d_k)$
$(M = 8)$

-8    -7    -1    0    1    7    8    $(\times f_B)$

$F(\Sigma_k)$
$(M = 8, N = 4)$

-32    -28    -4    0 1 2 3 4    28 29 30 31 32    $(\times f_s)$

(a)

$F_3$
$F(\Sigma_3)$
$F(\Sigma_4)$
$F_4$

$F(\Sigma_1)$    $F_1$
$F(\Sigma_2)$    $F_2$

$f_1 \quad f_2 \quad f_3 \quad f_4$

$f_1 - 32 f_s$    $f_1 + 32 f_s$

$f_2 - 32 f_s$    $f_2 + 32 f_s$

(b)

FIG. 4

50

# FIG.5

# FIG.6

FIG.7

(a)

(b)

FIG. 8

FIG.9

FIG.10

# FIG.11

(a)

(b)

## FIG.12

|  | 1 | 2 | ... | N |
|---|---|---|---|---|
| $\Sigma_k$ | $d_k$ | $d_k$ | ... | $d_k$ |
| $Z_k$ | $z_{k1}$ | $z_{k2}$ | ... | $z_{kN}$ |
| $\Sigma_k^z$ | $z_{k1}d_k$ | $z_{k2}d_k$ | ... | $z_{kN}d_k$ |
| $\Sigma_k^g$ | $g_k$ $s_k^1$ | $s_k^2$ | ... | $s_k^N$ |
| $s_k$ | $g_k$ $s_k^1$ | $s_k^2$ | ... | $s_k^N$ $\times f_C$ |

$\leftarrow T_g \rightarrow \leftarrow T_B \rightarrow$  $T_S$
$\longleftarrow T_p \longrightarrow$

(a)

| $r$ | $r^g$ | $r^1$ | $r^2$ | ... | $r^N$ $\times f_C$ |
|---|---|---|---|---|---|

$r^{*0} = \sum_{k=1}^{K} r_k^{*0} + x$

| $r^{0g}$ | $r^{01}$ | $r^{02}$ | ... | $r^{0N}$ |
|---|---|---|---|---|

(b)

$r_k^{*0}$

| $r_k^{0g}$ | $r_k^{01}$ | $r_k^{02}$ | ... | $r_k^{0N}$ |
|---|---|---|---|---|

$r_k^{*0}(h_{kj})$  $(j=0)$  $(j=1)$  $(j=2)$

$H_{k0}\Sigma_k^z$

$H_{k1}\Sigma_k^z$

| $Z_k$ | $z_{k1}$ | $z_{k2}$ | ... | $z_{kN}$ |
|---|---|---|---|---|
| $Z_{k-1}$ | $z_{kN}$ | $z_{k1}$ | ... | $z_{kN-1}$ |
| $\gamma_{k/0}^0 = [rZ_k]$ | $\gamma_{k/0}^1$ | $\gamma_{k/0}^2$ | ... | $\gamma_{k/0}^N$ |

$\gamma_{k/0} = (\sum \gamma_k^{0n} Z_{kn})/N$

| $\gamma_{k/0}$ | $AO$ |
|---|---|

$\gamma_{k/-1}^0 = [rz_{k-1}]$

| $\gamma_{k/-1}^1$ | $\gamma_{k/-1}^2$ | ... | $\gamma_{k/-1}^N$ |
|---|---|---|---|

$\gamma_{k/-1} = (\sum \gamma_{k1}^{0n} z_{kn-1})/N$

| $\gamma_{k/-1}$ | $AO$ |
|---|---|

(c)

**FIG. 13**

59

**(a)**

$M_k^D$

DBF — M bits — $d_k$ — BS — $Z_k \otimes d_k$ — $\Sigma_k^z$ — GI — $\Sigma_k^g$ — COV — $\otimes q$ — $\widetilde{\Sigma}_k^g$ — $MOD_1$ — $s_k$

$\{b_k\}/u_k$

$g_k$

$Z_k$

$f_C$

**(b)**

$D_k^D$

$r$ — $MOD_2$ — LPF — $r^0$ — $C_{or}(q)$ — $r^0$ — A — $r^{*0}$ — $MOD_3$ — $\gamma_k^0$ — $A0_1$ — $\gamma_k$ — $AYZ_k$ — $\widetilde{d}_k$ — DEC — $\hat{d}_k$

$h_k\left(h_{k1}, h_{k2}, \dots h_{k,J-1}\right)$

$f_C$

$e_s$

$Z_k$

## FIG.14

(a)

(b)

(a)

(b)

**FIG. 15**

FIG.16

## FIG.17

EP 1 811 681 A1

**FIG. 18**

r ○—●——→ [ AYZ(DD) ] $\tilde{b}$ → [ DEC ] → $\hat{b}$

S
○ ○—→ [ PRM ] —P→

r ○—●——→ [ AYZ(MMSE) ] $\tilde{b}$ → [ DEC ] → $\hat{b}$

S
○ ○—→ [ PRM ] —P→

FIG. 19

$\Sigma_k$ | $d_k$ | $d_k$ | $d_k$ | $d_k$

$C_k$ | $c_{k1}$ | $c_{k2}$ | $c_{k3}$ | $c_{kN}$ | (a)

$s_k(C_k \otimes d_k)$ | $s_{k1}^0$ | $s_{k2}^0$ | $s_{k3}^0$ | $s_{kN}^0$ | $\times f_C$

$r = \sum_{k=1}^{K} r_k$ | $r_1$ | $r_2$ | $r_3$ | $r_N$

$C_k^D$ | $c_{k1}$ | $c_{k2}$ | $c_{kN-1}$

$C_k^M$ | $c_{k1}$ | $c_{k2}$ | $c_{kN-1}$ | (b)

$\gamma_k^D = C_k^D r$ | $\gamma_{k1}^D$ | $\gamma_{k2}^D$ | $\gamma_{kN-1}^D$

$\gamma_k^M = C_k^M r$ | $\gamma_{k1}^M$ | $\gamma_{k2}^M$ | $\gamma_{kN-1}^M$

FIG. 20

66

# FIG.21

**EP 1 811 681 A1**

<table>
<tr><td colspan="2" align="center">**INTERNATIONAL SEARCH REPORT**</td><td>International application No.<br>PCT/JP2005/019737</td></tr>
</table>

| A. CLASSIFICATION OF SUBJECT MATTER |
|---|
| *H04B1/707*(2006.01), *H04J11/00*(2006.01), *H04J15/00*(2006.01) |

According to International Patent Classification (IPC) or to both national classification and IPC

| B. FIELDS SEARCHED |
|---|
| Minimum documentation searched (classification system followed by classification symbols)<br>H04B1/707, H04J11/00, H04J15/00 |

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
IEEEXplore

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | JP 2002-344359 A  (Isayoshi AZEYANAGI),<br>29 November, 2002 (29.11.02),<br>Figs. 1 to 6; Par. Nos. [0095] to [0172]<br>& JP 2002-271232 A      & EP 1376917 A1<br>& CN 1459162 A          & US 2004/0131030 A1<br>& WO 2002/073853 A1 | 1<br>2,11<br>3-10,12-14 |
| Y<br>A | JP 2001-94466 A  (Isayoshi AZEYANAGI),<br>06 April, 2001 (06.04.01),<br>Claims 4 to 6; Par. Nos. [0007] to [0016]<br>& EP 1143651 A1          & CN 1337105 A<br>& WO 2001/022637 A1 | 2<br>1,3-14 |

☒  Further documents are listed in the continuation of Box C.          ☐  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>04 January, 2006 (04.01.06) | Date of mailing of the international search report<br>17 January, 2006 (17.01.06) |
|---|---|
| Name and mailing address of the ISA/<br>Japanese Patent Office | Authorized officer |
| Facsimile No. | Telephone No. |

Form PCT/ISA/210 (second sheet) (April 2005)

68

**EP 1 811 681 A1**

<table>
<tr><td colspan="2">**INTERNATIONAL SEARCH REPORT**</td><td>International application No.<br>PCT/JP2005/019737</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2002-536870 A  (FAN, Pingzhi),<br>29 October, 2002 (29.10.02),<br>Claims 3 to 7<br>& CN 1297628 A          & EP 1068682 A1<br>& WO 2000/045530 A1 | 2<br>1,3-14 |
| Y<br>A | JP 2003-23675 A  (Isahoshi AZEYANAGI),<br>24 January, 2003 (24.01.03),<br>Fig. 19<br>& WO 2003/005757 A1 | 2<br>1,3-14 |
| A | Greert Leus et al., MUI-Free Receiver for a<br>Synchronous DS-CDMA System Based on Block<br>Spreading in the Presence of Frequency-<br>Selective Fading, IEEE Transaction on signal<br>proceeding, Vol.48, No.11, 2000.11, pages<br>3175 to 3188 | 1-14 |
| P,A | JP 2005-260900 A  (Tama-TLO Kabushiki Kaisha),<br>22 September, 2005 (22.09.05),<br>Full text; all drawings<br>& WO 2005/088856 A1 | 1-14 |

Form PCT/ISA/210 (continuation of second sheet) (April 2005)

**INTERNATIONAL SEARCH REPORT**

International application No.

PCT/JP2005/019737

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:
    The technical feature of the invention disclosed in claim 1, i.e., repeated data block orthogonal carrier modulation method is disclosed, for example, in JP 2002-344359 A (especially Figs. 2-6) and makes not contribution over the prior art. Accordingly, the aforementioned technical feature cannot be a special technical feature.

    (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable,
the                           payment of a protest fee..

                          ☐ The additional search fees were accompanied by the applicant's protest but the applicable protest
                             fee was not paid within the time limit specified in the invitation.

                          ☒ No protest accompanied the payment of additional search fees.

Form PCT/ISA/210 (continuation of first sheet (2)) (April 2005)

| INTERNATIONAL SEARCH REPORT | International application No. |
|---|---|
| | PCT/JP2005/019737 |

Continuation of Box No.III of continuation of first sheet(2)

Accordingly, the inventions of claims 1, 4, 6, 8, 9, 13, 14 have "a special technical feature" relating to "repeated data block orthogonal carrier modulation method for performing multi-rate transmission"; and the inventions of claims 2, 3, 5, 7, 10, 11, 12 have "a special technical feature" relating to "zero correlation area sequence modulation type block spread method for performing user multiplexing spread". There is no technical relationship among those inventions involving one or more of the same or corresponding special technical features. Accordingly, the inventions are not s linked as to form a single general inventive concept.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAMORU SAWAHASHI ; YOSHINORI MIKI ; HIDEHIRO ANDOH ; KENICHI HIGUCHI.** Pilot Symbol-Assisted Coherent Multistage Interference Canceller Using Recursive Channel Estimation for DS-CDMA Mobile Radio. *IEICE Trans. Commun.,* September 1996, vol. E79-B (9), 1262-1270
- **MITSUHIRO TOMITA ; NORIYOSHI KUROYANAGI ; SATORU OZAWA ; NAOKI SUEHIRO.** Error rate performance improvement for a de-correlating CDMA receiver by introducing additional dummy pilot response. *PIMRC'02,* September 2002
- **HIROKI INOKURA ; MITSUHIRO TOMITA ; KOHEI OTAKE ; SATORU OZAWA ; NAOKI SUEHIRO.** A CDMA-MIMO System with Multiple-Dimension-De-correlating-Detectors. *VTC2003-Fall,* October 2003
- **MITSUHIRO TOMITA ; NORIYOSHI KUROYANAGI ; NAOKI SEUHIRO ; SHINYA MATSUFUJI.** Anti-heavy-interference performance of a lone pilot assisted CDMA system. *SCI'2000,* July 2000
- **SHENGLI ZHOU ; GEORGIOS B. GIANNAKIS ; CHRISTOPHE LE MARTET.** Chip-Interleaved Block-Spread Code Division Multiple Access. *IEEE Transaction on Communications,* February 2002, vol. 50 (2), 235-248
- **GEERT LEUS ; MARC MOONEN.** MUI-Free Receiver for a Synchronous DS-CDMA System Based on Block Spreading in the Presence of Frequency-Selective Fading. *IEEE Transaction on Signal Processing,* November 2000, vol. 48 (11
- **YUTARO MINAMI ; KEN'ICHI ASANO ; KOHEI OTAKE ; NORIYOSHI KUROYANAGI.** FIBS/CDMA-Frequency Interleaved Multiplexing Block-Spread Code Division Multiple Access Systems. *IEICE Trans.on Fundamentals,* July 2004, vol. J87-A (7), 1005-1016
- **GEERT LEUS ; MARC MOONEN.** MUI-Free Receiver for a Synchronous DS-CDMA System Based on Block Spreading in the Presence of Frequency-Selective Fading. *IEEE Transaction on Signal Processing,* 11 November 2000, vol. 48